Europäisches Patentamt

European Patent Office

Office européen des brevets

(19)

(11) **EP 1 363 793 B1**

(12) **EUROPEAN PATENT SPECIFICATION**

(45) Date of publication and mention
of the grant of the patent:
**03.08.2005 Bulletin 2005/31**

(51) Int Cl.⁷: **B60C 23/06**

(86) International application number:
**PCT/IB2002/000577**

(21) Application number: **02712191.2**

(22) Date of filing: **25.02.2002**

(87) International publication number:
**WO 2002/068226 (06.09.2002 Gazette 2002/36)**

(54) **APPARATUS FOR ESTIMATING A TYRE CONDITION AND APPARATUS FOR DETERMINING A TYRE ABNORMAL CONDITION**

GERÄT ZUR REIFENZUSTANDABSCHÄTZUNG UND GERÄT ZUR ERFASSUNG EINES ABNORMALEN REIFENZUSTANDES

APPAREIL DE MESURE DE L'ETAT D'UN PNEUMATIQUE ET APPAREIL DE DETERMINATION D'UN ETAT ANORMAL DE PNEUMATIQUE

(84) Designated Contracting States:
**DE FR GB**

(30) Priority: **26.02.2001 JP 2001050719**
**15.03.2001 JP 2001074583**

(43) Date of publication of application:
**26.11.2003 Bulletin 2003/48**

(73) Proprietor: **Toyota Jidosha Kabushiki Kaisha Toyota-shi, Aichi-ken 471-8571 (JP)**

(72) Inventors:
• **KOJIMA, Hiroyoshi, Toyota Jidosha K.K.
Toyota-shi, Aichi-ken 471-8571 (JP)**

• **INOUE, Hideo, Toyota Jidosha K.K.
Toyota-shi, Aichi-ken 471-8571 (JP)**

(74) Representative: **Winter, Brandl,&Fürniss, Hübner Röss, Kaiser, Polte Partnerschaft Patent- und Rechtsanwaltskanzlei
Bavariaring 10
80336 München (DE)**

(56) References cited:
**EP-A- 0 466 535         EP-A- 0 578 826**

## Description

## BACKGROUND OF THE INVENTION

### 1. Field of the Invention

This invention relates to an apparatus for estimating a tire condition of a vehicle tired wheel and an apparatus for determining whether or not a tire is abnormal.

### 2. Description of Related Art

Various technology for estimating a tire condition have been already known, in which the tire condition is estimated based upon a vehicle wheel speed signal representing a vehicle wheel speed representing an angular speed of a tired wheel. According to one of the conventional methods, a condition amount of the tire pressure is estimated as the tire condition based upon the vehicle wheel speed signal assuming that a fixed relationship is established among a tire pressure (an air pressure of a tire), a dynamic load tire radius, and the vehicle wheel speed. An example of the above method for estimating the tire pressure condition amount is disclosed in a Japanese Patent Laid-open Publication No. 6-286486.

According to another example of the conventional methods, the tire pressure condition amount is estimated as the tire condition based upon the vehicle wheel speed signal assuming that a fixed relationship is established among the tire pressure, a tire vibration characteristic, and a vibration characteristic of the vehicle wheel speed signal. The above method is disclosed in another Japanese Patent Laid-open Publication No. 7-089304.

As described above, the tire condition (a target parameter) and the vehicle wheel speed signal (a basic parameter) are not directly associated with each other and there is another parameter therebetween when the tire condition is estimated based upon the vehicle wheel speed, i.e. when the tire condition is indirectly detected.

Therefore, when the tire condition is indirectly detected, a performance to detect the tire condition may be affected by various vehicle conditions including a vehicle running condition or a vehicle wheel load condition, comparing with the case when the tire condition is directly detected. The vehicle condition may be easily acted as disturbance for estimating the tire condition.

Accordingly, the disclosed methods for estimating the tire condition are still susceptible of certain improvements to effectively remove the disturbance when the tire condition is required to be indirectly detected with a sufficiently high accuracy.

Also, a technology for detecting a tire pressure representing an air pressure in a tire and for determining that the tire is abnormal when the detected tire pressure is below a reference tire value has been known.

The reference tire value is set at a constant value irrespective of a value of a load applied to the tire from outside. Generally, the reference tire value is set to a tire pressure-independence value.

However, the tire load is a tire parameter which increases as a wheel speed and a load applied to the tire from the surface during the vehicle is running become larger.

Therefor, in the case which the tire abnormality determination is implemented by comparing the detected tire pressure with the reference tire value which has an independence on the tire load, there is a possiblity that the tire is determined to be abnormal under a small tire load zone which has a space relative to a limit of the tire load. On the other hand, there is a possibility that the tire is determined to be normal under a large tire load zone which does not have much space relative to the limit of the tire load. Therefore, it is necessary to improve a reliability of a result of the tire abnormality determination.

Document EP 466 535 A1 shows a method for detecting a low pressure of a motor vehicle's tire. At first, wheel speeds of the four wheels of a four wheel vehicle are sensed by a wheel speed sensor 6 and analogue inputs as lateral acceleration etc. are picked off at 8. At 11, current physical values are calculated, and, after a validation of the pick off data at 12, average values of the pick off data and the raw criteria

$$CR1 = k_1 \left[ a_1 \left( \Omega_1{}^2 - \Omega_2{}^2 \right) - \left( \Omega_3{}^2 - \Omega_4{}^2 \right) \right] / \Omega_{ref}{}^2$$

$$CR2 = k2 \left[ \cos \alpha_1 \left( \Omega_1 + \Omega_2 \right) - \cos \alpha_2 \left( \Omega_3 + \Omega_4 \right) \right] / \Omega_{ref}$$

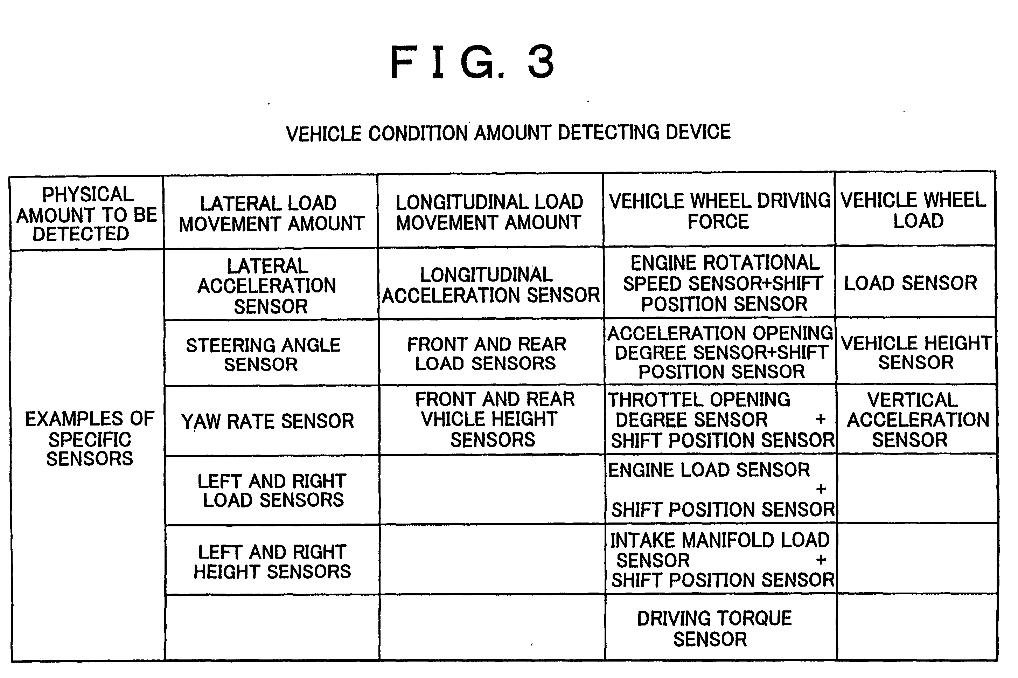

are calculated, wherein $\Omega_1$ to $\Omega_4$ are current angular speeds of the wheels, $k_1$, $k_2$ are gain factors and $\cos \alpha_1$, $\cos \alpha_2$ are coeffcients relating to the yaw angle of each axis of the vehicle and $\Omega_{ref}$ is a reference value. For taking into account vehicle dynamics as lateral acceleration etc., the raw criterias are broadened by certain correction addends. The new addends/coefficients representing vehicle dynamics are set (block 14 in Fig. 3) as experimentally adjusted or adaptively estimated (block 17 in Fig. 3). In the aftermath, algorithms for estimating the pressure in the tires are carried out.

The further document EP 578 826 A1 shows a device for sensing tire pressure indirectly by frequency analysis of the vibration frequency pattern of the unsprung mass of the vehicle.

## SUMMARY OF THE INVENTION

Based upon the above described knowledge, it is an object of the present invention to improve a detecting accuracy to detect a tire condition indirectly based upon a vehicle wheel speed signal representing an angular speed of a tired wheel. According to the present invention, following aspects are obtained. Further, it is an object to improve a reliability of a result of the tire abnormality determination,

A tire condition estimating device according to a first aspect of the present invention is provided with a wheel speed sensor for detecting a vehicle wheel speed representing the angular speed of the tired wheel and outputting the vehicle wheel speed signal corresponding to the vehicle wheel speed, a vehicle condition amount detecting device for detecting a vehicle condition amount and outputting a vehicle condition amount signal corresponding to the vehicle condition amount, and an estimating unit for estimating the tire condition based upon the vehicle wheel speed signal outputted from the wheel speed sensor, wherein the estimating unit implements a normalizing process for normalizing an estimation of the tire condition by using the vehicle wheel speed signal based upon the vehicle condition amount signal outputted from the vehicle condition amount detecting device.

According to the first aspect, the estimation of the tire condition by using the vehicle wheel speed signal is normalized based upon the vehicle condition amount signal outputted from the vehicle condition amount detecting device. Therefore, the tire condition can be easily estimated with a sufficiently high accuracy regardless of the vehicle condition. Hereinafter, "tire condition" can represent, for example a condition amount of a tire pressure (a tire air pressure) or a tire deformation condition (ex. a quick deformation generated with the tire or a deformation which is physically difficult or not possible to be rebuilt). Further, "vehicle condition amount" can represent, for example at least one of a lateral movement amount of a vehicle load, a longitudinal movement amount thereof, a vehicle wheel load acting on each tired wheel as a vertical load, a driving torque of each tired wheel, or a driving force thereof.

According to the first aspect, the estimating unit can estimate the condition amount of the tire pressure (the tire air pressure) as the tire condition. According to this aspect, the estimation of the tire pressure condition amount by using the vehicle wheel speed signal is normalized based upon the vehicle condition amount signal outputted from the vehicle condition amount detecting device. Therefore, the tire pressure condition amount can be easily estimated with a sufficiently high accuracy regardless of the vehicle condition. Hereinafter, "tire pressure condition amount" can represent an absolute pressure level of the tire pressure or a relative pressure level thereof. According to the former comprehension, the absolute pressure level of the tire pressure can be represented by sequent values or plural discrete values. On the other hand, according to the latter comprehension, the relative pressure level of the tire pressure can be represented by a difference of the tire pressure from a predetermined reference value, by a characteristic regarding whether of not the tire pressure is higher than the reference value, or by a characteristic regarding whether or not the tire pressure deviates from the reference value or an allowable range.

According to the first aspect, the estimating unit can estimate the tire pressure condition amount based upon the vehicle wheel speed signal following at least a relationship between the tire pressure and the vehicle wheel speed regarding the same tired wheel. When the tire pressure is varied, a dynamic load tire radius and the vehicle wheel speed is varied. Therefore, according to the device of the present aspect, the tire pressure condition amount can be estimated based upon the vehicle wheel speed signal following at least the relationship between the tire pressure and the vehicle wheel speed regarding the same tired wheel.

Further, according to the first aspect, plural tired wheels are provided for the vehicle and plural wheel speed sensors are provided for the plural tired wheels respectively. The estimating unit can include a tire pressure condition amount estimating means for estimating the tire pressure condition amount for each tired wheel based upon mutual relationships among plural vehicle wheel speed signals respectively outputted from the wheel speed sensors substantially at the same time. When the tire pressure of any one of the plural tired wheels is varied, a tire pressure difference between another tired wheel is generated regarding the dynamic load tire radius and the vehicle wheel speed. Therefore, according to the device of the present embodiment, the tire pressure condition amount of each tired wheel can be estimated based upon the mutual relationships among the plural vehicle wheel speed signals respectively outputted from the wheel speed sensors provided for the respective tired wheels substantially at the same time. According to the device, the tire pressure condition amount can be estimated by using the only wheel speed sensor as a main sensor. Therefore, a hardware structure for the estimation can be easily simplified.

Further, according to the first aspect, the estimating unit includes a tire pressure condition amount estimating means for estimating the tire pressure condition amount of the tired wheel based upon a relationship between a value detected by the vehicle condition amount detecting device and a value estimated based upon the vehicle wheel speed signal outputted from the wheel speed sensor substantially at the same time regarding the same type vehicle condition amount. The vehicle condition and the tired wheel condition relatively depends on each other so that the vehicle condition at the time can be estimated by proving the tired wheel condition. Therefore, according to the device of the present invention, the tire pressure condition amount of the tired wheel can be estimated based upon the relationship between the value detected by the vehicle condition amount detecting device and the value estimated based upon the vehicle wheel speed signal outputted from the wheel speed sensor substantially at the same time regarding the same type vehicle condition amount.

Further, the tire pressure condition amount estimating means can include a tire pressure abnormality determining means for determining that the tire pressure of the tired wheel is abnormal when the detected value and the estimated value regarding the same type vehicle condition amount do not correspond to each other.

Further, the plural tired wheels include right and left tired wheels respectively accommodated at vehicle right and left sides, the vehicle condition amount detecting device includes a lateral load movement amount sensor for detecting the lateral movement amount of the vehicle load, and the tire pressure condition amount estimating means can include a tire pressure abnormality determining means for estimating the lateral movement amount of the vehicle load based upon the two vehicle wheel speed signals outputted from the wheel speed sensors substantially at the same time regarding the right and left tired wheels and for determining that the tire pressure of any one of the right and left tired wheels is abnormal when the estimated value is different from a detected value by the lateral load movement amount sensor by a set value or more than that.

According to the above-described aspect, for example, a difference between the dynamic load tire radiuses of the right and left tired wheels depends on the lateral movement amount of the vehicle load. The lateral movement amount of the vehicle load is estimated based upon the two vehicle wheel speed signals regarding the right and left tired wheels and the estimated value is compared with the detected value by the lateral load movement amount sensor.

Further, according to the present aspect, the plural tired wheels include front and rear tired wheels respectively accommodated at vehicle front and rear sides, the vehicle condition amount detecting device includes a longitudinal load movement amount sensor for detecting a longitudinal movement amount of the vehicle load, and the tire pressure condition amount estimating means includes a tire pressure abnormality determining means for estimating the longitudinal movement amount of the vehicle load based upon the two vehicle wheel speed signals outputted from the wheel speed sensors substantially at the same time regarding the front and rear tired wheels and for determining that the tire pressure of any one of the front and rear tired wheels is abnormal when the estimated value is different from a detected value by the longitudinal load movement amount sensor by a set value or more than that.

According to the above-described aspect, for example, a difference between the dynamic load tire radiuses of the front and rear tired wheels depends on the longitudinal movement amount of the vehicle load. The longitudinal movement amount of the vehicle load is estimated based upon the two vehicle wheel speed signals regarding the front and rear tired wheels and the estimated value is compared with the detected value by the longitudinal load movement amount sensor.

The vehicle condition amount detecting device includes a vehicle driving force relating sensor for detecting a vehicle driving force or a physical amount related thereto, and the tire pressure condition amount estimating means can include a tire pressure abnormality determining means for estimating the vehicle driving force based upon the vehicle wheel speed signal outputted from the wheel speed sensor and a vehicle speed representing a vehicle running speed and for determining that the tire pressure of the tired wheel is abnormal when the estimated value is different from a detected value by the vehicle driving force relating sensor by a set value or more than that.

Assuming that the tire pressure is normal, the dynamic load tire radius can be assumed. Further, assuming that a slip value of the tired wheel relative to a road surface is a standard value, a vehicle wheel driving force in a state where the tire pressure is normal can be estimated based upon the vehicle wheel speed and the vehicle speed. Further, the vehicle driving force can be estimated based upon the estimated value. When the estimated vehicle driving force is different from an actual vehicle driving force, the tire pressure can be determined to be abnormal.

Based upon the above-described knowledge, according to the device of the embodiment, the vehicle driving force can be estimated based upon the vehicle wheel speed signal and the vehicle speed. When the estimated value is different from the detected value by the vehicle driving force relating sensor by a set value or more than that, the tire pressure can be determined to be abnormal.

Further, the estimating unit can include a tire pressure condition amount estimating means for estimating the tire pressure condition amount of the tired wheel based upon the vehicle wheel load and the vehicle wheel speed signal following at least a relationship among the tire pressure, the vehicle wheel load acting on the tired wheel as the vertical load, and the vehicle wheel speed. A relationship can be built among the tire pressure, the vehicle wheel load acting on the tired wheel as the vertical load, the dynamic load dire radius, and the vehicle wheel speed regarding the same tired wheel. For example, when the vehicle wheel load is the same, the dynamic load tire radius and the vehicle wheel speed is varied corresponding to the change of the tire pressure. Further, when the tire pressure is the same, the dynamic load tire radius and the vehicle wheel speed are varied corresponding to the change of the vehicle wheel load. Therefore, according to the device of the present embodiment, the tire pressure condition amount of the tired wheel can be estimated based upon the vehicle wheel load and the vehicle wheel speed signal following at least the relationship among the tire pressure, the vehicle wheel load and the vehicle wheel speed regarding the same tired wheel.

Further, the vehicle condition amount detecting device includes a vehicle wheel load relating sensor for detecting the vehicle wheel load acting on the tired wheel as the vertical load or a physical amount related thereto as the vehicle condition amount, and the estimating unit can include a tire pressure condition amount estimating means for estimating the tire pressure condition amount of the tired wheel based upon a relationship between a vehicle wheel load relating signal outputted from the vehicle wheel load relating sensor and the vehicle wheel speed signal outputted from the vehicle wheel speed sensor substantially at the same time regarding the same tired wheel. The relationship between the vehicle wheel load relating signal outputted from the vehicle wheel load relating sensor and the vehicle wheel speed signal outputted from the vehicle wheel speed sensor is varied based upon the tire pressure. Therefore, according to the device of the embodiment, the tire pressure condition amount of the tired wheel can be estimated based upon the relationship between the vehicle wheel load relating signal and the vehicle wheel speed signal regarding the same tired wheel.

According to the present aspect, "the physical amount related to the vehicle wheel load" can be for example, a sprung load acting from a vehicle sprung portion on the axis which can be converted to the vehicle wheel load. The sprung load can be detected directly by a sensor, can be detected indirectly based upon a vertical force of a suspension for suspending the vehicle wheel axis at a vehicle body or a vertical stroke thereof, or can be detected indirectly based upon a vehicle height representing a height of the vehicle body adjacent to the tired wheel from the road surface. Therefore, the physical amount related to the vehicle wheel load can include the vertical force and the vertical stroke of the suspension and the vehicle height.

Further, according to the present aspect, the tire pressure condition amount estimating means can include a tire pressure abnormality determining means for determining that the tire pressure of the tired wheel is abnormal when the relationship between the vehicle wheel load relating signal and the vehicle wheel speed signal for the same tired wheel does not correspond to a relationship in a state where the tire pressure of the tired wheel is assumed to be normal.

Further, according to the present aspect, the vehicle is driven by transmitting a rotational force of a driving power source as a driving force to the tired wheel via a driving force transmitting device with variable speed. The vehicle condition amount detecting device further can include a vehicle speed sensor for detecting the vehicle speed representing the vehicle running speed. The vehicle driving force relating sensor can include a rotational speed sensor for detecting a rotational number of the driving power source and a gear ratio sensor for detecting a gear ratio of the driving force transmitting device. The tire pressure condition amount estimating means can include a tire pressure abnormality determining means for calculating the vehicle wheel speed to be detected by the wheel speed sensor as a reference vehicle wheel speed in a state where the tire pressure is normal based upon the vehicle speed detected by the wheel speed sensor, the driving power source rotational number detected by the rotational speed sensor, the gear ratio detected by the gear ratio sensor, and a set slip value predetermined as the slip value of the tired wheel relative to the road surface and for determining that the tire pressure is abnormal in a state where an actual vehicle wheel speed detected by the wheel speed sensor is different from the calculated reference vehicle wheel speed by a set value or more than that.

When the vehicle is driven by transmitting the rotational force of the driving power source as the driving force to the tired wheel via the driving force transmitting device with variable speed, the vehicle wheel speed to be detected by the wheel speed sensor is determined as far as the vehicle speed, the driving power source rotational number, the gear ratio, the slip value of the tired wheel relative to the road surface are determined. When the actual vehicle wheel speed detected by the wheel speed sensor does not correspond to the vehicle wheel speed to be detected by the wheel speed sensor, the tire pressure may be abnormal.

Therefore, according to the present aspect, the vehicle wheel speed to be detected by the wheel speed sensor in the state where the tire pressure is normal is calculated as the reference vehicle wheel speed based upon the vehicle speed, the driving power rotational number, the gear ratio, the set slip value. When the actual vehicle wheel speed detected by the wheel speed sensor is different from the calculated reference vehicle wheel speed by the set value or more than that, the tire pressure is determined to be abnormal.

According to the present aspect, "the driving force transmitting device" can be structured to include a transmission and a differential gear unit. When a speed change can be performed only by the transmission, "the gear ratio" according to the present aspect represents a speed change ratio (a gear ratio) of the transmission. On the other hand, when "the driving force transmitting device" is structured to include the transmission and the differential gear unit and when the speed change can be performed not only by the transmission but also by the differential gear unit, "the gear ratio" according to the present aspect represents the speed change ratio (the gear ratio) of the transmission and a speed change ratio (a gear ratio) of the differential gear unit.

According to the present aspect, the estimating unit can estimate the tire pressure condition amount of the tired wheel based upon the vehicle wheel speed signal following at least a relationship between the tire pressure and a vibration characteristic of the vehicle wheel speed regarding the same tired wheel. When the tire is moved on the road surface, at least an elastic element exists with the tire so that vibrations is generated with the tire. Characteristics of the tire elastic element are varied due to the tire pressure. When the tire is vibrated, the vehicle wheel speed is vibrated. The tire vibration is reflected on the vehicle wheel speed signal as a vibration thereof. As described above, a relationship is built between the tire pressure and the vehicle wheel speed. Therefore, according to the device of the embodiment, the tire pressure condition amount of the tired wheel can be estimated based upon the vehicle wheel speed signal following at least the relationship between the tire pressure and the vibration characteristic of the vehicle wheel speed regarding the same tired wheel.

Further, according to the present aspect, the plural tired wheels are provided for the vehicle and the plural wheel speed sensors are provided for the tired wheels respectively, and the estimating unit can include a tire pressure condition amount estimating means for estimating the tire pressure condition amount of each tired wheel regardless of another tired wheel based upon each vehicle wheel speed signal outputted from each wheel speed sensor. According to the above described aspect, the tire pressure condition amount of each tired wheel can be estimated regardless of another tired wheel. Therefore, the tire pressure change for each tired wheel can be detected even when the tire pressure regarding the plural tired wheels are changed in the same manner at one time.

Further, according to the present aspect, the tire pressure condition amount estimating means includes a disturbance observer arranged according to a tire model of each tired wheel, wherein a rim side portion and a belt side portion are connected to each other at least by a torsion spring so as to be relatively rotated, arranged according to a dynamic system denoting a rotational operation of each tired wheel based upon the tire model, identifying an amount of change of a spring constant of the torsion spring due to the change in the tire pressure of each tired wheel as a disturbance acting on each tired wheel in the dynamic system, and estimating the disturbance as one of variables which reflect a state of the dynamic system by using the vehicle wheel speed signal outputted from each wheel speed sensor as a signal representing a vehicle wheel speed of the rim side portion of each tired wheel for estimating the tire pressure of each tired wheel.

According to the present aspect, the estimating unit implements the normalizing process under a reflection accuracy decreasing condition in which the tire pressure of the tired wheel may not be accurately reflected on the vehicle wheel speed signal. According to the above described aspect, the tire pressure condition amount can be estimated in a normal manner, i.e. with a sufficiently high accuracy by implementing the standardizing process even under the reflection accuracy decreasing condition in which the tire pressure of the tired wheel may not be accurately reflected on the vehicle wheel speed signal. Hereinafter, the reflection accuracy decreasing condition can include a condition in which an actual dynamic load tire radius may not be accurately reflected on the vehicle wheel speed signal. According to the above described aspect, the tire pressure condition amount can be estimated by using the vehicle wheel speed signal in a normal manner, i.e. with a sufficiently high accuracy even under the reflection accuracy decreasing condition in which the actual dynamic load tire radius of the tired wheel may not be accurately reflected on the vehicle wheel speed signal. Hereinafter, "the actual dynamic load tire radius" represents not an apparent dynamic load tire radius, i.e. a dynamic load tire radius (a value of the vehicle speed subtracted by the vehicle wheel speed) affected by a vehicle wheel load change due to the vehicle load movement but a dynamic load tire radius which is not affected thereby.

Further, the reflection accuracy decreasing condition can include an actual vehicle wheel load deviating condition in which an actual value of the vehicle wheel load acting on the tired wheel as the vertical load deviates from a normal value thereof by a set amount or more than that. The estimating unit can include a normalizing process means for implementing the normalizing process under the actual vehicle wheel load deviating condition. The actual dynamic load tire radius deviates from the apparent dynamic load tire radius under the actual vehicle tire load deviating condition in which the actual value of the vehicle wheel load deviates from the normal value thereof by the set amount or more than that. Therefore, when the tire pressure condition amount is estimated by using the relationship between the tire pressure and the dynamic load tire radius, it is difficult to estimate the tire pressure condition amount with a sufficiently high accuracy under the actual vehicle wheel load deviating condition. Therefore, according to the device of the present aspect, the tire pressure condition amount can be estimated by using the vehicle wheel speed signal in a normal manner, i.e. with a sufficiently high accuracy, by implementing the normalizing process even under the actual vehicle wheel load deviating condition.

Further, the vehicle condition amount detecting device can include a lateral acceleration relating sensor for detecting a lateral acceleration of the vehicle or a physical amount related thereto as the vehicle condition amount. The normalizing process means can include an actual vehicle wheel load deviating condition determining means for determining the actual vehicle wheel load deviating condition based upon a vehicle condition amount signal outputted from the lateral acceleration relating sensor. The actual vehicle wheel load deviating condition can be generated, for example by a lateral movement of the vehicle load which depends on, for example the vehicle lateral acceleration. Therefore, according to the device of the present aspect, the actual vehicle wheel load deviating condition can be determined based upon the vehicle lateral acceleration or the physical amount related thereto. Hereinafter, "the physical amount related to the lateral acceleration" can include, for example a steering angle of a steering wheel by a driver, a vehicle yaw rate and the like.

Further, the vehicle condition amount detecting device can include a longitudinal acceleration relating sensor for detecting a longitudinal acceleration of the vehicle or a physical amount related thereto, and the normalizing process means can include an actual vehicle wheel load deviating condition determining means for determining the actual vehicle wheel load deviating condition based upon a vehicle condition amount signal outputted from the longitudinal acceleration relating sensor. The actual vehicle wheel load deviating condition can be generated, for example by a longitudinal movement of the vehicle load which depends on, for example the vehicle longitudinal acceleration. Therefore, according to the device of the embodiment, the actual vehicle wheel load deviating condition can be determined based upon the vehicle longitudinal acceleration or the physical amount related thereto. Hereinafter, "the physical amount related to the longitudinal acceleration" can include, for example the vehicle driving force, the output force of the vehicle driving power source, an operating amount of an acceleration operating member (ex. an accelerator pedal) by the driver, the driving force of the tired wheel, or the driving torque thereof.

Further, according to the present aspect, the reflection accuracy decreasing condition can include a large slip value condition in which the slip value of the tired wheel relative to the road surface is equal to or above a set value. The estimating unit can include a normalizing process means for implementing the normalizing process under the large slip value condition. In a case that the tire pressure condition amount is estimated assuming the apparent dynamic load tire radius, a relationship between a peripheral speed of the tired wheel and the vehicle wheel does not correspond to a predetermined relationship thereof when the slip value of the tired wheel relative to the road surface deviates from a normal range. In this case, the apparent dynamic load tire radius may not be accurately reflected on the vehicle wheel speed, i.e. the vehicle wheel speed signal. Therefore, according to the device of the embodiment, the normalizing process is implemented to estimate the tire pressure condition amount based upon the vehicle wheel speed signal under the large slip value condition in which the slip value of the tired wheel relative to the road surface is equal to or above the set value. Hereinafter, "the slip value" can represent, for example a slip ratio or a slip amount.

Further, the vehicle condition amount detecting device can include the longitudinal acceleration relating sensor for detecting the longitudinal acceleration of the vehicle or the physical amount related thereto. The normalizing process means can include a large slip value condition determining means for determining the large slip value condition amount based upon the vehicle condition signal outputted from the longitudinal acceleration relating sensor. A large vehicle longitudinal acceleration represents that the tired wheel driving force, i.e. longitudinal force acting between the tired wheel and the road surface is large. On the other hand, a large tired wheel driving force generally represents that a coefficient of friction between the tired wheel and the road surface is large. The coefficient of friction is increased in response to an increase of the slip value of the tired wheel relative to the road surface when the coefficient of friction is in a linear zone thereof. Therefore, the tired wheel slip value can be assumed based upon the vehicle longitudinal acceleration. Therefore, according to the device of the present aspect, the large slip value condition can be determined based upon the vehicle longitudinal acceleration or the physical amount related thereto.

According to the present aspect, the vehicle condition amount detecting device can include a driving force relating sensor for detecting the driving force of the tired wheel or a physical amount relating thereto as the vehicle condition amount. The normalizing process means can include a large slip value condition determining means for determining the large slip value condition based upon a vehicle condition amount signal outputted from the driving force relating sensor. According to the above described aspect, the large slip value condition is determined based upon the tired wheel driving force or the physical amount related thereto.

Further, according to the present aspect, the vehicle condition detecting device can include a vehicle speed relating sensor for detecting the vehicle speed representing the vehicle running speed or a physical amount relating thereto as the vehicle condition amount. The normalizing process means can include a large slip value condition determining means for determining the large slip value condition based upon a vehicle condition amount signal outputted from the vehicle speed relating sensor and the vehicle wheel speed signal outputted from the wheel speed sensor substantially at the same time.

For example, the slip value of the tired wheel can be detected based upon the vehicle speed and the vehicle wheel speed when the dynamic load tire radius is assumed as a standard value. Therefore, according to the device of the embodiment, the large slip value condition is determined based upon the vehicle condition amount signal outputted from the vehicle speed relating sensor and the vehicle wheel speed signal outputted from the wheel speed sensor substantially at the same time.

Further, according to the present aspect, the estimating unit can include an invalidating means for implementing the normalizing process by substantially invalidating the vehicle wheel speed signal outputted from the wheel speed sensor for estimating the tire pressure condition amount under the reflection accuracy decreasing condition. According to the above described aspect, the vehicle wheel speed signal is substantially invalidated for estimating the tire pressure condition amount under the reflection accuracy decreasing condition. Therefore, a decreasing of an estimating accuracy for estimating the tire pressure condition amount can be easily prevented by using the vehicle wheel speed signal on which the tire pressure may not be accurately reflected.

Further, according to the present aspect, the estimating unit can include a correcting means for implementing the normalizing process by correcting at least any one of the vehicle wheel speed signal outputted from the wheel speed sensor and a calculated value based upon the vehicle wheel speed signal based upon the vehicle condition amount signal outputted from the vehicle condition amount detecting device for normalizing an estimation of the tire pressure condition amount under the reflection accuracy decreasing condition.

According to the above described aspect, at least any one of the vehicle wheel speed signal and the calculated value based thereon is corrected for normalizing the estimation of the tire pressure condition amount based upon the vehicle condition amount signal under the reflection accuracy decreasing condition. Therefore, according to the above described aspect, the estimation of the tire pressure condition amount by using the vehicle wheel speed signal is normalized even under the reflection accuracy decreasing condition so that the tire pressure condition amount can be obtained with a sufficiently high accuracy.

Further, according to the present aspect, the correcting means can include a means for correcting at least any one of the vehicle wheel speed signal outputted from the wheel speed sensor and the calculated value based upon the vehicle wheel speed signal based upon at least any one of the vehicle speed representing the vehicle running speed or a physical amount related thereto, the vehicle wheel load acting on the tired wheel as the vertical load or a physical amount related thereto, and the slip value of the tired wheel relative to the road surface or a physical amount related thereto. A peripheral speed of the tired wheel, the vehicle wheel load, and the slip value of the tired wheel relative to the road surface represent factors regarding that the apparent dynamic load tire radius of the tire (the dynamic load tire radius easily calculated) deviates from the actual dynamic load tire radius thereof (the dynamic load tire radius not easily calculated). The peripheral speed of the tired wheel can be substituted by the vehicle speed or the vehicle wheel speed.

Therefore, according to the device of the embodiment, at least any one of the vehicle wheel speed signal outputted from the wheel speed sensor and the calculated value based upon the vehicle wheel speed signal based upon at least any one of the vehicle speed or the physical amount related thereto, the vehicle wheel load or the physical amount related thereto, and the slip value of the tired wheel of the physical amount related thereto. Accordingly, the tire pressure condition amount can be estimated with a sufficiently high accuracy regardless of the vehicle condition. Hereinafter, "the physical amount related to the vehicle speed" can include, for example the peripheral speed of the tired wheel. The peripheral speed of the tired wheel can be obtained by multiplying the vehicle wheel speed based upon the vehicle wheel speed signal and a standard dynamic load tire radius. The physical amount related to "the slip value" can include, for example the tired wheel driving force, the tired wheel driving torque, the tired wheel braking force, or the tired wheel braking torque.

According to the present aspect, the vehicle condition amount detecting device detects at least any one of the vehicle speed representing the vehicle running speed or the physical amount related thereto, the vehicle wheel load acting on the tired wheel as the vertical load or the physical amount related thereto, and the slip value of the tired wheel relative to the road surface or the physical amount related thereto as the vehicle condition amount. The correcting means can include a means for correcting at least any one of the vehicle wheel speed signal outputted from the wheel speed sensor and the calculated value based upon the vehicle wheel speed signal based upon at least any one of the vehicle condition amounts detected by the vehicle condition amount detecting device.

Further, according to the present aspect, the estimating unit can include

(a) a correcting means for implementing the normalizing process by correcting at least any one of the vehicle wheel speed signal outputted from the wheel speed sensor and the calculated value based upon the vehicle wheel speed signal based upon the vehicle wheel load acting on the tired wheel as the vertical load during every vehicle running time ; and

(b) an initializing means for implementing the normalizing process by initializing a condition of the correction performed during the same cycle of a vehicle running based upon the vehicle wheel load at a reference time during every vehicle running time.

The dynamic load tire radius is varied corresponding to the change of the vehicle wheel load so that the relationship between the tire pressure and the vehicle wheel speed is varied corresponding to the vehicle wheel load. Therefore, the normalizing process is implemented by correcting at least any one of the vehicle wheel speed signal outputted from the wheel speed sensor and the calculated value based upon the vehicle wheel speed signal based upon the vehicle wheel load during every vehicle running time when the tire pressure condition amount is estimated focusing on the relationship between the tire pressure and the dynamic load tire radius. It is not indispensable to specify an absolute value of the vehicle wheel load during every vehicle running time. There is a case which requires only a difference from the vehicle wheel load at a reference time, i.e. a relative value of the vehicle wheel load. For example, this case is the time when the tire pressure at the reference time has been known regardless of the tire condition amount estimating device or the time when the tire pressure at the reference time can be assumed with a high accuracy. For example, the tire pressure can be assumed to be normal, i.e. to be at the standard pressure value at start of every vehicle running time.

Therefore, the normalizing process can be implemented by initializing the condition of the correction performed at the vehicle running time based upon the vehicle wheel load at the reference time during the same vehicle running time when any one of the vehicle wheel speed signal outputted from the wheel speed sensor and the calculated value based upon the vehicle wheel speed signal is corrected.

Therefore, according to the device of the embodiment, the normalizing process can be implemented by correcting any one of the vehicle wheel speed signal outputted from the wheel speed sensor and the calculated value based upon the vehicle wheel speed signal based upon the vehicle wheel load during every vehicle running time. Further, the normalizing process can be implemented by by initializing the condition of the correction performed at the same vehicle running time based upon the vehicle wheel load in accordance with a start of every vehicle running time.

According to the present aspect, the vehicle condition amount detecting device can include the vehicle wheel load relating sensor for detecting the vehicle wheel load or a physical amount related thereto. The initializing means can include a setting means for setting an actual vehicle wheel load at start of every vehicle running time as a reference vehicle wheel load based upon the vehicle condition amount signal outputted from the vehicle wheel load relating sensor.

The correcting means can include a means for correcting at least any one of the vehicle wheel speed signal outputted from the wheel speed sensor or the calculated value based upon the vehicle wheel speed signal based upon the vehicle condition amount signal outputted from the vehicle wheel load relating sensor and based upon based upon a deviation of an actual vehicle wheel load sequentially obtained during the same vehicle running time from the set reference vehicle wheel load.

The tire condition estimating device according to a second aspect is provided with a tire abnormality relating amount sensor for detecting a tire abnormality relating amount being available to determine whether or not the tire is abnormal and a tire abnormality determining unit for determining whether or not the tire is abnormal by comparing a reference value with a detected value of the tire abnormality relating amount or an comparison value representing a calculated value based upon the detected value of the tire abnormality relating amount, wherein the tire abnormality determining unit implements the comparison based upon a tire load. The tire abnormality determining unit implements the above comparison based upon the tire load.

According to the above-described aspect, the tire abnormality determination can be implemented considering the change of the tire load. In this case, the tire abnormality determination can be implemented by restraining a tendency that the tire is determined to be abnormal under a small tire load zone which has a space relative to a limit of the tire load. On the other hand, the tire abnormality determination can be implemented by restraining a tendency that the tire is determined to be normal under a large tire load zone which does not have much space relative to the limit of the tire load. Therefore, according to the device, a reliability of a result of the tire abnormality determination can be easily improved. Hereinafter, "the tire abnormality" can include, for example a condition that the tire pressure (the tire air pressure)is abnormally low or high or a condition that the quick deformation is generated with the tire. Hereinafter, "the quick deformation" can include the deformation which is physically difficult or not possible to be rebuilt or an irreversible deformation. Hereinafter, the tire load can be represented by at least any one of the vehicle speed representing the vehicle running speed, the rotational speed of the tired wheel, and the tire vertical load. Hereinafter, "the tired wheel rotational speed" can represent the angular speed of the tired wheel or the peripheral speed of the tired wheel.

Further, according to the second aspect, the tire abnormality relating amount sensor can include a sensor for directly detecting the tire pressure (the tire air pressure)

Further, according to the second aspect, the tire abnormality relating amount sensor can include a wheel speed sensor for detecting the vehicle wheel speed representing the angular speed of the tired wheel as the tire abnormality relating amount. The estimating unit can include

(a) an estimating means for estimating the tire pressure (the tire air pressure) as the comparison value based upon the vehicle wheel speed detected by the wheel speed sensor; and
(b) a tire abnormality determining means for determining whether or not the tire is abnormal by comparing the estimated tire pressure with the reference value.

Further, according to the second aspect, the vehicle is provided with plural tired wheels. The tire abnormality relating amount sensor includes plural wheel speed sensors for detecting the vehicle wheel speed representing the angular speed of the tired wheel regarding the plural tired wheels, respectively. The tire abnormality determining unit can include a tire abnormality determining means for determining whether or not the tire is abnormal regarding at least any one of the tired wheels based upon relative relationships among plural signals outputted from the wheel speed sensors regarding the plural tired wheels, respectively.

Further, according to the second aspect, the reference value can be predetermined to be increased sequentially or step by step corresponding to the increase of the tire load.

According to the second aspect, the tire abnormality determining unit can be arranged for modifying the detected value or the comparison value corresponding to the tire load so as to compare the modified detected value or comparison value with the reference value which is not varied in response to the change of the tire load. Further, the tire abnormality determining unit can be arranged for comparing a deviation of the detected value or the comparison value from the reference value with a reference deviation varied in response to the change of the tire load. The deviation of the detected value or the comparison value is a comparison result of the detected value or the comparison value with the reference value which is not varied in response to the change of the tire load.

On the other hand, according to the device of the second aspect, the tire abnormality determining unit compares the detected value or the comparison value with the reference value increased in response to the increase of the tire load. Therefore, the tire load is reflected on the reference value.

The device according to the second aspect can be more easily simplified for performing a method that the tire load is reflected on reference value comparing with the other method that the tire load is reflected on the detected value or the comparison value or the other method that the tire load is reflected on the deviation of the detected value or the comparison value from the reference value.

Further, according to the second aspect, the reference value is defined as a combination of a tire load responsive reference value predetermined to increase in response to the increase of the tire load and a tire load non-responsive reference value predetermined not to vary in response to the change of the tire load. Further, the reference value is arranged to select the tire load responsive reference value under a first partial zone and is arranged to select the tire load non-responsive reference value under the second partial zone out of an entire zone in which the tire load can be varied.

As described above, according to the device of the second aspect, the tire abnormality determination can be theoretically implemented by restraining the tendency that the tire is determined to be abnormal under the small tire load zone which has a space relative to a limit of the tire load. On the other hand, the tire abnormality determination can be implemented by restraining the tendency that the tire is determined to be normal under the large tire load zone which does not have much space relative to the limit of the tire load. However, employing the tire load responsive reference value responsive to the tire load under the entire zone in which the tire load can be varied does not always meet a designing policy of all tire abnormality determining devices. For example, there is a tire abnormality determining device of which designing policy is to detecting the tier abnormality at an early stage under a specified partial zone of the tire load.

According to the second aspect, the reference value is defined as the combination of the tire load responsive reference value and the tire load non-responsive reference value. Therefore, the reference value can be defined by selecting an appropriate one out of either the tire load responsive reference value or the tire load non-responsive reference value under each condition of the tire load. Accordingly, the device according to the second aspect satisfies a demand to improve the reliability of the result of the tire abnormality determination. Further, the setting of the reference value can be easily optimized.

Further, according to the second aspect, a relationship between the tire load responsive reference value and the tire load non-responsive reference value can be defined to set the tire load responsive reference value selected as the reference value at a higher pressure level than the tire load non-responsive reference value not selected as the reference value under the first partial zone and to.set the tire load non-responsive reference value selected as the reference value at a higher pressure level than the tire load responsive reference value not selected as the reference value under the second partial zone.

According to the above described aspect, the reference value is defined by selecting a larger pressure value out of either the tire load responsive reference value or the tire load non-responsive reference value, i.e. by selecting a reference value which can generate the result of the tire abnormality determination more easily. Therefore, according to the above described aspect, the tier abnormality determination can be easily implemented from a point of view to detect the tire abnormality at an early stage comparing with a case that the reference value is defined by only selecting the tire load responsive reference value under the entire zone of the tire load.

Further, the first partial zone can be predetermined at a side in which the tire load is increased relative to the second partial zone. According to the device, the tier abnormality determination can be implemented considering the tire load under a zone with a large tire load. Therefore, the device can easily improve the reliability under the zone with the large tire load in which high reliability is demanded regarding the result of the tire abnormality determination.

Further, according to the second aspect, the tire abnormality relating amount sensor can include a wheel speed sensor for detecting the vehicle wheel speed representing the angular speed of the tired wheel as the tire abnormality relating amount. The tire abnormality determining unit can include a means for calculating the tire pressure (the tire air pressure) as the comparison value based upon the vehicle wheel speed. The tire load responsive reference value can be a tire load responsive reference tire pressure which is predetermined to be varied in response to the change of the tire load during the vehicle being running. The tire load non-responsive reference value can be a tire load non-responsive reference tire pressure which is which is predetermined to be fixed regardless of the change of the tire load during the vehicle being running.

According to a third aspect, a comparison value at a present time under a vehicle environment in which it is difficult to calculate the comparison value to be compared with the reference value to determine whether or not the tire is abnormal can be calculated referring to a past and normal comparison value, i. e. referring to the comparison value obtained under the other vehicle environment in which the comparison value can be calculated with a high accuracy.

Therefore, according to the above described aspect, the reliability of the result of the tire abnormality determination can be easily improved by utilizing the past normal comparison value effectively under the vehicle environment in which it is difficult to calculate the comparison value with a high accuracy.

Further, according to the third aspect, the tire abnormality determining unit can include a means for obtaining the comparison value under the second vehicle environment by implementing an averaging process for averaging plural comparison values calculated under the preceding first vehicle environment. According to the above described aspect, the comparison value under the second vehicle environment can be obtained by decreasing time variation of the plural comparison values calculated under the first vehicle environment. Therefore, an obtaining accuracy is easily improved.

Further, according to the third aspect, the abnormality determining unit can include an obtaining means for obtaining the comparison value under the second vehicle environment referring to a tendency of a temporal response of the plural comparison values calculated under the first vehicle environment. According to the above described aspect, the comparison value under the second vehicle environment can be obtained considering the tendency of the temporal response of the change of the comparison value calculated under the first vehicle environment.

Further, according to the third aspect, the obtaining means can include a means for generating a function expression for defining a straight line to approximate a time series of the plural comparison values calculated under the first vehicle environment and including a time as a variable so as to obtain the comparison value under the second vehicle environment on the extension of the straight line by substituting an actual time for the generated function expression.

Further, according to the third aspect, the vehicle can be provided with plural tired wheels, the tire abnormality relating amount sensor can include plural wheel speed sensors for detecting the vehicle wheel speed representing the angular speed of the tired wheel as the tire abnormality relating amount regarding the plural tired wheels, respectively. The tire abnormality determining unit can include a determining means for determining whether or not at least any one of the plural tired wheels is abnormal based upon the relative relationships among the plural signals outputted from the wheel speed sensors regarding the plural tired wheels, respectively.

The tire condition estimating device of a fourth aspect of the present invention can include a tire abnormality relating amount sensor for detecting a tire abnormality relating amount representing a physical amount being available for determining whether or not the tire is abnormal with a high accuracy under the first vehicle environment and with a low accuracy under the second vehicle environment. The tire condition estimating device further can include a tire abnormality determining unit for referring to a detected value of the tire abnormality relating amount by the tire abnormality relating amount sensor under the first vehicle environment, for calculating a tire abnormality relating amount at the present time under the second vehicle environment based upon at least one of the tire abnormality relating amounts detected by the tire abnormality relating amount sensor under the first vehicle environment so as to determine whether or not the tire is abnormal by comparing the tire abnormality relating amount obtained as described above with a reference value.

According to the above described aspect, the tire abnormality relating amount at the present time can be calculated under a vehicle environment in which it is difficult to detect the tire abnormality relating amount with a high accuracy, referring to a past normal detected value, i.e. referring to a detected value obtained under a vehicle environment in which the tire abnormality relating amount can be detected with a high accuracy. Therefore, the reliability of the result of the tire abnormality determination can be easily improved by unitizing the past normal detected value effectively under the vehicle environment in which it is difficult to detect the tire abnormality relating amount with a high accuracy.

Further, according to the fourth aspect, the second vehicle environment can be predetermined at a side in which the tire load is increased relative to the first vehicle environment. The tire abnormality determining unit can include a determining means for determining that the tire load is larger than normal when the tire load surpasses the reference value under the second vehicle environment.

According to an embodiment associated with the fourth aspect, it is difficult to determine whether or not the tire is abnormal under the second vehicle environment to have a higher reliability than the reliability under the first vehicle environment.

The reliability regarding the result of the tire abnormality determination under a zone in which the tire load is large is demanded to be higher than the reliability under a zone in which the tire load is small. Therefore, the tire abnormality determination is demanded not to depend on the tire abnormality relating amount and the comparison value based upon the tire abnormality relating amount when the second vehicle environment is predetermined to be at the side in which the tire load is increased relative to the first vehicle environment.

Therefore, according to the device of the embodiment, the tire load is determined to be larger than normal when the tire load surpasses the reference value under the second vehicle environment. Therefore, the driver can be warned to drive more carefully than usual because the tire load is larger than normal.

Further, according to the fourth aspect, the tire load can be expressed by at least any one of the vehicle speed representing the vehicle running speed, the rotational speed of the tired wheel, and the tire vertical load.

Further, according to the fourth aspect, the tire abnormality determining unit can include a comparing means for comparing the comparison value representing the detected value of the tire abnormality relating amount by the tire abnormality relating amount sensor or the calculated value based thereon with the reference value based upon the tire load. According to the above described aspect, the same effect can be obtained as the device according to the second aspect. The fourth aspect can be performed by being combined with a characteristic method described according to any one of the first, second and third aspects.

**BRIEF DESCRIPTION OF THE DRAWING FIGURES**

The above mentioned and other objects, features, advantages, technical and industrial significance of this invention will be better understood by reading the following detailed description of the preferred embodiments of the invention, when considered in connection with the accompanying drawings, in which :

Fig. 1 is a block view illustrating a hardware structure of a tire condition estimating apparatus according to a first embodiment of the present invention,
Fig. 2 is a block view conceptually illustrating a hardware structure of a computer 22 of an estimating unit 20 illustrated in Fig. 1,
Fig. 3 is a graph showing variations of a vehicle condition amount detecting device 40 illustrated in Fig. 1,
Fig. 4 is a flow chart conceptually illustrating a tire pressure abnormality determining program performed by the computer 22 of the estimating unit 20 illustrated in Fig. 1,
Fig. 5 is a graph illustrating a relationship among an apparent dynamic load tire radius R, a tire pressure P, and a vehicle wheel load, in which the relationship is referred by a tire condition estimating apparatus according to a second embodiment to estimate a tire pressure condition amount,
Fig. 6 is a flow chart conceptually illustrating a process especially related to a tire pressure abnormality determination of a tire pressure abnormality determining program as a tire pressure abnormality determining routine, in which the tire pressure abnormality determining program is performed by a computer 22 of an estimating unit 20 regarding the tire condition estimating apparatus according to the second embodiment,
Fig. 7 is a flow chart conceptually illustrating a tire pressure estimating program,
Fig. 8 is a flow chart conceptually illustrating a tire abnormality determining program according to a third embodiment,
Fig. 9 is a graph illustrating a relationship between a tire load responsive reference tire pressure and a tire load non-responsive reference tire pressure according to the third embodiment,
Fig. 10 is a graph illustrating an example of a relationship between a variable reference tire pressure PVAL and a fixed reference tire pressure PFIX regarding the tire abnormality determining program in Fig. 8,
Fig. 11 is a graph illustrating another example of the relationship between the variable reference tire pressure PVAL and the fixed reference tire pressure PFIX regarding the tire abnormality determining program in Fig. 8,
Fig. 12 is a graph illustrating another example of the relationship between the variable reference tire pressure PVAL and the fixed reference tire pressure PFIX regarding the tire abnormality determining program in Fig. 8, and
Fig. 13 is a graph illustrating anther example of the relationship between the variable reference tire pressure PVAL and the fixed reference tire pressure PFIX regarding the tire abnormality determining program in Fig. 8.

**DETAILED DESCRIPTION OF THE PREFERRED EMBODIMENTS**

Hereinafter, embodiments according to the present invention will be described in more detail with reference to drawings.

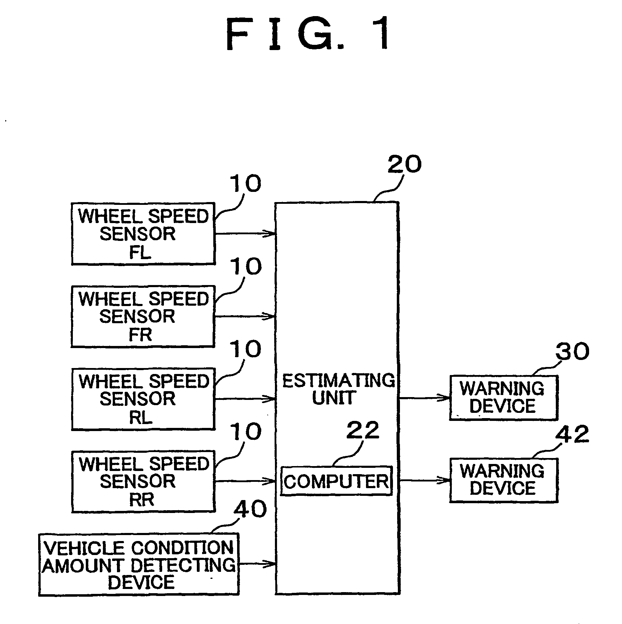

Fig. 1 shows a block view illustrating a hardware structure of a tire condition estimating apparatus (hereinafter, referred to as an estimating apparatus) according to a first embodiment of the present invention. The estimating apparatus is accommodated in a vehicle and is employed for estimating a condition amount of a tire pressure as a tire condition.

The vehicle is provided with an engine (an internal combustion engine) as a driving power source. The engine is connected to a driving force transmitting device at an outlet side of the engine. The driving force transmitting device is a device for transmitting an output force (a rotating force) of the engine as a driving force to driving wheels of a plurality of tired wheels. The driving force transmitting device according to the first embodiment of the present invention is provided with a torque converter, an automatic transmission (hereinafter, referred to as an A/T), and a differential gear unit (now shown) which all are disposed in this order between the engine and the driving wheels and are operatively associated with one another.

Four vehicle tired wheels are totally provided for the vehicle at the front, rear, left, and right sides thereof, respectively. As well known, each tire wheel is formed of a metal made wheel and a rubber made tire fixed to the wheel. An inner space of the tire is filled with air under pressure. As shown in Fig. 1, the estimating apparatus is provided with a wheel speed sensor 10 for each tired wheel. "FL" designates a front - left tired wheel, "FR" designates a front - right tired wheel, "RL" designates a rear - left tired wheel, and "RR" designates a rear - right tired wheel. As well known, each wheel speed sensor 10 detects an angular speed of each tired wheel and outputs a vehicle wheel speed signal corresponding to the detected angular speed. In more detail, the wheel speed sensor 10 is a magnetic pick-up and generates an electric voltage varied periodically corresponding to passing of a number of teeth formed along an outer periphery of a rotor rotatable with the tired wheel.

As shown in Fig. 1, the four wheel speed sensors 10 are electrically connected to an estimating unit 20. The estimating unit 20 is provided with a computer 22 as a main body and is employed for determining whether or not the tire pressure of any one of all the tired wheels is abnormal. The estimating unit 20 is further connected to a warning device 30. The warning device 30 is operated for warning a driver visually or auditorily that the tire pressure of at least any one of the tired wheels is abnormally low. The warning device 30 can be designed for specifying any one of the four tired wheels and for warning the driver that the tire pressure of the specified tired wheel is abnormally low.

As shown in Fig. 1. the estimating unit 20 is further connected to a vehicle condition amount detecting device 40. The vehicle condition amount detecting device 40 is structured to meet the principle of the estimating unit 20 to implement a tire pressure abnormality determination, a data selection, and a data correction. Further, the vehicle condition amount detecting device 40 includes at least a sensor for detecting a physical amount needed as a reference to perform various data processes based upon the principle.

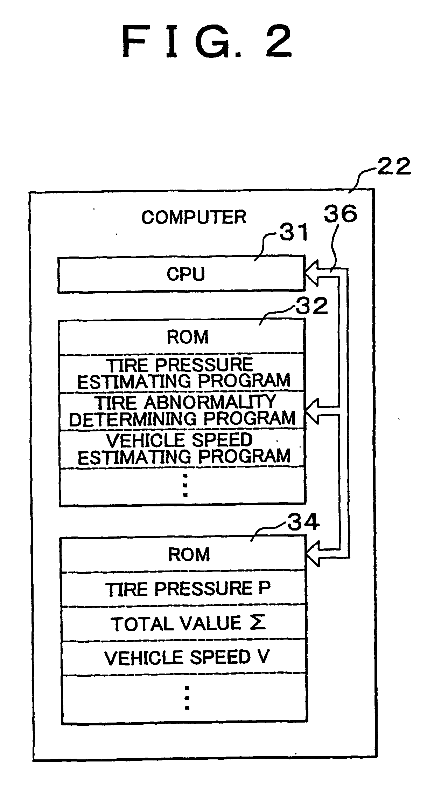

Fig. 2 is a block view conceptually illustrating a hardware structure of the computer 22. As well known, the computer 22 is provided with a CPU 31 (an example of a processor), a ROM 32 (an example of a memory), and a RAM 34 (an example of a memory) which all are connected via a bus 36. As shown in Fig. 2, the ROM 32 in advance memorizes various programs including a tire pressure estimating program, a tire abnormality determining program, and a vehicle speed estimating program. As well known, the vehicle speed estimating program is employed for estimating a vehicle speed V based upon a plurality of tired wheel speeds detected by the plurality of wheel speed sensors 10. The estimated vehicle speed V is stored in the RAM 34. The tire pressure estimating program and the tire abnormality determining program are described later.

The estimating unit 20 is further connected to an alerting device 42. The alerting device 42 is operated not with reference to a tire pressure P but with reference to the vehicle speed V in a state where the vehicle is running within a high-speed running zone at the vehicle speed V being equal to or above a threshold vehicle speed V1. In this case, an actual load applied to the tire is anticipated to be considerably large. Therefore, the alerting device 42 can alert the driver that a current vehicle driving condition should be preferably prevented from being continued for a long period of time.

Fig. 3 is a graph showing examples of a structure of the vehicle condition amount detecting device 40.

In a case that a lateral load movement amount needs to be detected

The vehicle condition amount detecting device 40 is structured to include a sensor or sensors individually or the combination thereof in the case that the lateral movement amount of the vehicle load needs to be detected.

(a) a lateral acceleration sensor for detecting a vehicle lateral acceleration,
(b) a steering angle sensor for detecting a steering angle of a vehicle steering wheel by the driver, i.e. for detecting a rotation operating angle of a steering wheel by the driver,
(c) a yaw rate sensor for detecting a vehicle yaw rate,
(d) a right load sensor provided for a right tired wheel and a left load sensor provided for a left tired wheel for detecting a vehicle wheel load, i.e. a vertical load of each right and left tired wheel, or loads related thereto such as a load applied to each right and left tired wheel from a vehicle sprung portion, and
(e) a right vehicle height sensor provided for a right tired wheel and a left vehicle height sensor provided for a left tire wheel for detecting a vehicle height between a road surface and a vehicle body portion adjacent to each right and left tired wheel.

(2) In a case that a longitudinal load movement amount needs to be detected

The vehicle condition amount detecting device 40 is structured to include a sensor or sensors individually or the combination thereof in the case that the longitudinal movement amount of the vehicle load needs to be detected.

(a) a longitudinal acceleration sensor for detecting a vehicle longitudinal acceleration,
(b) a front load sensor provided for a front tired wheel and a rear load sensor provided for a rear tired wheel for detecting a vehicle wheel load, i.e. a vertical load of each front and rear tired wheel, or loads related thereto such as a load applied to each front and rear tired wheel from the vehicle sprung portion, and
(c) a front vehicle height sensor provided for a front tired wheel and a rear vehicle height sensor provided for a rear tired wheel for detecting a vehicle height between the road surface and a vehicle body portion adjacent to each front and rear tired wheel.

(3) In a case that a vehicle wheel driving force or a vehicle wheel driving torque needs to be detected

The vehicle condition amount detecting device 40 is structured to include a sensor or sensors individually or the combination thereof in the case that the vehicle wheel driving force or the vehicle wheel driving torque needs to be detected.

(a) an engine rotational speed sensor for detecting a rotational number of the engine and a shift position sensor for detecting a shift position at the A/T,
(b) an acceleration opening degree sensor for detecting an acceleration opening degree, i.e. for detecting an operating amount of an accelerator pedal by the driver and the shift position sensor,
(c) a throttle opening degree sensor for detecting a throttle opening degree, i.e. for detecting an opening degree of a throttle valve in the engine and the shift position sensor,
(d) an engine load sensor for detecting an engine load and the shift position sensor,
(e) an intake manifold load sensor for detecting a load of an intake manifold and the shift position sensor, and
(f) a driving toque sensor for detecting a driving torque applied to an axis of each tired wheel.

(4) In a case that the vehicle wheel load needs to be detected

The vehicle condition amount detecting device 40 is structured to include a sensor or sensors individually or the combination thereof in the case that the vehicle wheel load needs to be detected.

(a) a vehicle wheel load sensor provided for each tired wheel for detecting the vehicle wheel load, i.e. a vertical load of each tired wheel, or loads related thereto such as a load applied to each tired wheel from the vehicle sprung portion,
(b) a vehicle wheel vehicle height sensor provided for each tired wheel for detecting a vehicle height between the road surface and a vehicle body portion adjacent to each tired wheel, and
(c) a vehicle wheel vertical acceleration sensor provided for each tired wheel for detecting a vertical acceleration of each tired wheel.

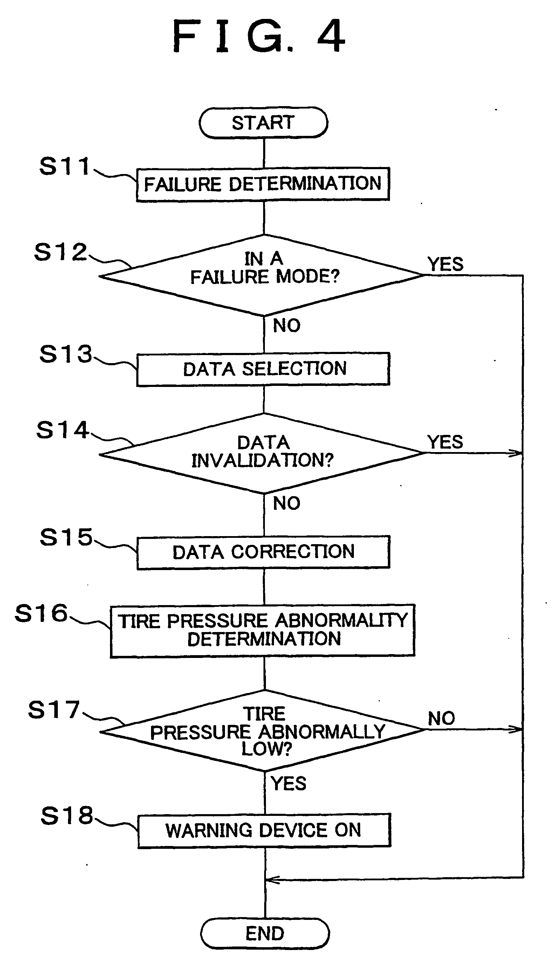

Fig. 4 shows a flow chart conceptually illustrating a tire pressure abnormality determining program which has been already memorized by the ROM 32 of the computer 22. This program is repeatedly performed by the CPU31 of the computer 22.

Hereinafter, the process of the program is described below. First of all, the determination principle of the estimating unit 20 to determine a tire pressure abnormality is conceptually described. Secondary, a failure determination, the data selection, and the data correction performed by the program are described conceptually. After that, the program is described in detail with reference to Fig. 4.

(1) Determination principle

The estimating unit 20 estimates the tire pressure condition of the tired wheel based upon a relationship between a value detected by the vehicle condition amount detecting device 40 and a value estimated based upon the vehicle wheel speed signal outputted from the wheel speed sensor 10 substantially at the same time regarding the same type vehicle condition amount. The determination principle is embodied by employing any one of the following various types or a plurality thereof.

(a) a type with reference to the lateral load movement amount

The estimating unit 20 estimates the lateral movement amount of the vehicle load based upon the two vehicle wheel speed signals outputted from the wheel speed sensors 10 substantially at the same time regarding the right and left tired wheels. When the estimated value is different from the value detected by the vehicle condition amount detecting device 40 by a set value or more than that, the estimating unit 20 determines that the tire pressure of any one of the right and left tired wheels is abnormal.

(b) a type with reference to the longitudinal load movement amount

The estimating unit 20 estimates the longitudinal movement amount of the vehicle load based upon the two vehicle wheel speed signals outputted from the wheel speed sensors 10 substantially at the same time regarding the front and rear tired wheels. When the estimated value is different from the value detected by the vehicle condition amount detecting device 40 by a set value or more than that, the estimating unit 20 determines that the tire pressure of any one of the front and rear tired wheels is abnormal.

(c) a type with reference to the vehicle driving force

The estimating unit 20 estimates the vehicle driving force based upon a resultant value (ex. an average value) of the four vehicle wheel speeds detected by the wheel speed sensors 10 regarding the four tired wheels and the vehicle speed. When the estimated value is different from an actual vehicle driving force detected by the vehicle condition amount detecting device 40 by a set value or more than that, the estimating unit 20 determines that the tire pressure of any one of the four tired wheels is abnormal.

(2) Failure determination

The failure determination is a process to determine whether or not the vehicle condition amount detecting device 40 is in a failure mode. For example, the vehicle condition amount detecting device 40 is determined to be in the failure mode when a signal outputted from the vehicle condition amount detecting device 40 is not varied for a long period of time.

(3) Data selection

The estimating unit 20 invalidates data generated based upon the vehicle wheel speed signal outputted from the wheel speed sensor 10 to determine the tire pressure abnormality under a reflection accuracy decreasing condition in which the tire pressure of the tired wheel may not be accurately reflected on the vehicle wheel speed signal. That is, the data is not employed for determining the tire pressure abnormality. According to the first embodiment, "the reflection accuracy decreasing condition" is defined to represent a condition in which a dynamic load tire radius is not accurately reflected on the vehicle wheel speed signal. The estimating unit 20 determines "the reflection accuracy decreasing condition" in following manners.

(a) In a case that the reflection accuracy decreasing condition includes an actual vehicle wheel load deviating condition

The estimating unit 20 determines to be under the actual vehicle wheel load deviating condition in which an actual value of the vehicle wheel load deviates from a normal value by a set amount or more than that when at least either a condition that the lateral load movement amount of the vehicle is equal to or above a set value or the other condition that the longitudinal load movement amount of the vehicle is equal to or above a set value is satisfied. The lateral load movement amount and the longitudinal load movement amount are detected by the vehicle condition amount detecting device 40.

(b) In a case that the reflection accuracy decreasing condition includes a large slip value condition

The estimating unit 20 determines to be under the large slip value condition in which a slip value of the tired wheel relative to the road surface is equal to or above a set value in a state where the vehicle longitudinal acceleration is equal to or above a set value. The longitudinal acceleration is detected by the vehicle condition amount detecting device 40.

The estimating unit 20 can determine to be under the large slip value condition in a state where the vehicle wheel driving force is equal to or above a set value. The vehicle wheel driving force is detected by the vehicle condition amount detecting device 40.

The estimating unit 20 calculates the slip value of the tired wheel in a state where the tire pressure is normal based upon the vehicle speed and the vehicle wheel speed signal substantially at the same time when the dynamic load tire radius in the state where the tire pressure is normal is assumed to be equal to a standard value. The estimating unit 20 then can determine to be under the large slip value condition in a state where the calculated slip value is equal to or above the set value. The vehicle speed is detected by the vehicle condition amount detecting device 40. The vehicle condition amount detecting device 40 may detect the vehicle speed by estimating the vehicle speed based upon the signals outputted from the plurality of wheel speed sensors 10 provided for the plurality of the tired wheels or may detect the vehicle speed directly by an exclusive vehicle speed sensor.

(4) Date correction

The estimating unit 20 corrects under the reflection accuracy decreasing condition at least either the data generated based upon the vehicle wheel speed signal outputted from the wheel speed sensor 10 or a value calculated based upon the data, based upon at least any one of the vehicle speed, the vehicle wheel load, the slip value of the tired wheel, and a shift shock at the A/T. The vehicle speed, the vehicle wheel load, the slip value of the tired wheel, and the shift shock at the A/T are respectively detected by the vehicle condition amount detecting device 40.

In detail, when the data correction is performed based upon the vehicle speed, the estimating unit 20 performs the data correction following a predetermined rule to prevent the corrected data or the corrected calculated value from being affected by a tread-lift increased in response to the vehicle speed.

When the data correction is performed based upon the vehicle wheel load, the estimating unit 20 performs the data correction following a predetermined rule to prevent the corrected data or the corrected calculated value from being affected by a decreasing phenomenon of the apparent dynamic load tire radius in response to the vehicle wheel load.

When the data correction is performed based upon the slip value of the tired wheel, the estimating unit 20 performs the data correction following a predetermined rule to prevent the corrected data or the corrected calculated value from being affected by the decreasing phenomenon of the apparent dynamic load tire radius in response to the slip value.

Additionally, according to the first embodiment, the reflection accuracy decreasing condition is divided into two conditions. One condition is a condition I which an accuracy to reflect the tire pressure on the vehicle wheel speed signal is considerably low and the other condition is a condition in which the accuracy to reflect the tire pressure on the vehicle wheel speed signal is slightly low. According to the first embodiment of the present invention, the data selection is implemented when the accuracy to reflect the tire pressure on the vehicle wheel speed signal is considerably low. On the other hand, the data correction is implemented without performing the data selection when the accuracy to reflect the tire pressure on the vehicle wheel speed signal is slightly low.

Next, the tire pressure abnormality determining program is described with reference to the flow chart illustrated in Fig. 4.

Every time when the program illustrated in Fig. 4 is performed, the failure determination of the vehicle condition amount detecting device 40 is performed at step S11. At step S12, the CPU 31 determines whether or not the vehicle condition amount detecting device 40 was determined to be in the failure mode. When the vehicle condition amount detecting device 40 was determined to be in the failure mode, an affirmative decision (YES) is obtained at the step S12 and one cycle of this program is immediately terminated. On the other hand, when the vehicle condition amount detecting device 40 was not determined to be in the failure mode, a negative decision (NO) is obtained at the step S12 and the program is followed by step S13.

At the step S13, the data selection of the data generated based upon the vehicle wheel speed signals outputted from the four wheel speed sensors 10 is performed. Hereinafter, the data generated based upon the vehicle wheel speed signals is referred to as vehicle wheel speed data. In more detail, the CPU 31 determines whether or not the accuracy to reflect the tire pressure on the vehicle wheel speed data is considerably low due to the actual vehicle wheel load deviation or the large slip value. When the accuracy is considerably low, the vehicle wheel speed data at this time is determined to be invalid.

At step S14, the CPU 31 determines whether or not the vehicle wheel speed data at this time was determined to be invalid. When the vehicle wheel speed data at this time was determined to be invalid, an affirmative decision (YES) is obtained at the step S14 and one cycle of this program is immediately terminated. Therefore, an incorrect tire pressure abnormality determination is not performed based upon the vehicle wheel speed data with a considerably big error. Further, the tire pressure abnormality determination is normalized. On the other hand, when the vehicle wheel speed data at this time was not determined to be invalid, a negative decision (NO) is obtained at the step S14 and the program is followed by step S15.

At the step S15, the data correction of the vehicle wheel speed data at this time is performed. As aforementioned, the data correction is performed based upon the detected value by the vehicle condition amount detecting device 40. Therefore, an incorrect tire pressure abnormality determination is not performed to determine whether or not the tire pressure is abnormal based upon the vehicle wheel speed data with a slightly big error. Further, the tire pressure abnormality determination is normalized.

The program then proceeds to step S16 to implement the tire pressure abnormality determination following the above described determination principle by using the corrected vehicle wheel speed data at this time. At step S17, the CPU 31 determines whether or not the tire pressure of at least any one of the four tired wheels was determined to be abnormally low. When the tire pressure of at least any one of the four vehicle wheels was not determined to be abnormally low, a negative decision (NO) is obtained at the step S17 and one cycle of this program is immediately terminated. On the other hand, when the tire pressure of at least any one of the four vehicle wheels was determined to be abnormally low, an affirmative decision (YES) is obtained at the step S17 and the program proceeds to step S18. At the step S18, the warming device 30 is turned ON to warn the driver that the tire pressure of at least any one of the vehicle wheels is abnormally low. As described above, one cycle of this program is then terminated.

Additionally, according to the first embodiment, the tire pressure condition amount is estimated regarding the vehicle (ex. an automobile) provided with four tired wheels. However, the tire pressure condition amount can be estimated regarding other vehicles provided with more than four tired wheels, such as a large-sized vehicle.

Further, according to the first embodiment, the warning device 30 is operated to warn the driver that the tire pressure is abnormally low. Additionally, the warning device 30 can be operated to warn the driver that the vehicle condition amount detecting device 40 is in the failure mode. Further, the warning device 30 can be operated to warn the driver that the tire pressure abnormality determination can not be implemented because an affirmative decision (YES) was obtained at the step S14 in Fig. 4 at this time and the vehicle wheel speed data is invalid.

Next, a second embodiment of the present invention is described. According to the second embodiment, there are common elements as the elements according to the first embodiment. Therefore, only different elements are described in detail and detail descriptions of the same elements are omitted by denoting with identical titles or reference numerals.

The estimating unit 20 according to the second embodiment is designed to perform the tire pressure abnormality determination following a different determination principle from the determination principle according to the first embodiment. The determination principle according to the second embodiment is described below.

The estimating unit 20 according to the second embodiment estimates the tire pressure condition amount based upon the vehicle wheel load and the vehicle wheel speed following a relationship between the tire pressure, the vehicle wheel load, and the vehicle wheel speed regarding the same vehicle wheel. In detail, the estimating unit 20 prepares plural values of the vehicle wheel load and memorizes plural relationships between an apparent dynamic load tire radius R and a tire pressure P regarding the respective prepared vehicle wheel load. The estimating unit 20 selects a relationship corresponding to a current vehicle wheel load out of the plural relationships. Following the selected relationship, the tire pressure P is estimated by determining the tire pressure P corresponding to a current apparent dynamic load tire radius. Further, the estimating unit 20 determines that the tire pressure P is abnormally low when the estimated tire pressure P is lower than a reference pressure value. Therefore, the estimating unit 20 determines that the tire pressure is abnormal when the actual relationship between the vehicle wheel load and the vehicle wheel speed regarding the same vehicle wheel does not match a relationship therebetween in a state where the tire pressure of the tired wheel is assumed to be normal.

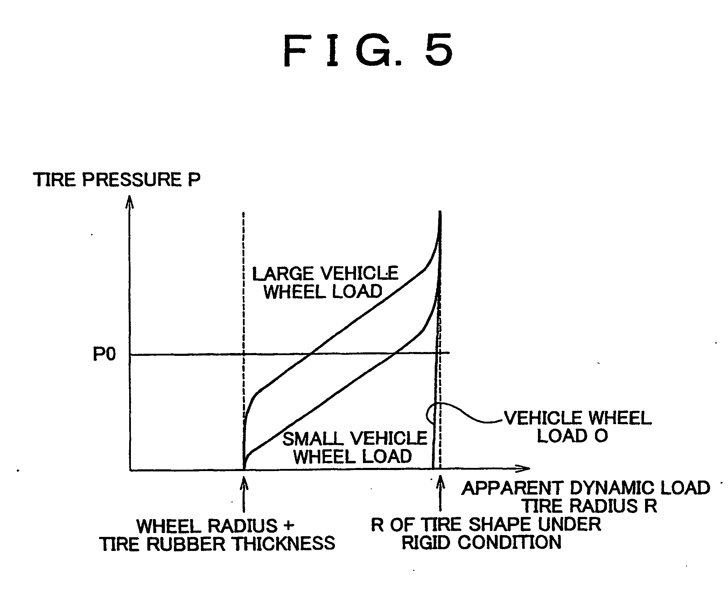

The plural relationships between the dynamic load tire radius R and the tire pressure P have been memorized in advance as a map by the ROM 32 in the estimating unit 20. Fig. 5 is a graph illustrating the respective relationships. As illustrated in Fig. 5, the plural relationships are designed to set a larger tire pressure P corresponding to an increase of the vehicle wheel load under the same apparent dynamic load tire radius R. However, Fig. 5 shows the representative relationships only when the vehicle wheel load is zero, small, and large. However, the greater number of relationships are actually memorized as a map by the ROM 32 and any one of the relationships memorized by the ROM 32 is selected.

The tire pressure abnormality determining program has been memorized by the ROM 32 in the estimating unit 20. The program according to the second embodiment is the same as the tire pressure abnormality determining program according to the first embodiment except for a process corresponding to the step S16 illustrated in Fig.4 according to the first embodiment.

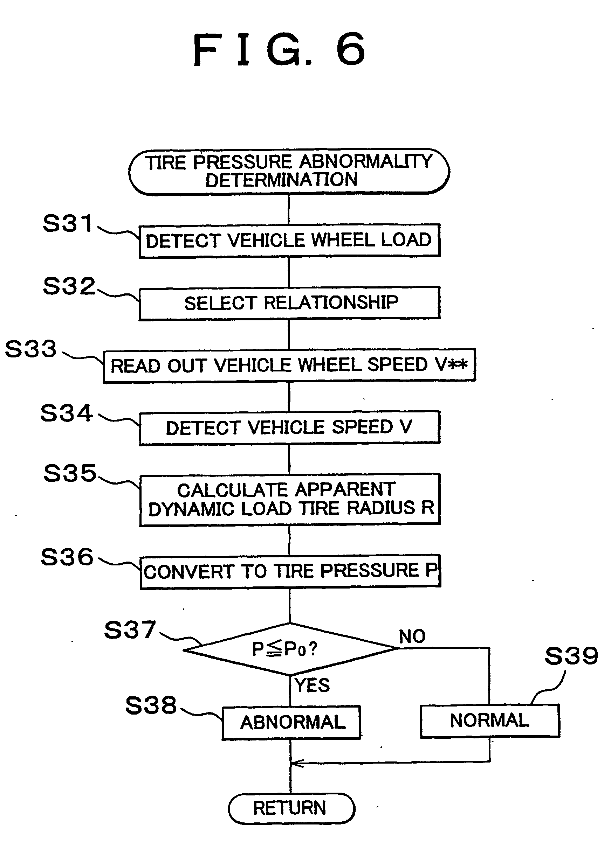

The process according to the second embodiment corresponding to the process at the step S16 in Fig. 4 is conceptually illustrated by a flow chart in Fig. 6 as a tire pressure abnormality determining routine. According to the second embodiment, the tire pressure abnormality determining program is repeatedly performed for each tired wheel by the CPU 31. Therefore, the tire pressure abnormality determining routine is repeatedly performed for each tired wheel.

Every time when the tire pressure abnormality determining routine is performed, the vehicle wheel load for the tired wheel at this time is first detected at step S31 by the vehicle condition amount detecting device 40. Next, a relationship corresponding to the detected vehicle wheel load is selected at step S32 out of the above described plural relationships (referring to Fig. 5). At step S33, the vehicle wheel speed data for the tired wheel at this time, which had been corrected at a step corresponding to the step S15 in Fig. 4, is read out from the RAM 34 in the estimating unit 20. At step S34, the vehicle speed V is detected by the vehicle condition amount detecting device 40. At step S35, a value calculated by adding a normal slip ratio of the tired wheel into the detected vehicle speed V is then divided by a vehicle wheel speed V** (** : FL, FR, RL, RR) at this time so as to calculate the apparent dynamic load tire radius R of the tired wheel at this time. At step S36, the calculated apparent dynamic load tire radius R is converted to the tire pressure P following the above selected relationship. At step S37, the CPU 31 determines whether or not the converted tire pressure P is equal to or below a reference pressure value Po. When the converted tire pressure P is equal to or below the reference pressure value Po, an affirmative decision (YES) is obtained at the step S37 and the program then proceeds to step S38. At the step S38, the CPU 31 determines that the tire pressure P of at least any one of the four tired wheels is abnormal. On the other hand, when the converted tire pressure P is not equal to or below the reference pressure value Po, a negative decision (NO) is obtained at the step S37 and the program then proceeds to step S39. At the step S39, the CPU 31 determines that the tire pressure P of the four tired wheels is normal. In both cases, the tire pressure abnormality determining routine is terminated as described above.

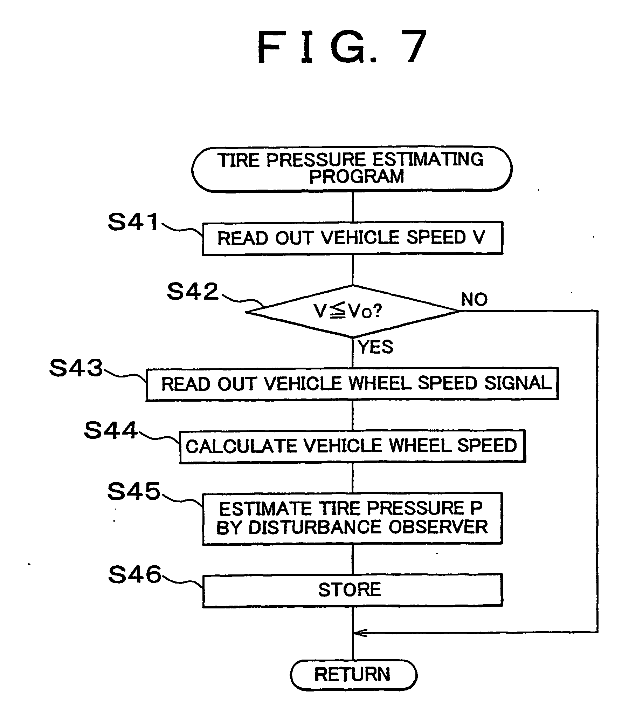

Next, a third embodiment of the present invention is described as follow. According to the third embodiment, the estimating unit 20 is designed to determine the tire abnormality determination based upon a different determination principle from each determination principle according to the first and second embodiments. Fig. 7 shows a flow chart conceptually illustrating the tire pressure estimating program. The program is performed to estimate the tire pressure P for each tired wheel by using a single wheel speed sensor 10 for a single tired wheel with a disturbance observer.

A disturbance observer is arranged according to a tire model of the tired wheel, wherein a rim side portion and a belt side portion are connected to each other at least by a torsion spring so that the rim side portion and the belt side portion are rotatable relative to each other. The disturbance observer is further arranged according to a dynamic system denoting a rotational operation of the tired wheel based upon the tire model. According to the dynamic system, an amount of change of a spring constant of the torsion spring due to the change in the tire pressure P is identified as the disturbance acting on the tired wheel. According to the disturbance observer, the vehicle wheel speed signal outputted from the wheel speed sensor 10 is referred as a signal representing an angular speed of the rim side portion. Therefore, the disturbance observer estimates the disturbance as one of variables which reflect a state of the dynamic system for estimating the tire pressure P.

It is difficult for the disturbance observer to estimate the tire pressure P with a high accuracy within an entire zone in which the vehicle speed V (resembling the vehicle wheel speed) can be varied. In more detail, the disturbance observer can estimate the tire pressure P with a high accuracy within a first partial zone in which the vehicle speed V is equal to or below a threshold vehicle speed Vo that is lower than the threshold vehicle speed V1. However, it is difficult for the disturbance observer to estimate the tire pressure P with a high accuracy within a second partial zone in which the vehicle speed V is above the threshold vehicle speed Vo. That is, according to the third embodiment, the first partial zone corresponds to an example of the first vehicle environment (mentioned in "Summary of the invention") as a high accuracy estimating zone and the second partial zone corresponds to an example of the second vehicle environment (mentioned in "Summary of the invention") as a low accuracy estimating zone.

The tire pressure estimating program can be repeatedly performed for each tired wheel by the CPU 31 of the computer 22.

Every time when the tire pressure estimating program is performed, an actual vehicle speed V is first read out from the RAM 34 at step S41. The step S41 is followed by step S42 to determine whether or not the read-out vehicle speed V is equal to or below the threshold vehicle speed Vo.

This time, assuming that the read-out vehicle speed V is equal to or below the threshold vehicle speed Vo, the vehicle speed V is determined to be under the high accuracy estimating zone. Therefore, an affirmative decision (YES) is obtained at the step S42. At step S43 or S45, the disturbance observer then estimates the tire pressure P. In more detail, at the step S43, the vehicle wheel speed signal is read out from the wheel speed sensor 10 regarding a tired wheel subject to the tire pressure estimating program at this time out of the four tired wheels. The step S43 is followed by step S44 to calculate the vehicle wheel speed V** (** : FL, FR, RL, RR) based upon the read-out vehicle wheel speed signal. At step S45, the disturbance observer estimates the tire pressure P based upon the calculated vehicle wheel speed V** regarding the tired wheel subject to the tire pressure estimating program at this time. At step S46, the estimated pressure value is stored by the RAM 34. The RAM 34 is employed for storing in time series the latest plural number of estimated. One cycle of the tire pressure estimating program is then terminated.

Having described the third embodiment of the invention regarding a case that the actual vehicle speed V is equal to or below the threshold vehicle speed Vo, i. e. a state where the vehicle speed V is under the high accuracy estimating zone, a negative decision (NO) is obtained at the step S42 when the actual vehicle speed V is larger than the threshold vehicle speed Vo, i. e. when the vehicle speed V is under the low accuracy estimating zone. In this case, the estimation of the tire pressure P by the disturbance observer is omitted.

As described above, according to the third embodiment, the vehicle speed is referred as "a parameter expressing a tire load", the vehicle wheel speed forms an example of "a tire abnormality relating amount", the wheel speed sensor forms an example of "a tire abnormality relating amount sensor", and the tire pressure P forms an example of "a reference value".

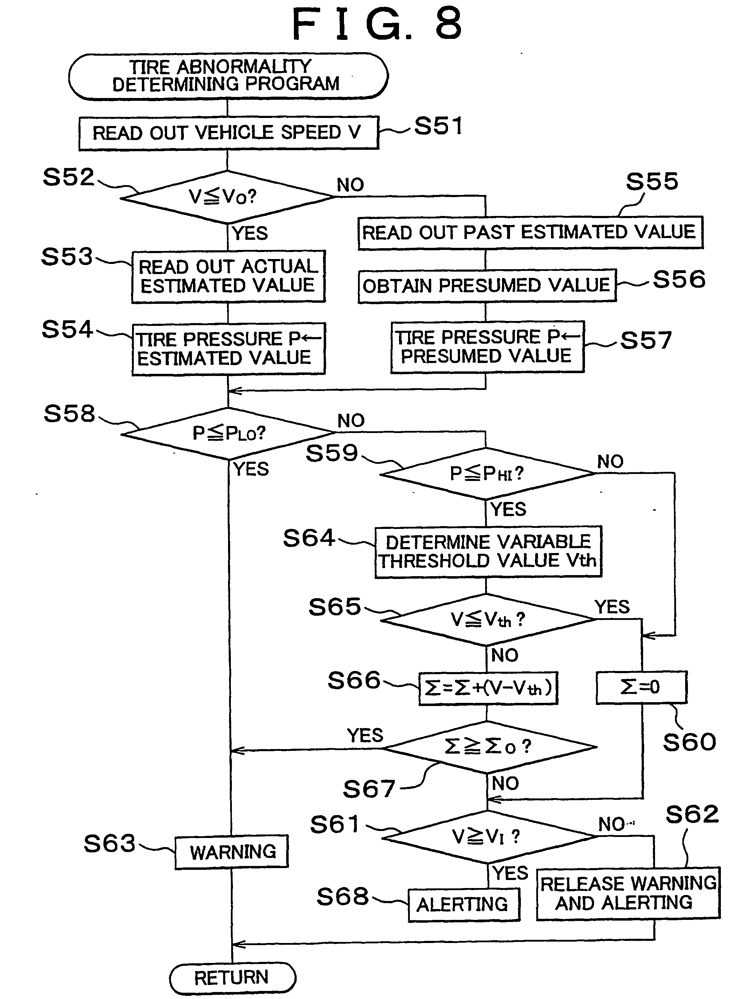

Fig. 8 shows a flow chart conceptually illustrating the tire abnormality determining program.

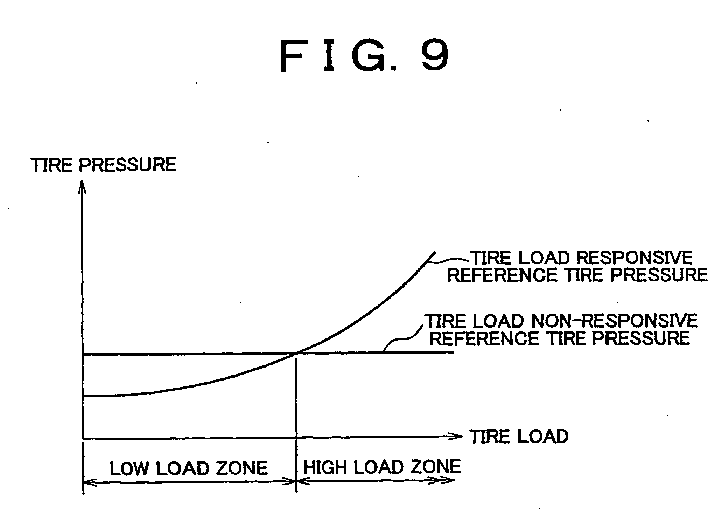

The tire abnormality determining program is first conceptually described. According to the program, the tire is determined whether or not to be abnormal by comparing the tire pressure P with a reference value. The comparison is implemented based upon the tire load. According to the third embodiment, the reference value is predetermined to increase step by step in response to an increase of the tire load. In detail, as illustrated by a graph of in Fig. 9, the reference value is defined as a combination of a tire load responsive reference tire pressure predetermined to increase in response to the increase of the tire load and a tire load non-responsive reference tire pressure predetermined not to vary in response to the change of the tire load. The reference value is arranged to select the tire load responsive reference tire pressure in the first partial zone and is arranged to select the tire load non-responsive reference tire pressure in the second partial zone out of the entire zone in which the tire load can be varied.

A mutual relationship between the first and second partial zones is described now. According to the third embodiment, the first partial zone is predetermined at a side in which the tire load is increased relative to the second partial zone. As illustrated in Fig. 9, the first partial zone is set as a high load zone and the second partial zone is set as a low load zone. Further, according to the third embodiment, the relationship between the tire load responsive reference tire pressure and the tire load non-responsive reference tire pressure is predetermined to set the tire load responsive reference tire pressure selected as the reference value at a higher pressure level than the tire load non-responsive reference tire pressure not selected as the reference value in the high load zone. On the other hand, the relationship therebetween is predetermined to set the tire load non-responsive tire pressure selected as the reference value at a higher level than the tire load responsive reference tire pressure not selected as the reference value in the low load zone.

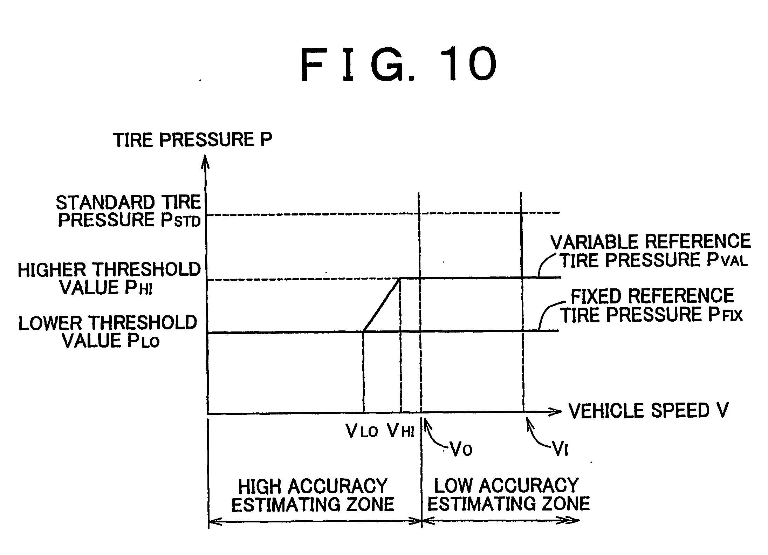

Further, according to the third embodiment, as illustrated in Fig. 10, the tire load responsive reference tire pressure and the tire load non-responsive reference tire pressure are approximately expressed by a higher threshold tire pressure PHI and a lower threshold tire pressure PLO which is lower than the higher threshold tire pressure PHI. Any of the threshold tire pressures PHI and PLO are a fixed pressure value having a value being lower than a standard tire pressure PSTD representing a standard value of the tire pressure, respectively. According to the third embodiment, the tire load non-responsive reference tire pressure is expressed as a fixed reference tire pressure PFIX always corresponding to the lower threshold tire pressure PLO regardless of a change of the vehicle speed V. On the other hand, the tire load responsive reference tire pressure is expressed as a variable reference tire pressure PVAL increased in response to the increase of the vehicle speed V.

According to the third embodiment, as illustrated in Fig. 10, the variable reference tire pressure PVAL corresponds to the lower threshold tire pressure PLO at a lower threshold vehicle speed VLO. The variable reference pressure PVAL is increased in parallel relative to the vehicle speed V from the lower threshold tire pressure PLO to the higher threshold tire pressure PHI in an area from the lower threshold vehicle speed VLO to a higher threshold vehicle speed VHI. After that, the variable reference tire pressure PVAL corresponds to the higher threshold tire pressure PHI.

A relationship between the fixed reference tire pressure PFIX and the variable reference tire pressure PVAL is described. As described in Fig. 10, the variable reference tire pressure PVAL is higher than the fixed reference tire pressure PFIX in the first partial zone in which the vehicle speed V is equal to or above the lower threshold vehicle speed VLO. Although not being illustrated in Fig. 10, the fixed reference tire pressure PFIX is higher than the variable reference tire pressure PVAL in the second partial zone in which the vehicle speed V is smaller than the lower threshold vehicle speed VLO.

As described above, according to the third embodiment, the first partial zone in which the vehicle speed V is equal to or above the lower vehicle speed VLO corresponds to "the high load zone" illustrated in Fig. 9 and the second partial zone in which the vehicle speed V is smaller than the lower threshold vehicle speed VLO corresponds to "the low load zone" illustrated in Fig. 9. Further, according to the third embodiment, any of the lower threshold vehicle speed VLO and the higher threshold vehicle speed VHI have been determined to be set at a smaller value than the threshold vehicle speed Vo (a value of the vehicle speed V dividing the high accuracy estimating zone and the low accuracy estimating zone), respectively.

The concept of the tire abnormality determining program was described above with reference to Figs. 9 and 10. Next, the program is described with reference to a flow chart illustrated in Fig. 8.

The tire abnormality determining program is repeatedly performed for each tired wheel by the CPU 31 of the computer 22 as well as the tire pressure estimating program. Every time when the tire abnormality determining program is performed, the actual vehicle speed V is read out from the RAM 34 at step S51. At step S52, the read-out vehicle speed V is determined whether or not to be equal to or below the threshold vehicle speed Vo.

This time, assuming that the read-out vehicle speed V is equal to or below the threshold vehicle speed Vo, the vehicle speed V is determined to be under the high accuracy estimating zone. Therefore, an affirmative decision (YES) is obtained at the step S52. The step S52 is followed by step S53 to read out an actual estimated pressure value of the tire pressure P estimated by the disturbance observer from the RAM 34. At step S54, the estimated pressure value read-out from the RAM 34 is determined as the tire pressure P to be referred to at the following steps.

On the other hand, this time, assuming that the read-out vehicle speed V is above the threshold vehicle speed Vo, the vehicle speed V is determined to be under the low accuracy estimating zone. Therefore, a negative decision (NO) is obtained at the step S52. The step S52 is followed by step S55 to read out from the RAM 34 at least one estimated pressure value of the tire pressure P estimated by the disturbance observer in the past. At step S56, the actual tire pressure P is estimated based upon at least one estimated pressure value read-out from the RAM 34 in the past.

As one of the examples, a presumed value of the actual tire pressure P can be obtained by implementing an averaging process relative to plural estimated values which have been previously estimated and obtained under the high accuracy estimating zone. As another example, the presumed pressure value of the actual tire pressure P can be obtained by considering a chronological changing tendency of the plural estimated values estimated in the past. According to this example, for example, a function expression is generated for defining a straight line to approximate a time series of the past plural estimated values. The function expression includes a time as a variable. The actual tire pressure P is estimated on the extension of the straight line by substituting an actual time for the generated function expression. At step S57, the presumed pressure value obtained as described above is determined as the tire pressure P referred at the following steps.

In any of the cases, the program proceeds to step S58 to determine whether or not the actual tire pressure P is equal to or below the lower threshold tire pressure PLO. This time, assuming that the actual tire pressure P is not equal to or below the lower threshold tire pressure PLO, a negative decision (NO) is obtained at the step S58 and the program proceeds to step S59. At the step S59, the actual tire pressure P is determined whether or not to be equal to or below the higher threshold tire pressure PHI. This time, assuming that the actual pressure P is not equal to or below the higher threshold tire pressure PHI, a negative decision (NO) is obtained and the program proceeds to step S60. At the step S60, a total value $\Sigma$ of a vehicle speed deviation $\Delta V$ representing a deviation of the actual vehicle speed V from a variable threshold vehicle speed Vth is reset to be zero. Functions of the variable threshold vehicle speed Vth and the total value $\Sigma$ are described later. The total value $\Sigma$ is stored by the RAM 34.

At step S61, the actual vehicle speed V is determined whether or not to be equal to or above the threshold vehicle speed V1. This time, assuming that the actual vehicle speed V is not equal to or above the threshold vehicle speed V1, a negative decision (NO) is obtained and the program proceeds to step S62. At the step S62, a signal is respectively outputted to release an operation of the warning device 30 and the alerting device 42. On the other hand, assuming that the actual vehicle speed V is equal to or above the threshold vehicle speed V1, an affirmative decision (YES) is obtained at the step S61 and the program proceeds to step S68. At the step S68, the alerting device 42 is operated for alerting the vehicle driver to preferably prevent the actual vehicle driving condition from being continued for a long period of time.because the actual tire load is estimated to be considerably large. In any of cases, one cycle of the tire abnormality determining program is then terminated.

On the other hand, when the actual tire pressure P is equal to or below the lower threshold tire pressure PLO, an affirmative decision (YES) is obtained at the step S58. At step S63, the warning device 30 is operated for warning the vehicle driver that the tire pressure P is abnormally low. One cycle of the tire abnormality determining program is then terminated.

When the actual tire pressure P is not equal to or below the lower threshold tire pressure PLO and yet is equal to or below the upper threshold tire pressure PHI, a negative decision (NO) is obtained at the step S58 and an affirmative decision (YES) is obtained at the step 559. The step S59 is followed by step S64. At the step S64, the variable threshold vehicle speed Vth is determined in response to the actual tire pressure P. The variable threshold vehicle speed Vth represents the vehicle speed V in a state where the actual tire pressure P is equal to or below the variable reference tire pressure PVAL. The variable threshold vehicle speed Vth is set to be any of values between the lower threshold vehicle speed VLO and the higher threshold vehicle speed VHI. In detail, the vehicle speed V dividing a zone between the lower threshold vehicle speed VLO and the higher threshold vehicle speed VHI is calculated at the same ratio with a ratio of the variable threshold vehicle speed Vth for dividing a zone between the lower threshold tire pressure PLO and the higher threshold tire pressure PHI. The calculated value is then determined as the variable threshold vehicle speed Vth.

At step S65, the actual vehicle speed V is determined whether or not to be equal to or below the determined variable threshold vehicle speed Vth. Assuming that the actual tire pressure P is not equal to or below the variable reference tire pressure PVAL, a negative decision (NO) is obtained at the step S65 and the program proceeds to the step S60. On the other hand, assuming that the actual vehicle speed V is equal to or below the variable threshold vehicle speed Vth, an affirmative decision (YES) is obtained at the step S65. At step S66, the vehicle speed deviation $\Delta V$ (=V - Vth) representing the deviation of the actual vehicle speed V from the variable threshold vehicle speed Vth is calculated. The calculated value is added to the actual total value $\Sigma$ read-out from the RAM 34. Accordingly, the total value $\Sigma$ is updated at the RAM 34. At step S67, the actual total value $\Sigma$ is determined whether or not to be equal to or above a reference total value $\Sigma$o. This time, assuming that the actual total value $\Sigma$ is not equal to or above the reference total value $\Sigma$o, a negative decision (NO) is obtained and the program proceeds to step S61.

Subsequently, the tire abnormality determining program is repeatedly performed. Each process at the step S58, S59, S64, S65, S66, and S67 is repeatedly performed. As the result, if the actual total value $\Sigma$ becomes equal to or above the reference total value $\Sigma$o, an affirmative decision (YES) is obtained at the step S67. In this case, the warning device 30 is operated at the step S63 for warning the vehicle driver that the tire pressure is abnormally low. One cycle of the tire abnormality determining program is then terminated.

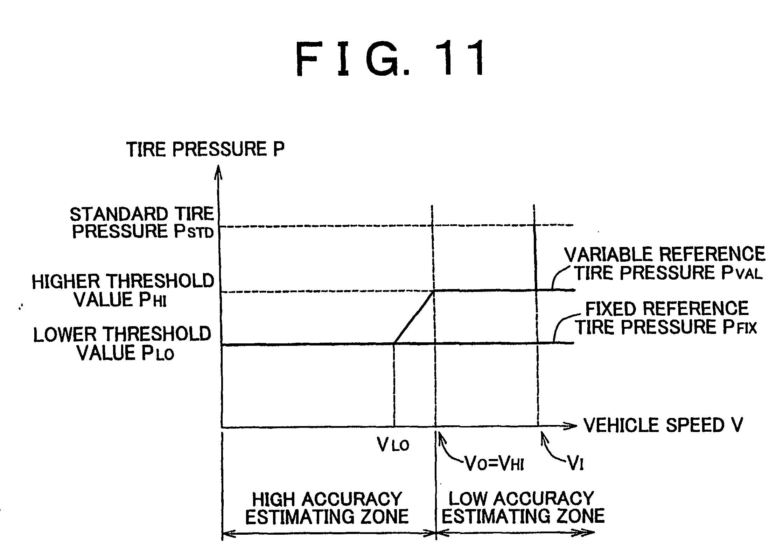

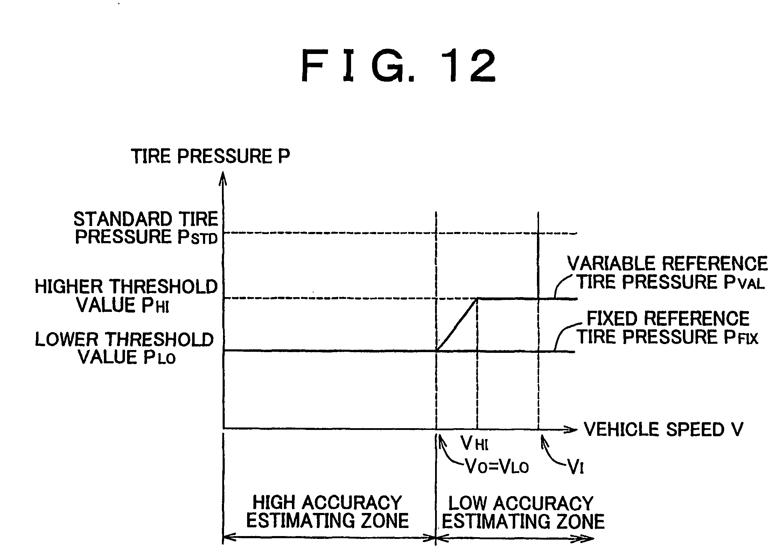

Additionally, according to the third embodiment, as illustrated in Fig. 10, any of the lower threshold vehicle speed VLO and the higher threshold vehicle speed VHI are set to be smeller than the threshold vehicle speed Vo dividing the high accuracy estimating zone and the low accuracy estimating zone, respectively. However, for example, as illustrated in Fig.11, the higher threshold vehicle speed VHI can be set to correspond to the threshold vehicle speed Vo when the lower threshold vehicle speed VLO is smaller than the threshold vehicle speed Vo. Further, as illustrated in Fig. 12, the higher threshold vehicle speed VHI can be set to be larger than the threshold vehicle speed Vo when the lower threshold vehicle speed VLO corresponds to the threshold vehicle speed Vo.

Further, according to the third embodiment, as illustrated in Fig. 10, a connecting portion of a graph expressing the variable reference tire pressure PVAL and a graph expressing the fixed reference tire pressure PFIX is set to increase successively in response to the increase of the vehicle speed V. After the increase of the variable reference tire pressure PVAL in response to the increase of the vehicle speed V, the variable reference tire pressure PVAL is set to be maintained at the higher threshold tire pressure PHI.

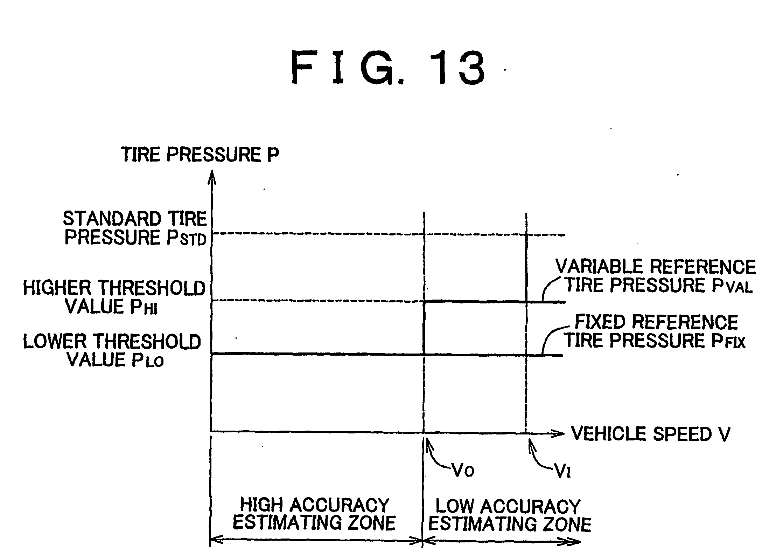

However, it is not indispensable to set the variable reference tire pressure value PVAL as described above to perform the present invention. For example, as illustrated by a graph in Fig. 13, the present invention can be performed by setting the variable reference tire pressure PVAL to increase from the lower threshold tire pressure PLO to the higher threshold tire pressure PHI immediately when the vehicle speed V is increased from a smaller value than the threshold vehicle speed Vo to a value being equal to the threshold vehicle speed Vo.

When the estimated value or the presumed value (hereinafter, referred to as a calculated value) of the tire pressure P is varied regarding the same vehicle speed V, the calculated value of the tire pressure P may be repeated between a condition in which the calculated value of the tire pressure P is equal to or above the variable reference tire pressure PVAL and the other condition in which the calculated value of the tire pressure P is below the variable reference tire pressure PVAL. Therefore, a determination that the tire is abnormal and the other determination that the tire is not abnormal may be repeatedly performed.

On the other hand, according to the above setting method of the variable reference tire pressure PVAL, even when the calculated value of the tire pressure P is varied regarding the same vehicle speed V, it can reduce the probability that the calculated value of the tire pressure P may be repeated between the condition in which the calculated value of the tire pressure P is equal to or above the variable reference tire pressure PVAL and the other condition in which the calculated value of the tire pressure P is below the variable reference tire pressure PVAL. Therefore, it can reduce the probability that the determination that the tire is abnormal and the other determination that the tire is not abnormal may be repeatedly performed so that a reliability of the determination result is improved.

Additionally, according to the third embodiment, the tire load is estimated by the vehicle speed V. However, for example, the present invention can be performed by evaluating the tire load by the vehicle wheel load detected by a load detector mounted in the vehicle for detecting the vehicle wheel load representing a load acting from the axis to the tire in a vertical direction. Further, the present invention can be performed by evaluating the tire load by both the vehicle speed V and the vehicle wheel load. In these cases, an evaluating accuracy to evaluate the tire load can be easily improved.

Further, according to the third embodiment, the low accuracy estimating zone exists only in a high speed zone when the entire zone in which the vehicle speed V can be varied is divided to a low speed zone and the high speed zone. However, the present invention can be applied for a tire abnormality determining device in which the low accuracy estimating zone exists in a low speed zone and a high speed zone respectively when the entire zone is divided to the low speed zone, a middle speed zone, and the high speed zone. In this case, the probable pressure value of the tire pressure P in the low speed zone can be obtained as described above based upon at least one estimated pressure value of the tire pressure P obtained in the preceding middle speed zone, i. e. under the high accuracy estimating zone.

Further, according to the third embodiment, the processes at the step S59 and the following steps thereof illustrated in Fig. 8 are classified to plural cases and each operating condition of the warning device 30 and the alerting device 42 is controlled in accordance with the case. Now this matter is described in detail below.

(1) a case that the tire pressure P is higher than the higher threshold tire pressure PHI and the vehicle speed V is smaller than the threshold vehicle speed V1

In this case, the warming device 30 and the alerting device 42 are not operated.

(2) a case that the tire pressure P is higher than the higher threshold tire pressure PHI and the vehicle speed V is equal to or above the threshold vehicle speed V1

In this case, the only alerting device 42 is operated.

(3) a case that the tire pressure P is equal to or below the higher threshold tire pressure PHI, the vehicle speed V is equal to or below the variable threshold vehicle speed Vth, and the vehicle speed V is smaller than the threshold vehicle speed V1

In this case, the warning device 30 and the alerting device 42 are not operated.

(4) a case that the tire pressure P is equal to or below the threshold tire pressure PHI, the vehicle speed V is equal to or below the higher variable threshold vehicle speed Vth, and the vehicle speed V is equal to or above the threshold vehicle speed V1

In this case, the only alerting device 42 is operated. When the variable threshold vehicle speed Vth is set to be smaller than the threshold vehicle speed V1, the case (4) does not exist.

(5) a case that the tire pressure P is equal to or below the higher threshold tire pressure PHI, the vehicle speed V is larger than the variable threshold vehicle speed Vth, the total value Σ is smaller than the reference total value Σo, and the vehicle speed v is smaller than the threshold vehicle speed V1

In this case, the warning device 30 and the alerting device 42 are not operated.

(6) a case that the tire pressure P is equal to or below the higher threshold tire pressure PHI, the vehicle speed V is larger than the variable threshold vehicle speed Vth, the total value Σ is smaller than the reference total value Σo, and the vehicle speed V is equal to or above the threshold vehicle speed V1

In this case, the only alerting device 42 is operated.

(7) a case that the tire pressure P is equal to or below the higher threshold tire pressure PHI, the vehicle speed V is larger than the variable threshold vehicle speed Vth, the total value Σ is equal to or above the reference total value Σo, and the vehicle speed V is smaller than the threshold vehicle speed V1

In this case, the only warning device 30 is operated.

(8) a case that the tire pressure P is equal to or below the higher threshold tire pressure PHI, the vehicle speed V is larger than the variable threshold vehicle speed Vth, the total value Σ is equal to or above the reference total value Σo, and the vehicle speed V is equal to or larger the threshold vehicle speed V1

In this case, the only warning device 30 is operated.

Various modes can be employed to select the case to operate the warning device 30 or the case to operate the alerting device 30. For example, the present invention can be performed by modifying the case (6) to a case to operate the warning device 30 on behalf of the alerting device 42. In this case, the warning device 30 can be operated under a condition that the vehicle speed V is equal to or above the threshold vehicle speed V1. Therefore, comparing with the third embodiment that the operation of the alerting device 42 is shifted to the operation of the warning device 30 after the total value Σ reaches the reference total value Σo. The case (6) to operate the warning device 30 enables to warn the driver at an earlier stage.

Further, the present invention can be performed by modifying the case (4) to a case that neither warning device 30 and alerting device 42 can be operated. In this case, the alerting device 42 is not operated as far as the vehicle speed V is equal to or below the variable threshold vehicle speed Vth even if the vehicle speed V becomes equal to or above the threshold vehicle speed V1. Therefore, a situation that the vehicle driver is alerted unnecessarily when the alerting device 42 actually should not be operated to alert the driver can be prevented.

Further, according to the third embodiment, the tire abnormality determination is performed regarding the vehicle (ex. an automobile) provided with four tired wheels. However, the present invention can be performed by implementing the tire abnormality determination regarding a vehicle (ex. a large-sized vehicle) provided with more than four tired wheels.

Further, according to the third embodiment, the vehicle wheel speed V** for each tired wheel is converted to the dynamic load tire radius R**. However, the above described conversion is not actually indispensable because the conversion is performed by using the vehicle speed V in common regarding the four tired wheels. According to the third embodiment, the conversion is described as a matter of convenience of the description.

Having explained various embodiments of the invention with reference to the attached drawings, it should be noted that there are shown as some of the examples of the invention and that it is possible to execute the invention based upon the various variations and improvements according to the knowledge of the people in the art as well as based on the aspects described in the "means to solve the problems and the effects of the invention".

## Claims

1. An apparatus for estimating a tire condition accommodated in a vehicle provided with a tired wheel, in which an inner space of a tire fixed to a wheel is filled with air under pressure, comprising:

a wheel speed sensor (10) for detecting a vehicle wheel speed representing an angular speed of the tired wheel and outputting a vehicle wheel speed signal corresponding to the vehicle wheel speed ;
a vehicle condition amount detecting device (40) for detecting a vehicle condition amount and outputting a vehicle condition amount signal corresponding to the vehicle condition amount; and
an estimating unit (20) for estimating the tire condition based upon the vehicle wheel speed signal outputted from the wheel speed sensor (10),

wherein the estimating unit (20) implements a normalizing process for normalizing an estimation of the tire condition by using the vehicle wheel speed signal based upon the vehicle condition amount signal outputted from the vehicle condition amount detecting device (40), and wherein the estimating unit (20) estimates a condition amount of a tire pressure representing an air pressure of the tire as the tire condition, **characterized in that** the estimating unit (20) implements the normalizing process under a reflection accuracy decreasing condition in which the tire pressure of the tired wheel may not be accurately reflected on the vehicle wheel speed signal.

2. An apparatus according to claim 1, wherein the estimating unit (20) estimates the tire pressure condition amount based upon the vehicle wheel speed signal following at least a relationship between the tire pressure and the vehicle wheel speed regarding the same tired wheel.

3. An apparatus according to claim 1 or 2, wherein plural tired wheels are provided for the vehicle, plural wheel speed sensors (10) are provided for the respective tired wheels, and the estimating unit (20) includes a tire pressure condition amount estimating means for estimating the tire pressure condition amount of each tired wheel based upon mutual relationships among plural vehicle wheel speed signals respectively outputted from the wheel speed sensors (10) substantially at the same time.

4. An apparatus according to claim 1 or 2, wherein the estimating unit (20) includes a tire pressure condition amount estimating means for estimating the tire pressure condition amount of the tired wheel based upon a relationship between a value detected by the vehicle condition amount detecting device (40) and a value estimated based upon the vehicle wheel speed signal outputted from the wheel speed sensor (10) substantially at the same time regarding the same type vehicle condition amount.

5. An apparatus according to claim 4, wherein the tire pressure condition amount estimating means includes a tire pressure abnormality determining means for determining that the tire pressure of the tired wheel is abnormal when the detected value and the estimated value regarding the same type vehicle condition amount do not correspond to each other.

6. An apparatus according to claim 1, wherein the estimating unit (20) includes a tire pressure condition amount estimating means for estimating the tire pressure condition amount for the tired wheel based upon a vehicle wheel load and the vehicle wheel speed signal following at least a relationship among the tire pressure, a vehicle wheel load acting on the tired wheel as a vertical load and the vehicle wheel speed regarding the tired wheel.

7. An apparatus according to claim 1 or 6, wherein the vehicle condition amount detecting device (40) includes a vehicle wheel load relating sensor for detecting the vehicle wheel load acting on the tired wheel as the vertical load or a physical amount related to the vehicle wheel load as the vehicle condition amount, and the estimating unit (20) includes a tire pressure condition amount estimating means for estimating the tire pressure condition amount of the tired wheel based upon a relationship between a vehicle wheel load relating signal outputted from the vehicle wheel load-relating sensor and the vehicle wheel speed signal-outputted from the vehicle wheel speed sensor (10) substantially at the same time regarding the same tired wheel.

8. An apparatus according to claim 7, wherein the tire pressure condition amount estimating means includes a tire pressure abnormality determininct means for determinig that the tire pressure of the tired wheel is abnormal when the relationship between the vehicle wheel load relating signal and the vehicle wheel speed signal for the same tred wheel does not correspond to a relationship in a state where the tire pressure of the tired wheel is assumed to be normal.

9. An apparatus according to claim 1, wherein the reflection accuracy decreasing condition includes a condition in which an actual dynamic load tire radius may not be accurately reflected on the vehicle wheel speed signal.

10. An apparatus according to claim 1 or 9, wherein the reflection accuracy decreasing condition includes an actual vehicle wheel load deviating condition in which an actual value of a vehicle wheel load acting on the tired wheel as a vertical load deviates from a normal value of the actual value by a set amount or more than the set amount, and the estimating unit (20) includes a normalizing process means for implementing the normalizing process under the actual vehicle wheel load deviating condition.

11. An apparatus according to claim 10, wherein the vehicle condition amount detecting device (40) includes a lateral acceleration relating sensor for detecting a lateral acceleration of the vehicle or a physical amount related to the lateral acceleration as the vehicle condition amount, and the normalizing process means includes an actual vehicle wheel load deviating condition determining means for determining the actual vehicle wheel load deviating condition based upon a vehicle condition amount signal outputted from the lateral acceleration relating sensor.

12. An apparatus according to claim 10 or 11, wherein the vehicle condition amount detecting device (40) includes a longitudinal acceleration relating sensor for detecting a longitudinal acceleration of the vehicle or a physical amount related thereto as the vehicle condition amount, and the normalizing process means includes an actual vehicle wheel load deviating condition determining means for determining the actual vehicle wheel load deviating condition based upon a vehicle condition amount signal outputted from the longitudinal acceleration relating sensor.

13. An apparatus for estimating a tire condition accommodated in a vehicle provided with a tired wheel, in which an inner space of a tire fixed to a wheel is filled with air under pressure according to anyone of the claims 1, 9, 10, 11 or 12, wherein the reflection accuracy I decreasing condition includes a large slip value condition in which a slip value of the tired wheel relative to a road surface is equal to or above a set value, and the estimating unit (20) includes a normalizing process means for implementing the normalizing process under the large slip value condition.

14. An apparatus according to claim 13, wherein the vehicle condition detecting device includes a longitudinal acceleration relating sensor for detecting a longitudinal acceleration of the vehicle or a physical amount related to the vehicle longitudinal acceleration as the vehicle condition amount, and the normalizing process means includes a large slip value condition determining means for determining the large slip value condition based upon a vehicle condition amount signal outputted from the longitudinal acceleration relating sensor.

15. An apparatus according to claim 12 or 13, wherein the vehicle condition detecting device includes a driving force relating sensor for detecting a driving force of the tired wheel or a physical amount relating thereto as the vehicle condition amount, and the normalizing process means includes a large slip value condition determining means for determining the large slip value condition based upon a vehicle condition amount signal outputted from the driving force relating sensor.

16. An apparatus according to any one of claims 13 through 15, wherein the vehicle condition detecting device includes a vehicle speed relating sensor for detecting a vehicle speed representing a vehicle running speed or a physical amount relating to the vehicle running speed, and the normalizing process means includes a large slip value condition determining means for determining the large slip value condition based upon a vehicle condition amount signal outputted from the vehicle relating sensor and the vehicle wheel speed signal outputted from the wheel speed sensor (10).

17. An apparatus according to any one of claims 9 through 16, wherein the estimating unit (20) includes an invalidating means for implementing the normalizing process by substantially invalidating the vehicle wheel speed signal outputted from the wheel speed sensor (10) for estimating the tire pressure condition amount under the reflection accuracy decreasing condition.

18. An apparatus according to any one of claims 1 through 17, wherein the estimating unit (20) includes a correcting means for implementing the normalizing process by correcting at least any one of the vehicle wheel speed signal outputted from the wheel speed sensor (10) and a calculated value based upon the vehicle wheel speed signal based upon the vehicle condition amount signal outputted from the vehicle condition amount detecting device (40) for normalizing an estimation of the tire pressure condition amount under the reflection accuracy decreasing condition.

19. An apparatus according to claim 18, wherein the correcting means includes a means for correcting at least any one of the vehicle wheel speed signal outputted from the wheel speed sensor (10) and the calculated value based upon the vehicle wheel speed signal based upon at least any one of a vehicle speed representing a vehicle running speed or a physical amount related to the vehicle running speed, a vehicle wheel load acting on the tired wheel as a vertical load or a physical amount related to the vehicle wheel load, and a slip value of the tired wheel relative to a road surface and a physical amount related to the slip value.

20. An apparatus according to claim 18, wherein the vehicle condition amount detecting device (40) detects at least any one of a vehicle speed or a physical amount related to the vehicle speed, a vehicle wheel load acting on the tired wheel as a vertical load or a physical amount related to the vehicle wheel load, and a slip value of the tired wheel relative to a road surface or a physical amount related to the slip value as the vehicle condition amount, and the correcting means includes a means for correcting at least any one of the vehicle wheel speed signal outputted from the wheel speed sensor (10) and the calculated value based upon the vehicle wheel speed signal based upon at least any one of the vehicle condition amounts detected by the vehicle condition amount detecting device (40).

21. An apparatus for estimating a tire condition accommodated in a vehicle provided with a tired wheel, in which an inner space of a tire fixed to a wheel is filled with air under pressure, comprising:

   a wheel speed sensor (10) for detecting a vehicle wheel speed representing an angular speed of the tired wheel and outputting a vehicle wheel speed signal corresponding to the vehicle wheel speed ;

a vehicle condition amount detecting device (40) for detecting a vehicle condition amount and outputting a vehicle condition amount signal corresponding to the vehicle condition amount; and

an estimating unit (20) for estimating the tire condition based upon the vehicle wheel speed signal outputted from the wheel speed sensor (10),

wherein the estimating unit (20) implements a normalizing process for normalizing an estimation of the tire condition by using the vehicle wheel speed signal based upon the vehicle condition amount signal outputted from the vehicle condition amount detecting device (40), and wherein

the estimating unit (20) estimates a condition amount of a tire pressure representing an air pressure of the tire as the tire condition, **characterized in that**

the estimating unit (20) includes a tire pressure condition amount estimating means for estimating the tire pressure condition amount of the tired wheel based upon a relationship between a value detected by the vehicle condition amount detecting device (40) and a value estimated based upon the vehicle wheel speed signal outputted from the wheel speed sensor (10) substantially at the same time regarding the same type vehicle condition amount.

22. An apparatus according to claim 21, wherein the estimating unit (20) estimates the tire pressure condition amount based upon the vehicle wheel speed signal following at least a relationship between the tire pressure and the vehicle wheel speed regarding the same tired wheel.

23. An apparatus according to claim 21 or 22, wherein plural tired wheels are provided for the vehicle, plural wheel speed sensors (10) are provided for the respective tired wheels, and the estimating unit (20) includes a tire pressure condition amount estimating means for estimating the tire pressure condition amount of each tired wheel based upon mutual relationships among plural vehicle wheel speed signals respectively outputted from the wheel speed sensors (10) substantially at the same time.

24. An apparatus according to any one of claims 21 through 23, wherein the tire pressure condition amount estimating means includes a tire pressure abnormality determining means for determining that the tire pressure of the tired wheel is abnormal when the detected value and the estimated value regarding the same type vehicle condition amount do not correspond to each other.

25. An apparatus according to claim 24, wherein the plural tired wheels include right and left tired wheels respectively accommodated at vehicle right and left sides, the plural wheel speed sensors (10) include a right wheel speed sensor (10) provided with the right tired wheel and a left wheel speed sensor (10) provided with the left tired wheel, the vehicle condition amount detecting device (40) includes a lateral load movement amount sensor for detecting a lateral movement amount of a vehicle load, and the tire pressure condition amount estimating means includes a tire pressure abnormality determining means for estimating the lateral movement amount of the vehicle load based upon a left vehicle wheel speed signals outputted at a first timing from the left wheel speed sensor and a right vehicle wheel speed signals outputted substantially at the same timing as the first timing from the right wheel speed sensor and for determining that the tire pressure of any one of the right and left tired wheels is abnormal when the estimated value is different from a detected value by the lateral load movement amount sensor by a set value or more than the set value.

26. An apparatus according to claim 24, wherein the plural tired wheels include front and rear tired wheels respectively accommodated at vehicle front and rear sides, the plural wheel speed sensors (10) include a front wheel speed sensor provided with the front tired wheel and a rear wheel speed sensor provided with the rear tired wheel, the vehicle condition amount detecting device (40) includes a longitudinal load movement amount sensor for detecting a longitudinal movement amount of a vehicle load, and the tire pressure condition amount estimating means includes a tire pressure abnormality determining means for estimating the longitudinal movement amount of the vehicle load based upon a front vehicle wheel speed signals outputted at a first timing from the front wheel speed sensor and a rear vehicle wheel speed signals outputted substantially at the same timing as the first timing from the rear wheel speed sensor and for determining that the tire pressure of any one of the front and rear tired wheels is abnormal when the estimated value is different from a detected value by the longitudinal load movement amount sensor by a set value or more than the set value.

27. An apparatus to any one of claims 24 through 26, wherein the vehicle condition amount detecting device (40) includes a vehicle driving force relating sensor for detecting a vehicle driving force or a physical amount related to the vehicle driving force, and the tire pressure condition amount estimating means includes a tire pressure abnormality determining means for estimating the vehicle driving force based upon the vehicle wheel speed signal outputted from the wheel speed sensor (10) and a vehicle speed representing a vehicle running speed and for determining that the tire pressure of the tired wheel is abnormal when the estimated valuee is different from a detected value by the vehicle driving force relating sensor by a set value or more than the set value.

28. An apparatus according to any one of claims 21 through 27, wherein the estimating unit (20) includes a tire pressure condition amount estimating means for estimating the tire pressure condition amount for the tired wheel based upon a vehicle wheel load and the vehicle wheel speed signal following at least a relationship among the tire pressure, a vehicle wheel load acting on the tired wheel as a vertical load, and the vehicle wheel speed regarding the tired wheel.

29. An apparatus according to claim 21 or 28, wherein the vehicle condition amount detecting device (40) includes a vehicle wheel load relating sensor for detecting the vehicle wheel load acting on the tired wheel as the vertical load or a physical amount related to the vehicle wheel load as the vehicle condition amount, and the estimating unit (20) includes a tire pressure condition amount estimating means for estimating the tire pressure condition amount of the tired wheel based upon a relationship between a vehicle wheel load relating signal outputted from the vehicle wheel load relating sensor and the vehicle wheel speed signal outputted from the vehicle wheel speed sensor (10) substantially at the same time regarding the same tired wheel.

30. An apparatus according to claim 29, wherein the tire pressure condition amount estimating means includes a tire pressure abnormality determining means for determining that the tire pressure of the tired wheel is abnormal when the relationship between the vehicle wheel load relating signal and the vehicle wheel speed signal for the same tired wheel does not correspond to a relationship in a state where the tire pressure of the tired wheel is assumed to be normal.

31. An apparatus according to any one of claims 21 through 30, wherein the vehicle is driven by transmitting a rotational force of a driving power source as a driving force to the tired wheel via a driving force transmitting device with variable speed, the vehicle condition amount detecting device (40) further includes a vehicle speed sensor for detecting a vehicle speed representing a vehicle running speed, the vehicle driving force relating sensor includes a rotational speed sensor for detecting a rotational number of the driving power source and a gear ratio sensor for detecting a gear ratio of the driving force transmitting device, the tire pressure condition amount estimating means includes a tire pressure abnormality determining means for calculating the vehicle wheel speed to be detected by the vehicle wheel speed sensor (10) as a reference vehicle wheel speed in a state where the tire pressure is normal based upon the vehicle speed detected by the vehicle speed sensor, the driving power source rotational number detected by the rotational speed sensor, the gear ratio detected by the gear ratio sensor, and a set slip value predetermined as a slip value of the tired wheel relative to a road surface and for determining that the tire pressure is abnormal in a state where an actual vehicle wheel speed detected by the wheel speed sensor (10) is different from the calculated reference vehicle wheel speed by a set value or more than the set value.

32. An apparatus according to any one of claims 21 through 31, wherein the estimating unit (20) includes

(a) a correcting means for implementing the normalizing process by correcting at least any one of the vehicle wheel speed signal outputted from the wheel speed sensor (10) and a calculated value based upon the vehicle wheel speed signal based upon a vehicle wheel load acting on the tired wheel as a vertical load during every vehicle running time; and
(b) an initializing means for implementing the normalizing process by initializing a condition of the correction to be performed during the same vehicle running time based upon the vehicle wheel load at a reference time during every vehicle running time.

33. An apparatus according to claim 32, wherein the vehicle condition amount detecting device (40) includes a vehicle wheel load relating sensor for detecting the vehicle wheel load or a physical amount related to the vehicle wheel load, the initializing means includes a setting means for setting an actual vehicle wheel load at start of every vehicle running time as a reference vehicle wheel load based upon a vehicle condition amount signal outputted from the vehicle wheel load relating sensor, and the correcting means includes a means for correcting at least any one of the vehicle wheel speed signal outputted from the wheel speed sensor (10) and the calculated value based upon the vehicle wheel speed signal based upon the vehicle condition amount signal outputted from the vehicle wheel load relating sensor and based upon a deviation of an actual vehicle wheel load sequentially obtained during the same vehicle running time from the set reference vehicle wheel load.

**34.** An apparatus for estimating a tire condition accommodated in a vehicle provided with a tired wheel, in which an inner space of a tire fixed to a wheel is filled with air under pressure, comprising:

a wheel speed sensor (10) for detecting a vehicle wheel speed representing an angular speed of the tired wheel and outputting a vehicle wheel speed signal corresponding to the vehicle wheel speed ;
a vehicle condition amount detecting device (40) for detecting a vehicle condition amount and outputting a vehicle condition amount signal corresponding to the vehicle condition amount; and
an estimating unit (20) for estimating the tire condition based upon the vehicle wheel speed signal outputted from the wheel speed sensor (10),

wherein the estimating unit (20) implements a normalizing process for normalizing an estimation of the tire condition by using the vehicle wheel speed signal based upon the vehicle condition amount signal outputted from the vehicle condition amount detecting device (40), and wherein the estimating unit (20) estimates a condition amount of a tire pressure representing an air pressure of the tire as the tire condition, **characterized in that** the estimating unit (20) includes

(a) a correcting means for implementing the normalizing process by correcting at least any one of the vehicle wheel speed signals outputted from the wheel speed sensor (10) and a calculated value based upon the vehicle wheel speed signal based upon a vehicle wheel load acting on the tired wheel as a vertical load during every vehicle running time; and
(b) an initializing means for implementing the normalizing process by initializing a condition of the correction to be performed during the same vehicle running time based upon the vehicle wheel load at a reference time during every vehicle running time.

**35.** An apparatus according to claim 34, wherein the estimating unit (20) estimates the tire pressure condition amount based upon the vehicle wheel speed signal following at least a relationship between the tire pressure and the vehicle wheel speed regarding the same tired wheel.

**36.** An apparatus according to claim 34 or 35, wherein plural tired wheels are provided for the vehicle, plural wheel speed sensors (10) are provided for the respective tired wheels, and the estimating unit (20) includes a tire pressure condition amount estimating means for estimating the tire pressure condition amount of each tired wheel based upon mutual relationships among plural vehicle wheel speed signals respectively outputted from the wheel speed sensors (10) substantially at the same time.

**37.** An apparatus according to claim 34 or 35, wherein the estimating unit (20) includes a tire pressure condition amount estimating means for estimating the tire pressure condition amount of the tired wheel based upon a relationship between a value detected by the vehicle condition amount detecting device (40) and a value estimated based upon the vehicle wheel speed signal outputted from the wheel speed sensor (10) substantially at the same time regarding the same type vehicle condition amount, wherein the tire pressure condition amount estimating means includes a tire pressure abnormality determining means for determining that the tire pressure of the tired wheel is abnormal when the detected value and the estimated value regarding the same type vehicle condition amount do not correspond to each other.

**38.** An apparatus according to any one of claim 34 through 37, wherein the estimating unit (20) includes a tire pressure condition amount estimating means for estimating the tire pressure condition amount for the tired wheel based upon a vehicle wheel load and the vehicle wheel speed signal following at least a relationship among the tire pressure, a vehicle wheel load acting on the tired wheel as a vertical load, and the vehicle wheel speed regarding the tired wheel.

**39.** An apparatus according to claim 34 or 38, wherein the vehicle condition amount detecting device (40) includes a vehicle wheel load relating sensor for detecting the vehicle wheel load acting on the tired wheel as the vertical load or a physical amount related to the vehicle wheel load as the vehicle condition amount, and the estimating unit (20) includes a tire pressure condition amount estimating means for estimating the tire pressure condition amount of the tired wheel based upon a relationship between a vehicle wheel load relating signal outputted from the vehicle wheel load relating sensor and the vehicle wheel speed signal outputted from the vehicle wheel speed sensor (10) substantially at the same time regarding the same tired wheel.

**40.** An apparatus according to claim 39, wherein the tire pressure condition amount estimating means includes a tire pressure abnormality determining means for determining that the tire pressure of the tired wheel is abnormal when the relationship between the vehicle wheel load relating signal and the vehicle wheel speed signal for the same tired wheel does not correspond to a relationship in a state where the tire pressure of the tired wheel is assumed to be normal.

41. An apparatus according to claim 34, wherein the vehicle condition amount detecting device (40) includes a vehicle wheel load relating sensor for detecting the vehicle wheel load or a physical amount related to the vehicle wheel load, the initializing means includes a setting means for setting an actual vehicle wheel load at start of every vehicle running time as a reference vehicle wheel load based upon a vehicle condition amount signal outputted from the vehicle wheel load relating sensor, and the correcting means includes a means for correcting at least any one of the vehicle wheel speed signal outputted from the wheel speed sensor (10) and the calculated value based upon the vehicle wheel speed signal based upon the vehicle condition amount signal outputted from the vehicle wheel load relating sensor and based upon a deviation of an actual vehicle wheel load sequentially obtained during the same vehicle running time from the set reference vehicle wheel load.

42. An apparatus for determining whether or not a tire is abnormal accommodated in a vehicle provided with a tired wheel, in which an inner space of the tire fixed to a wheel is filled with air under pressure, comprising :

   a tire abnormality relating amount sensor for detecting a tire abnormality relating amount being available to determine whether or not the tire is abnormal; and
   a tire abnormality determining unit for determining whether or not the tire is abnormal by comparing a reference value with a detected value of the tire abnormality relating amount or a comparison value representing a calculated value based upon the detected value of the tire abnormality relating amount, **characterized in that**
   the tire abnormality determining unit implements the comparison based upon a tire load, and
   the reference value is defined as a combination of a tire load responsive reference value predetermined to increase in response to an increase of the tire load and a tire load nonresponsive reference value predetermined not to vary in response to a change of the tire load, and the reference value is defined to select the tire load responsive reference value under a first partial zone and is defined to select the tire load non-responsive reference value under the second partial zone out of an entire zone in which the tire load can be varied.

43. An apparatus according to claim 42, wherein the reference value is predetermined to increase sequentially or step by step in response to an increase of the tire load.

44. An apparatus according to claim 42, wherein a relationship between the tire load responsive reference value and the tire load non-responsive reference value is defined to set the tire load responsive reference value selected as the reference value larger than the tire load non-responsive reference value not selected as the reference value under the first partial zone and to set the tire load non-responsive reference value selected as the reference value larger than the tire load responsive reference value not selected the reference value under the second partial zone.

45. An apparatus according to any one of claims 42 through 44, wherein the first partial zone is predetermined at a side in which the tire load is increased relative to the second partial zone.

46. An apparatus for determining whether or not a tire is abnormal accommodated in a vehicle provided with a tired wheel, in which an inner space of the tire fixed to a wheel is filled with air under pressure comprising :

   a tire abnormality relating amount sensor for detecting a tire abnormality relating amount representing a physical amount being available to determirie whether or not the tire is abnormal; and
   a tire abnormality determining unit
   for calculating a comparison value to be compared with a reference value to determine whether or not the tire is abnormal and
   for determining whether or not the tire is abnormal by comparing the calculated comparison value with the reference value based upon a detected value of the tire abnormality relating amount by the tire abnormality relating amount sensor **characterized in that**
   the tire abnormality determining unit determines under a first vehicle environment with a high accuracy and under a second vehicle environment with a low accuracy if the tire is abnormal and
   the tire abnormality determining unit calculates the comparison value under the second vehicle environment based upon at least an comparison value calculated under the preceding first vehicle environment.

47. An apparatus according to claim 46, wherein the second vehicle environment is predetermined to be at a side in which a tire load is increased relative to the first vehicle environment, and the tire abnormality determining unit includes a determining means for determining the tire load is larger than normal under the second vehicle environment when the tire load surpasses the reference value.

48. An apparatus according to claim 46 or 47, wherein the tire abnormality determining unit includes a comparing means for comparing the reference value with the detected value of the tire abnormality relating amount by the tire abnormality relating amount sensor or the comparison value of a calculated value based upon the detected value of the tire abnormality relating amount by the tire abnormality relating amount sensor based upon the tire load.

**Patentansprüche**

1. Eine Vorrichtung zum Abschätzen eines Reifenzustands, die in einem Fahrzeug untergebracht ist, das mit einem mit Reifen versehenen Rad ausgestattet ist, bei dem ein Innenraum eines an einem Rad befestigten Reifens mit Luft unter Druck gefüllt ist, die aufweist:

einen Radgeschwindigkeitssensor (10) zum Erfassen einer Fahrzeugradgeschwindigkeit, die eine Winkelgeschwindigkeit des mit Reifen versehenen Rades darstellt und die ein Fahrzeugradgeschwindigkeitssignal, das der Fahrzeugradgeschwindigkeit entspricht, ausgibt, eine Fahrzeugzustandsgrößen-Erfassungsvorrichtung (40) zum Erfassen einer Fahrzeugzustandsgröße und zum Ausgeben eines Fahrzeugzustandsgrößensignals, das der Fahrzeugzustandsgröße entspricht, und eine Abschätzeinheit (20) zum Abschätzen des Reifenzustands auf der Grundlage des Fahrzeugradgeschwindigkeitssignals, das vom Radgeschwindigkeitssensor (10) ausgegeben wurde,

wobei die Abschätzeinheit (20) einen Normalisierprozess zum Normalisieren einer Abschätzung des Reifenzustands unter Verwendung des Fahrzeugradgeschwindigkeitssignals auf der Grundlage des Fahrzeugzustandsgrößensignals, das von der Fahrzeugzustandsgrößenerfassungsvorrichtung (40) ausgegeben wurde, implementiert und wobei die Abschätzeinheit (20) eine Zustandsgröße eines Reifendrucks, der einen Luftdruck des Reifens darstellt, als den Reifenzustand abschätzt, **dadurch gekennzeichnet, dass** die Abschätzeinheit (20) den Normalisierprozess unter einem Widerspiegelungsgenauigkeit-Verringerungszustand implementiert, in dem der Reifendruck des mit einem Reifen versehenen Rades beim Fahrzeugradgeschwindigkeitssignal nicht genau widergespiegelt werden kann.

2. Eine Vorrichtung nach Anspruch 1, wobei die Abschätzeinheit (20) die Reifendruckzustandsgröße auf der Grundlage des Fahrzeugradgeschwindigkeitssignals zumindest einer Beziehung zwischen dem Reifendruck und der Fahrzeugradgeschwindigkeit bezüglich des gleichen mit Reifen versehenen Rades folgend abschätzt.

3. Eine Vorrichtung nach Anspruch 1 oder 2, wobei eine Vielzahl an mit Reifen versehenen Rädern für das Fahrzeug vorgesehen ist, eine Vielzahl an Radgeschwindigkeitssensoren (10) für die jeweiligen mit Reifen versehenen Räder vorgesehen ist und die Abschätzeinheit (20) eine Reifendruckzustandsgrößen-Abschätzeinrichtung zum Abschätzen der Reifendruckzustandsgröße von jedem mit Reifen versehenem Rad auf der Grundlage der gegenseitigen Beziehungen zwischen der Vielzahl an Fahrzeugradgeschwindigkeitssignalen, die jeweils von den Radgeschwindigkeitssensoren (10) im Wesentlichen zur gleichen Zeit ausgegeben werden, aufweist.

4. Eine Vorrichtung nach Anspruch 1 oder 2, wobei die Abschätzeinheit (20) eine Reifendruck-Zustandsgrößen-Abschätzeinrichtung zum Abschätzen der Reifendruckzustandsgröße des mit Reifen versehenen Rades auf der Grundlage einer Beziehung zwischen einem Wert, der durch die Fahrzeugzustandsgrößenerfassungsvorrichtung (40) erfasst wurde, und einem Wert, der auf der Grundlage des Fahrzeugradgeschwindigkeitssignals abschätzt wurde, das vom Radgeschwindigkeitssensor (10) im Wesentlichen zur gleichen Zeit bezüglich des gleichen Typs von Fahrzeugzustandsgröße ausgegeben wurde, aufweist.

5. Eine Vorrichtung nach Anspruch 4, wobei die Reifendruckzustandsgrößen-Abschätzeinrichtung eine Reifendruckabnormität-Bestimmungseinrichtung zum Bestimmen, dass der Reifendruck des mit Reifen versehenen Rades abnorm ist, wenn der erfasste Wert und der abgeschätzte Wert bezüglich des gleichen Typs von Fahrzeugzustandsgröße einander nicht entsprechen, aufweist.

6. Eine Vorrichtung nach Anspruch 1, wobei die Abschätzeinheit (20) eine Reifendruckzustandsgrößen-Abschätzeinrichtung zum Abschätzen der Reifendruckzustandsgröße für das mit Reifen versehene Rad auf der Grundlage einer Fahrzeugradlast und des Fahrzeugradgeschwindigkeitssignals zumindest einer Beziehung zwischen dem Reifendruck, einer Fahrzeugradlast, die auf das mit Reifen versehene Rad als eine Vertikallast wirkt, und der Fahrzeugradgeschwindigkeit bezüglich des mit Reifen versehenen Rades folgend aufweist.

7. Eine Vorrichtung nach Anspruch 1 oder 6, wobei die Fahrzeugzustandsgrößen-Erfassungsvorrichtung (40) einen Fahrzeugradlast bezogenen Sensor zum Erfassen der Fahrzeugradlast, die auf das mit Reifen versehene Rad wirkt, als die Vertikallast oder einer physikalischen Größe, die sich auf die Fahrzeugradlast bezieht, als die Fahrzeugzustandsgröße aufweist und wobei die Abschätzeinheit (20) eine Reifendruckzustandsgrößen-Abschätzeinrichtung zum Abschätzen der Reifendruckzustandsgröße des mit Reifen versehenen Rades auf der Grundlage einer Beziehung zwischen einem Fahrzeugradlast bezogenen Signal, das von dem Fahrzeugradlast bezogenen Sensor ausgegeben wurde, und dem Fahrzeugradgeschwindigkeitssignal, das vom Fahrzeugradgeschwindigkeitssensor (10) im Wesentlichen zur gleichen Zeit bezüglich des gleichen mit Reifen versehenen Rades ausgegeben wurde, aufweist.

8. Eine Vorrichtung nach Anspruch 7, wobei die Reifendruckzustandsgrößen-Abschätzeinrichtung eine Reifendruckabnormität-Bestimmungseinrichtung zum Bestimmen, dass der Reifendruck des mit Reifen versehenen Rades abnorm ist, wenn die Beziehung zwischen dem Fahrzeugradlast bezogenen Signal und dem Fahrzeugradgeschwindigkeitssignal für das gleiche mit Reifen versehen Rad nicht einer Beziehung in einem Zustand entspricht, in dem der Reifendruck des mit Reifen versehenen Rades als normal vorausgesetzt wird, aufweist.

9. Eine Vorrichtung nach Anspruch 1, wobei der Widerspiegelungsgenauigkeit-Verringerungszustand einen Zustand aufweist, in dem ein Momentan-Dynamiklast-Reifenradius beim Fahrzeugradgeschwindigkeitssignal nicht genau widergespiegelt werden kann.

10. Eine Vorrichtung nach Anspruch 1 oder 9, wobei der Widerspiegelungsgenauigkeit-Verringerungszustand einen Abweichzustand für die momentane Fahrzeugradlast aufweist, bei dem ein momentaner Wert einer Fahrzeugradlast, die auf das mit Reifen versehene Rad als eine Vertikallast wirkt, von einem Normalwert des momentanen Wertes um eine festgelegte Größe oder mehr als die festgelegte Größe abweicht, und wobei die Abschätzeinheit (20) eine Normalisierprozesseinrichtung zum Implementieren des Normalisierprozesses unter dem Abweichzustand der momentanen Fahrzeugradlast aufweist.

11. Eine Vorrichtung nach Anspruch 10, wobei die Fahrzeugzustandsgrößenerfassungsvorrichtung (40) einen auf die Seitenbeschleunigung bezogenen Sensor zum Erfassen einer Seitenbeschleunigung des Fahrzeugs oder einer physikalischer Größe, die auf die Seitenbeschleunigung bezogen ist, als die Fahrzeugzustandgröße aufweist und die Normalisierprozesseinrichtung eine Bestimmungseinrichtung für den Abweichzustand der momentanen Fahrzeugradlast zum Bestimmen des Abweichzustandes der momentanen Fahrzeugradlast auf der Grundlage eines Fahrzeugzustandsgrößensignals, das vom auf die Seitenbeschleunigung bezogenen Sensor ausgegeben wurde, aufweist.

12. Eine Vorrichtung nach Anspruch 10 oder 11, wobei die Fahrzeugzustandsgrößenerfassungsvorrichtung (40) einen auf die Längsbeschleunigung bezogenen Sensor zum Erfassen einer Längsbeschleunigung des Fahrzeugs oder einer physikalischen Größe, die auf die Längsbeschleunigung bezogen ist, als die Fahrzeugzustandgröße aufweist und die Normalisierprozesseinrichtung eine Bestimmungseinrichtung für den Abweichzustand der momentanen Fahrzeugradlast zum Bestimmen des Abweichzustandes der momentanen Fahrzeugradlast auf der Grundlage eines Fahrzeugzustandsgrößensignals, das vom auf die Längsbeschleunigung bezogenen Sensor ausgegeben wurde, aufweist.

13. Eine Vorrichtung zum Abschätzen eines Reifenzustands, die in einem mit Fahrzeug untergebracht ist, das mit einem mit Reifen versehenen Rad ausgestattet ist, bei dem ein Innenraum eines Reifens, der an einem Rad befestigt ist, mit Luft unter Druck gefüllt ist, nach einem der Ansprüche 1, 10, 11 oder 12, wobei die Widerspiegelungsgenauigkeit-Verringerungszustand einen Zustand mit großem Schlupfwert aufweist, in dem ein Schlupfwert des mit Reifen versehenen Rades bezüglich einer Straßenoberfläche gleich einem festgelegten Wert oder größer als dieser ist, und wobei die Abschätzeinheit (20) eine Normalisierprozesseinrichtung zum Implementieren des Normalisierprozesses unter dem Zustand mit großem Schlupfwert aufweist.

14. Eine Vorrichtung nach Anspruch 13, wobei die Fahrzeugzustandserfassungsvorrichtung einen auf die Längsbeschleunigung bezogenen Sensor zum Erfassen einer Längsbeschleunigung des Fahrzeugs oder einer physikalischen Größe, die sich auf die Fahrzeuglängsbeschleunigung bezieht, als die Fahrzeugzustandgröße aufweist und die Normalisierprozesseinrichtung eine Bestimmungseinrichtung für einen Zustand mit großem Schlupfwert zum Bestimmen des Zustands mit großem Schlupfwert auf der Grundlage eines Fahrzeugzustandsgrößensignals, das vom auf die Längsbeschleunigung bezogenen Sensor ausgegeben wurde, aufweist.

**15.** Eine Vorrichtung nach Anspruch 12 oder 13, wobei die Fahrzeugzustandserfassungsvorrichtung einen auf eine Antriebskraft bezogenen Sensor zum Erfassen einer Antriebskraft des mit Reifen versehenen Rades oder einer physikalischen Größe, die sich darauf bezieht, als die Fahrzeugzustandgröße aufweist und die Normalisierprozesseinrichtung eine Bestimmungseinrichtung für einen Zustand mit großem Schlupfwert zum Bestimmen des Zustands mit großem Schlupfwert auf der Grundlage eines Fahrzeugzustandsgrößensignals, das vom auf die Antriebskraft bezogenen Sensor ausgegeben wurde, aufweist.

**16.** Eine Vorrichtung nach einem der Ansprüche 13 bis 15, wobei die Fahrzeugzustandserfassungsvorrichtung einen auf die Fahrzeuggeschwindigkeit bezogenen Sensor zum Erfassen einer Fahrzeuggeschwindigkeit, die eine Fahrzeugfahrgeschwindigkeit darstellt, oder einer auf die Fahrzeugfahrgeschwindigkeit bezogenen physikalischen Größe aufweist und die Normalisierprozesseinrichtung eine Bestimmungseinrichtung für den Zustand mit großem Schlupfwert zum Bestimmen des Zustands mit großem Schlupfwert auf der Grundlage eines Fahrzeugzustandsgrößensignals, das vom Fahrzeug bezogenen Sensor ausgegeben wurde, und des Fahrzeugradgeschwindigkeitssignals, das vom Radgeschwindigkeitssensor (10) ausgegeben wurde, aufweist.

**17.** Eine Vorrichtung nach einem der Ansprüche 9 bis 16, wobei die Abschätzeinheit (20) eine Aufhebeeinrichtung zum Implementieren des Normalisierprozesses durch das im Wesentlichen Aufheben des Fahrzeuradgeschwindigkeitssignals, das vom Radgeschwindigkeitssensor (10) ausgegeben wurde, zum Abschätzen der Reifendruckzustandsgröße unter dem Widerspiegelungsgenauigkeit-Verringerungszustand aufweist.

**18.** Eine Vorrichtung nach einem der Ansprüche 1 bis 17, wobei die Abschätzeinheit (20) eine Korrektureinrichtung zum Implementieren des Normalisierprozesses durch das Korrigieren von zumindest einer der Größen Fahrzeugradgeschwindigkeitssignal, das vom Radgeschwindigkeitssensor (10) ausgegeben wurde, und berechneter Wert auf der Grundlage des Farhzeugradgeschwindigkeitssignals auf der Grundlage des Fahrzeugzustandsgrößensignals, das von der Fahrzeugzustandsgrößen-Erfassungsvorrichtung (40) ausgegeben wurde, zum Normalisieren einer Abschätzung der Reifendruckzustandsgröße im Widerspiegelungsgenauigkeits-Verringerungszustand aufweist.

**19.** Eine Vorrichtung nach Anspruch 18, wobei die Korrektureinrichtung eine Einrichtung zum Korrigieren zumindest eines Fahrzeugradgeschwindigkeitssignals, das vom Radgeschwindigkeitssensor (10) ausgegeben wurde, und des berechneten Wertes auf der Grundlage des Fahrzeugradgeschwindigkeitssignals auf der Grundlage von zumindest einem Wert aus der Fahrzeuggeschwindigkeit, die eine Fahrzeugfahrgeschwindigkeit darstellt, oder einer physikalischen Größe, die sich auf die Fahrzeugfahrgeschwindigkeit bezieht, einer Fahrzeugradlast, die auf das mit Reifen versehene Rad als eine Vertikalast wirkt, oder einer physikalischen Größe, die sich auf die Fahrzeugradlast bezieht, und eines Schlupfwertes des mit Reifen versehenen Rades bezüglich einer Straßenoberfläche und einer physikalischen Größe, die sich auf den Schlupfwert bezieht, aufweist.

**20.** Eine Vorrichtung nach Anspruch 18, wobei die Fahrzeugzustandsgrößen-Erfassungsvorrichtung (40) zumindest eine Größe aus einer Fahrzeuggeschwindigkeit oder einer physikalischen Größe, die sich auf die Fahrzeuggeschwindigkeit bezieht, einer Fahrzeugradlast, die auf das mit Reifen versehene Rad als eine Vertikallast wirkt, oder einer physikalische Größe, die sich auf die Fahrzeugradlast bezieht, und einem Schlupfwert des mit Reifen versehenen Rades bezüglich einer Straßenoberfläche oder einer physikalischen Größe, die sich auf den Schlupfwert bezieht, als die Fahrzeugzustandgröße erfasst, und wobei die Korrektureinrichtung eine Einrichtung zum Korrigieren zumindest eines Wertes aus Fahrzeugradgeschwindigkeitssignal, das vom Radgeschwindigkeitssensor (10) ausgegeben wurde, und dem berechneten Wert auf der Grundlage des Fahrzeugradgeschwindigkeitssignals auf der Grundlage von zumindest einer der Fahrzeugzustandgrößen, die durch die Fahrzeugzustandsgrößen-Erfassungsvorrichtung (40) erfasst wurden, aufweist.

**21.** Eine Vorrichtung zum Abschätzen eines Reifenzustands, die in einem Fahrzeug untergebracht ist, das mit einem mit Reifen versehenen Rad ausgestattet ist, bei dem ein Innenraum eines Reifens, der an einem Rad befestigt ist, mit Luft unter Druck gefüllt ist, die aufweist:

einen Radgeschwindigkeitssensor (10) zum Erfassen einer Fahrzeugradgeschwindigkeit, die eine Winkelgeschwindigkeit des mit Reifen versehenen Rades darstellt, und zum Ausgeben eines Fahrzeuradgeschwindigkeitssignals, das der Fahrzeugradgeschwindigkeit entspricht, eine Fahrzeugzustandsgrößen-Erfassungsvorrichtung (40) zum Erfassen einer Fahrzeugzustandsgröße und zum Ausgeben eines Fahrzeugzustandsgrößensignals, das der Fahrzeugzustandsgröße entspricht, und

eine Abschätzeinheit (20) zum Abschätzen des Reifenzustands auf der Grundlage des Fahrzeugradgeschwindigkeitssignals, das vom Radgeschwindigkeitssensor (10) ausgegeben wurde,

wobei die Abschätzeinheit (20) einen Normalisierprozess zum Normalisieren einer Abschätzung des Reifenzustands unter Verwendung des Fahrzeugradgeschwindigkeitssignals auf der Grundlage des Fahrzeugzustandsgrößensignals, das von der Fahrzeugzustandsgrößen-Erfassungsvorrichtung (40) ausgegeben wurde, implementiert und wobei die Abschätzeinheit (20) eine Zustandsgröße eines Reifendrucks, die einen Luftdruck des Reifens darstellt, als den Reifenzustand abschätzt, **dadurch gekennzeichnet**, das die Abschätzeinheit (20) eine Reifendruckzustandsgrößen-Abschätzeinrichtung zum Abschätzen der Reifendruck-Zustandsgröße des mit Reifen versehenen Rades auf der Grundlage einer Beziehung zwischen einem Wert, der durch die Fahrzeugzustandsgrößen-Erfassungsvorrichtung (40) erfasst wurde, und einem Wert, der auf der Grundlage des Fahrzeugradgeschwindigkeitssignals abgeschätzt wurde, das vom Radgeschwindigkeitssensor (10) im Wesentlichen gleichzeitig bezüglich des gleichen Typs von Fahrzeugzustandsgröße ausgegeben wurde, aufweist.

22. Eine Vorrichtung nach Anspruch 21, wobei die Abschätzeinheit (20) die Reifendruckzustandsgröße auf der Grundlage des Fahrzeugradgeschwindigkeitssignals zumindest einer Beziehung zwischen dem Reifendruck und der Fahrzeugradgeschwindigkeit bezüglich des gleichen mit Reifen versehenen Rades folgend abschätzt.

23. Eine Vorrichtung nach Anspruch 21 oder 22, wobei eine Vielzahl an mit Reifen versehenen Rädern für das Fahrzeug vorgesehen ist, eine Vielzahl an Radgeschwindigkeitssensorsen (10) für die jeweiligen mit Reifen versehenen Räder vorgesehen ist und die Abschätzeinheit (20) eine Reifendruckzustandsgrößen-Abschätzeinrichtung zum Abschätzen der Reifendruckzustandsgröße von jedem mit Reifen versehenen Rad auf der Grundlage der gegenseitigen Beziehung zwischen der Vielzahl an Fahrzeugradgeschwindigkeitssignalen, die jeweils von den Radgeschwindigkeitssensor (10) im Wesentlichen zur gleichen Zeit ausgegeben wurden, aufweist.

24. Eine Vorrichtung nach einem der Ansprüche 21 bis 23, wobei die Reifendruckzustandsgrößen-Abschätzeinrichtung eine Bestimmungseinrichtung für eine Abnormität des Reifendrucks zum Bestimmen, dass der Reifendruck des mit Reifen versehenen Rades abnorm ist, wenn der erfasst Wert und der abgeschätzte Wert bezüglich des gleichen Typs von Fahrzeugzustandsgröße einander nicht entsprechen, aufweist.

25. Eine Vorrichtung nach Anspruch 24, wobei die Vielzahl an mit Reifen versehenen Rädern rechte und linke mit Reifen versehene Räder aufweisen, die an der rechten bzw. linken Seite des Fahrzeugs untergebracht sind, wobei die Vielzahl an Radgeschwindigkeitssensoren (10) einen Geschwindigkeitssensor (10) für das rechte Rad, der mit dem rechten mit Reifen versehenen Rad vorgesehen ist, und einen Geschwindigkeitssensor (10) für das linke Rad, der mit dem linken mit Reifen versehenen Rad vorgesehen ist, aufweist, wobei die Fahrzeugzustandsgrößen-Erfassungsvorrichtung (40) einen Seitenlast-Bewegungsgrößen-Sensor zum Erfassen einer Seitenbewegungsgröße einer Fahrzeuglast aufweist und wobei die Reifendruck-Zustandsgrößen-Abschätzeinrichtung eine Reifendruck-Abnormität-Bestimmungsinrichtung zum Abschätzen der Seitenbewegungsgröße der Fahrzeuglast auf der Grundlage von Geschwindigkeitssignalen eines linken Fahrzeugrades, die zu einem ersten Zeitpunkt vom Geschwindigkeitssensor für das linke Rad ausgegeben wurden, und von Geschwindigkeitssignalen eines rechten Fahrzeugrades, die im Wesentlichen gleichzeitig mit dem ersten Zeitpunkt vom Geschwindigkeitssensor für das rechte Rad ausgegeben wurden, und zum Bestimmen, dass der Reifendruck von einem der rechten und linken mit Reifen versehenen Räder abnorm ist, wenn der abgeschätzte Wert sich von einem erfassten Wert durch den Seitenlastbewegungsgrößesensor um einen festgelegten Wert oder mehr als den festgelegten Wert unterscheidet, aufweist.

26. Eine Vorrichtung nach Anspruch 24, wobei die Vielzahl an mit Reifen versehenen Rädern vordere und hintere mit Reifen versehene Räder aufweist, die an der vordere bzw. hinteren Seite des Fahrzeugs untergebracht sind, wobei die Vielzahl an Radgeschwindigkeitssensoren (10) einen Geschwindigkeitssensor für das vordere Rad, der mit dem vorderen mit Reifen versehenen Rad vorgesehen ist, und einen Geschwindigkeitssensor für das hintere Rad, der mit dem hinteren mit Reifen versehenen Rad vorgesehen ist, aufweist, wobei die Fahrzeugzustandsgrößen-Erfassungsvorrichtung (40) einen Längslastbewegungsgrößen-Sensor zum Erfassen einer Längsbewegungsgröße einer Fahrzeuglast aufweist und wobei die Reifendruck-Zustandsgrößen-Abschätzeinrichtung eine Reifendruckabnormität-Bestimmungseinrichtung zum Abschätzen der Längsbewegungsgröße der Fahrzeuglast auf der Grundlage von Geschwindigkeitssignalen des vorderen Fahrzeugrades, die zu einem ersten Zeitpunkt vom Geschwindgkeitssensor für das vordere Rad ausgegeben wurden, und von Geschwindigkeitssignalen für das hintere Fahrzeugrad, die im Wesentlichen gleichzeitig mit dem ersten Zeitpunkt vom Geschwindigkeitssensor für das hintere Rad ausgegeben wurden, und zum Bestimmen, dass der Reifendruck von einem der vorderen und hinteren mit Reifen versehenen Räder abnorm ist, wenn der abgeschätzte Wert von einem erfassten Wert durch den Längslastbewegungrößesensor um einen festgelegten Wert oder mehr als den festgelegten Wert verschieden ist, aufweist.

27. Eine Vorrichtung nach einem der Ansprüche 24 bis 26, wobei die Fahrzeugzustansdsgrößen-Erfassungsvorrichtung (40) einen Fahrzeugantriebskraft bezogenen Sensor zum Erfassen einer Fahrzeugantriebskraft oder einer physikalischen Größe, die sich auf die Fahrzeugantriebskraft bezieht, aufweist und wobei die Reifendruck-Zustandsgrößen-Abschätzeinichtung eine Reifendruckabnormität-Bestimmungseinrichtung zum Abschätzen der Fahrzeugradgeschwindigkeitssignals, das vom Radgeschwindigkeitssensor (10) ausgegeben wurde, und einer Fahrzeuggeschwindigkeit, die eine Fahrzeugfahrgeschwindigkeit darstellt, und zum Bestimmen, dass der Reifendruck des mit Reifen versehenen Rades abnorm ist, wenn der abgeschätzte Wert von einem erfassten Wert durch den Fahrzeugantriebskraft bezogenen Sensor um einen festgelegten Wert oder mehr als den festgelegten Wert verschieden ist, aufweist.

28. Eine Vorrichtung nach einem der Ansprüche 21 bis 27, wobei die Abschätzeinheit (20) eine Reifendruck-Zustandsgrößen-Abschätzeinrichtung zum Abschätzen der Reifendruck-Zustandsgröße für das mit Reifen versehene Rad auf der Grundlage einer Fahrzeugradlast und des Fahrzeugradgeschwindigkeitssignals zumindest einer Beziehung aus Reifendruck, einer Fahrzeugradlast, die auf das mit Reifen versehen Rad als eine Vertikallast wirkt, und der Fahrzeugradgeschwindigkeit bezüglich des mit Reifen versehenen Rades folgend aufweist.

29. Eine Vorrichtung nach Anspruch 21 oder 28, wobei die Fahrzeugzustandsgrößen-Erfassungsvorrichtung (40) einen Fahrzeugradlast bezogenen Sensor zum Erfassen der Fahrzeugradlast, die auf den mit Reifen versehenen Rad als Vertikallast wirkt, oder einer physikalischen Größe, die sich auf die Fahrzeugradlast bezieht, als die Fahrzeugzustandsgröße aufweist, und wobei die Abschätzeinheit (20) eine Reifendruck-Zustandsgrößen-Abschätzeinrichtung zum Abschätzen der Reifendruck-Zustandsgröße des mit Reifen versehenen Rades auf der Grundlage einer Beziehung zwischen einem Fahrzeugradlast bezogenen Signal, das vom Fahrzeugradlast bezogenen Sensor ausgegeben wurde, und dem Fahrzeugradgeschwindigkeitssignal, das vom Fahrzeugradgeschwindigkeitssensor (10) im Wesentlichen gleichzeitig bezüglich des gleichen mit Reifen versehenen Rades ausgegeben wurde, aufweist.

30. Eine Vorrichtung nach Anspruch 29, wobei die Reifendruck-Zustandsgrößen-Abschätzeinrichtung eine Reifendruckabnormität-Bestimmungseinrichtung zum Bestimmen, dass der Reifendruck des mit Reifen versehenen Rades abnorm ist, wenn die Beziehung zwischen dem Fahrzeugradlast bezogenen Signal und dem Fahrzeugradgeschwindigkeitssignal für das gleiche mit Reifen versehene Rad, nicht einer Beziehung in einem Zustand entspricht, in dem der Reifendruck des mit Reifen versehenen Rades als normal vorausgesetzt wird, aufweist.

31. Eine Vorrichtung nach einem der Ansprüche 21 bis 30, wobei das Fahrzeug durch ein Übertragen einer Rotationskraft einer Antriebsenergiequelle als eine Antriebskraft zu dem mit Reifen versehenen Rad über eine Antriebskraftübertragsvorrichtung mit einer änderbaren Geschwindigkeit angetrieben wird, wobei die Farhzeugzustandsgrößen-Erfassungsvorrichtung (40) ferner einen Fahrzeuggeschwindigkeitssensor zum Erfassen einer Fahrzeuggeschwindigkeit, die eine Fahrzeugfahrgeschwindigkeit darstellt, aufweist, wobei der Fahrzeugantriebskraft bezogene Sensor einen Rotationgsgeschwindigkeitssensor zum Erfassen einer Rotationsanzahl der Antriebsenergiequelle und einen Übersetzungsverhältnissensor zum Erfassen eines Übersetzungsverhältnisses der Antriebskraftübertragungsvorrichtung aufweist, wobei die Reifendruck-Zustandsgrößen-Abschätzeinrichtung eine Reifendruck-Abnormität-Bestimmungseinrichtung zum Berechnen der Fahrzeugradgeschwindigkeit, die durch den Fahrzeugradgeschwindigkeitssensor (10) erfasst werden soll, als eine Referenz-Fahrzeugradgeschwindigkeit in einem Zustand, in dem der Reifendruck normal ist, auf der Grundlage der Fahrzeuggeschwindigkeit, die durch den Fahrzeuggeschwindigkeitssensor erfasst wurde, der Antriebsenerigequellen-Drehzahl, die durch den Drehzahlsensor erfasst wurde, des Übersetzungsverhältnisses, das durch den Übersetzungsverhältnissensor erfasst wird, und eines festgelegten Schlupfwertes, der als ein Schlupfwert des mit Reifen versehenen Rades bezüglich einer Straßenoberfläche vorbestimmt wurde, und zum Bestimmen, dass der Reifendruck in einem Zustand abnorm ist, in dem eine momentane Fahrzeug-Radgeschwindigkeit, die durch den Radgeschwindigkeitssensor (10) erfasst wurde, sich von der berechneten Referenz-Fahrzeugradgeschwindigkeit um einen festgelegten Wert oder mehr als den festgelegten Wert unterscheidet, aufweist.

**32.** Eine Vorrichtung nach einem der Ansprüche 21 bis 31, wobei die Abschätzeinheit (20) aufweist

(a) eine Korrektureinrichtung zum Implementieren des Normalisierprozesses durch Korrigieren von zumindest einem der Werte Fahrzeugradgeschwindigkeitssignal, das vom Radgeschwindigkeitssensor (10) ausgegeben wurde, und berechneter Wert auf der Grundlage des Fahrzeugradgeschwindigkeitssignals auf der Grundlage einer Fahrzeugradlast, die auf das mit Reifen versehene Rad als eine Vertikallast wirkt, während jedes Fahrzeugfahrzeitraums, und
(b) eine Initialisiereinrichtung zum Implementieren des Normalisierprozesses durch Initialisieren eines Zustands der Korrektur, die während des gleichen Fahrzeugfahrzeitraums ausgeführt werden soll, auf der Grundlage der Fahrzeugradlast zu einer Referenzzeit während jedes Fahrzeugfahrzeitraums.

**33.** Eine Vorrichtung nach Anspruch 32, wobei die Fahrzeugzustandsgrößen-Erfassungsvorrichtung (40) einen Fahrzeugradlast bezogenen Sensor zum Erfassen der Fahrzeugradlast oder einer physikalischen Größe, die sich auf die Fahrzeugradlast bezieht, aufweist, wobei die Initialisiereinrichtung eine Einstelleinrichtung zum Einstellen einer momentanen Fahrzeugradlast zum Beginn eines jeden Fahrzeugfahrzeitraums als eine Referenz-Fahrzeugradlast auf der Grundlage eines Fahrzeugzustandsgrößen-Signals, das vom Fahrzeugradlast bezogenen Sensor ausgegeben wurde, aufweist und wobei die Korrektureinrichtung eine Einrichtung zum Korrigieren zumindest eines der Wert aus Fahrzeugradgeschwindigkeitssignal, das vom Radgeschwindigkeitssensor (10) ausgegeben wurde, und dem berechneten Wert auf der Grundlage des Fahrzeugradgeschwindigkeitssignals auf der Grundlage des Fahrzeugzustandsgrößensignals, das vom Fahrzeugradlast bezogenen Sensor ausgegeben wurde, und auf der Grundlage einer Abweichung einer momentanen Fahrzeugradlast, die aufeinanderfolgend während des gleichen Fahrzeugfahrzeitraums aus der festgelegten Referenz-Fahrzeugradlast erhalten wurde, aufweist.

**34.** Eine Vorrichtung zum Abschätzen eines Reifenzustands, die in einem Fahrzeug untergebracht ist, das mit einem mit Reifen versehenen Rad ausgestattet ist, bei dem ein Innenraum eines Reifen, der an einem Rad befestigt ist, mit Luft unter Druck gefüllt ist, die aufweist:

einen Radgeschwindigkeitssensor (10) zum Erfassen einer Fahrzeugradgeschwindigkeit, die eine Winkelgeschwindigkeit des mit Reifen versehenen Rades darstellt, und zum Ausgeben eines Fahrzeugradgeschwindigkeitssignals, das der Fahrzeugradgeschwindigkeit entspricht,
eine Fahrzeugzustandsgrößen-Erfassungsvorrichtung (40) zum Erfassen einer Fahrzeugzustandsgröße und zum Ausgeben eines Fahrzeugzustandsgrößensignals, das der Fahrzeugzustandsgröße entspricht, und
eine Abschätzeinheit (20) zum Abschätzen des Reifenzustands auf der Grundlage des Fahrzeugradgeschwindigkeitssignals, das vom Radgeschwindigkeitssensor (10) ausgegeben wurde,

wobei die Abschätzeinheit (20) einen Normalisierprozess zum Normalisieren einer Abschätzung des Reifenzustands unter Verwendung des Fahrzeugradgeschwindigkeitssignals auf der Grundlage des Fahrzeugzustandsgrößensignals, das von der Fahrzeugzustandsgrößen-Erfassungsvorrichtung (40) ausgegeben wurde, implementiert, und wobei die Abschätzeinheit (20) eine Zustandsgröße eines Reifendrucks abschätzt, die einen Luftdruck des Reifens als den Reifenzustand darstellt, **dadurch gekennzeichnet, dass** die Abschätzeinheit (20) aufweist

(a) eine Korrektureinheit zum Implementieren des Normalisierungsprozesses durch das Korrigieren zumindest eines der Größen Fahrzeugradgeschwindigkeitssignale, die vom Radgeschwindigkeitssensor (10) ausgegeben wurden, und berechneter Wert auf der Grundlage der Fahrzeugradgeschwindigkeitssignals auf der Grundlage einer Fahrzeugradlast, die auf das mit Reifen versehen Rad als eine Vertikallast wirk, während jedes Fahrzeugfahrzeitraums, und
(b) eine Initialisiereinrichtung zum Implementieren des Normalisierprozesses durch das Initialisieren eines Zustands der Korrektur, die während des gleichen Fahrzeugfahrzeitraums ausgeführt werden soll, auf der Grundlage der Fahrzeugradlast zu einem Referenzzeitpunkt während jedes Fahrzeugfahrzeitraums.

**35.** Eine Vorrichtung nach Anspruch 34, wobei die Abschätzeinheit (20) die Reifendruckzustandsgröße auf der Grundlage des Fahrzeugradgeschwindigkeitssignals zumindest einer Beziehung zwischen dem Reifendruck und der Fahrzeugradgeschwindigkeit bezüglich des gleichen mit Reifen versehenen Rades folgend abschätzt.

**36.** Eine Vorrichtung nach Anspruch 34 oder 35, wobei eine Vielzahl an mit Reifen versehenen Rädern für das Fahrzeug vorgesehen ist, eine Vielzahl an Radgeschwindigkeitssensor (10) für die jeweiligen mit Reifen versehenen Räder vorgesehen ist und die Abschätzeinheit (20) eine Reifendruckzustandsgrößen-Abschätzeinrichtung zum Abschätzen der Reifendruckzustandsgröße von jedem mit Reifen versehenen Rad auf der Grundlage der gegenseiten Beziehung zwischen der Vielzahl an Fahrzeugradgeschwindigkeitssignale, die jeweils von den Radgeschwindigkeitssensoren (20) im Wesentlichen zur gleichen Zeit ausgegeben werden, aufweist.

**37.** Eine Vorrichtung nach Anspruch 34 oder 35, wobei die Abschätzeinheit (20) eine Reifendruck-Zustandsgrößen-Abschätzeinrichtung zum Abschätzen der Reifendruck-Zustandsgröße des mit Reifen versehenen Rades auf der Grundlage einer Beziehung zwischen einem Wert, der durch die Fahrzeugzustandsgrößen-Erfassungsvorrichtung (40) erfasst wurde, und einem Wert, der auf der Grundlage des Fahrzeugradgeschwindigkeitssignals abgeschätzt wurde, das vom Radgeschwindigkeitssensor (10) im Wesentlichen zum gleichen Zeitpunkt bezüglich des gleichen Typs von Fahrzeugzustandsgröße ausgegeben wurde, aufweist, wobei die Reifendruck-Zustandsgrößen-Abschätzeinrichtung eine Reifendruck-Abnormität-Bestimmungseinrichtung zum Bestimmen, dass der Reifendruck des mit Reifen versehenen Rades abnorm ist, wenn der erfasst Wert und der abgeschätzte Wert bezüglich des gleichen Typs von Fahrzeugzustandsgröße einander nicht entsprechen, aufweist.

**38.** Eine Vorrichtung nach einem der Ansprüche 34 bis 37, wobei die Abschätzeinheit (20) eine Reifendruck-Zustandsgrößen-Abschätzeinrichtung zum Abschätzen der Reifendruck-Zustandsgröße für das mit Reifen versehene Rad auf der Grundlage einer Fahrzeugradlast und des Fahrzeugradgeschwindigkeitssignals zumindest einer Beziehung zwischen dem Reifendruck, einer Fahrzeugradlast, die auf das mit Reifen versehene Rad als eine vertikale Last wirkt, und der Fahrzeugradgeschwindigkeit bezüglich des mit Reifen versehenen Rades folgend aufweist.

**39.** Eine Vorrichtung nach Anspruch 34 oder 38, wobei die Fahrzeugzustandsgrößen-Erfassungsvorrichtung (40) einen Fahrzeugradlast bezogenen Sensor zum Erfassen der Fahrzeugradlast, die auf das mit Reifen versehene Rad als die Vertikallast wirkt, oder einer physikalischen Größe, die sich auf die Fahrzeugradlast bezieht, als die Fahrzeugzustandsgröße aufweist, und wobei die Abschätzeinheit (20) eine Reifendruckzustandsgrößen-Abschätzeinrichtung zum Abschätzen der Reifendruck-Zustandsgröße des mit Reifen versehenen Rades auf der Grundlage einer Beziehung zwischen einem Fahrzeugradlast bezogenem Signal, das vom Fahrzeugradlast bezogenen Sensor ausgegeben wurde, und dem Fahrzeugradgeschwindigkeitssingal, das vom Fahrzeugradgeschwindigkeitssensor (10) im Wesentlichen zum gleichen Zeitpunkt bezüglich dem gleichen mit Reifen versehenen Rad ausgegeben wurde, aufweist.

**40.** Eine Vorrichtung nach Anspruch 39, wobei die Reifendruck-Zustandsgrößen-Abschätzeinrichtung eine Reifendruck-Abnormität-Bestimmungseinrichtung zum Bestimmen, dass der Reifendruck des mit Reifen versehenen Rades abnorm ist, wenn die Beziehung zwischen dem Fahrzeugradlast bezogenen Signal und dem Fahrzeugradgeschwindigkeitssignal für das gleiche mit Reifen versehene Rad einer Beziehung in einem Zustand nicht entspricht, in dem der Reifendruck des mit Reifen versehenen Rades als normal vorausgesetzt wird, aufweist.

**41.** Eine Vorrichtung nach Anspruch 34, wobei die Fahrzeugzustandsgrößen-Erfassungsvorrichtung (40) einen Fahrzeugradlast bezogenen Sensor zum Erfassen der Fahrzeugradlast oder einer physikalischen Größe, die sich auf die Fahrzeugradlast bezieht, aufweist, wobei die Initialisiereinrichtung eine Einstelleinrichtung zum Einstellen einer momentanen Fahrzeugradlast zu Beginn von jedem Fahrzeugfahrzeitpunkt als eine Referenz-Fahrzeugradlast auf der Grundlage eines Fahrzeugzustandsgrößen-Signals, das vom Fahrzeugradlast bezogenen Sensor ausgegeben wurde, aufweist, und wobei die Korrektureinrichtung eine Einrichtung zum Korrigieren von zumindest einem der Werte Fahrzeugradgeschwindigkeitssignal, das vom Radgeschwindigkeitssensor (10) ausgegeben wurde, und dem berechneten Wert auf der Grundlage des Fahrzeugradgeschwindigkeitssignals auf der Grundlage des Fahrzeugzustandsgrößensignals, das vom Fahrzeugradlast bezogenen Sensor ausgegeben wurde, und auf der Grundlage einer Abweichung einer momentanen Fahrzeugradlast, die während der gleichen Fahrzeugfahrzeit aufeinanderfolgend erhalten wurde, von der eingestellten Referenzfahrzeugradlast aufweist.

**42.** Eine Vorrichtung zum Bestimmen, ob ein Reifen in einem Fahrzeug, das mit einem mit Reifen versehenen Rad ausgestattet ist, abnorm untergebracht ist oder nicht, bei dem ein Innenraum des Reifens, der an einem Rad befestigt ist, mit Luft unter Druck gefüllt ist, die aufweist:

einen Sensor für eine Reifenabnormität bezogene Größe zum Erfassen einer Reifenabnormität bezogenen Größe, die zur Verfügung steht, um zu bestimmen, ob er Reifen abnorm ist oder nicht,

eine Reifenabnormität-Bestimmungseinheit zum Bestimmen, ob der Reifen abnorm ist oder nicht, indem ein Referenzwert mit einem erfassten Wert der Reifenabnormität bezogenen Größe oder einem Vergleichswert, der einen berechneten Wert auf der Grundlage des erfassten Wertes der Reifenabnormität bezogenen Größe darstellt, verglichen wird,

**dadurch gekennzeichnet, dass**
die Reifenabnormitätbestimmungseinheit den Vergleich auf der Grundlage einer Reifenlast implementiert, und
der Referenzwert als eine Kombination eines Reifenlastansprech-Referenzwertes, der vorbestimmt ist, um sich im Ansprechen auf eine Erhöhung der Reifenlast zu erhöhen, eines Reifenlast-Nichtansprech-Referenzwertes, der vorbestimmt ist, um sich im Ansprechen auf eine Änderung bei der Reifenlast nicht zu ändern, definiert ist, und wobei der Referenzwert definiert ist, um den Reifenlast-Ansprech-Referenzwert unter einer ersten Teilzone auszuwählen, und der definiert ist, um den Reifenlast-Nichtansprech-Referenzwert unter der zweiten Teilzone außerhalb eines gesamten Bereiches, in dem die Reifenlast verändert werden kann, auszuwählen.

43. Eine Vorrichtung nach Anspruch 42, wobei der Referenzwert vorbestimmt ist, um sich aufeinanderfolgend oder schrittweise im Ansprechen auf einer Erhöhung der Reifenlast zu erhöhen.

44. Eine Vorrichtung nach Anspruch 42, wobei eine Beziehung zwischen dem Reifenlast-Ansprech-Referenzwert und dem Reifenlast-Nichtansprech-Referenzwert definiert ist, um den Reifenlast-Ansprech-Referenzwert, der als der Referenzwert ausgewählt wurde, größer als den Reifenlast-Nichtansprech-Referenzwert, der nicht ausgewählt wurde, als den Referenzwert unter der ersten Teilzone einzustellen und um den Reifenlast-Nichtansprech-Referenzwert, der als der Referenzwert ausgewählt wurde, größer als den Reifenlast-Ansprech-Referenzwert, der nicht ausgewählt wurde, als den Referenzwert unter der zweiten Teilzone einzustellen.

45. Eine Vorrichtung nach einem der Ansprüche 42 bis 44, wobei die erste Teilzone an einer Seite, an der die Reifenlast bezüglich der zweiten Teilzone erhöht ist, vorbestimmt wird.

46. Eine Vorrichtung zum Bestimmen, ob ein Reifen abnorm ist oder nicht, der in einem Fahrzeug untergebracht ist, das mit einem mit Reifen versehenen Rad ausgestattet ist, bei dem ein Innenraum des Reifens, der an einem Rad befestigt ist, mit Luft unter Druck gefüllt ist, die aufweist:

einen Sensor für eine Reifenabnormität bezogene Größe zum Erfassen einer Reifenabnormität bezogenen Größe, die eine physikalische Größe darstellt, die zur Verfügung steht, um zu bestimmen, ob der Reifen abnorm ist oder nicht, und
eine Reifenabnormität-Bestimmungseinheit zum Berechnen eines Vergleichswertes, der mit einem Referenzwert zu vergleichen ist, um zu bestimmen, ob der Reifen abnorm ist oder nicht, und
zum Bestimmen, ob der Reifen abnorm ist, indem der berechnete Vergleichswert mit dem Referenzwert auf der Grundlage eines erfassten Wertes der Reifenabnormität bezogenen Größe durch den Sensor für die Reifenabnormität bezogene Größe verglichen wird, **dadurch gekennzeichnet, dass**
die Reifenabnormität-Bestimmungseinheit unter einer ersten Fahrzeugumgebung mit einer hohen Genauigkeit und unter einer zweiten Fahrzeugumgebung mit einer niedrigen Genauigkeit bestimmt, wenn der Reifen abnorm ist, und
die Reifenabnormität-Bestimmungseinheit den Vergleichswert unter der zweiten Fahrzeugumgebung auf der Grundlage zumindest eines Vergleichswertes, der unter der vorhergehenden ersten Fahrzeugumgebung berechnet wurde, berechnet.

47. Eine Vorrichtung nach Anspruch 46, wobei die zweite Fahrzeugumgebung vorbestimmt ist, um an einer Seite zu sein, bei der eine Reifenlast bezüglich der ersten Fahrzeugumgebung erhöht ist und wobei die Reifenabnormität-Bestimmungseinheit eine Bestimmungseinrichtung zum Bestimmen, dass die Reifenlast größer als normal unter der zweiten Fahrzeugumgebung ist, wenn die Reifenlast den Referenzwert überschreitet, aufweist.

48. Eine Vorrichtung nach Anspruch 46 oder 47, wobei die Reifenabnormität-Bestimmungseinheit eine Vergleichseinrichtung zum Vergleichen des Referenzwertes mit dem erfassten Wert der auf die Reifenabnormität bezogenen Größe durch den Sensor für die Reifenabnormität bezogene Größe oder dem Vergleichswert eines berechneten Wertes auf der Grundlage des erfassten Wertes der Reifenabnormität bezogenen Größe durch den Sensor für die Reifenabnormität bezogene Größe auf der Grundlage der Reifenlast aufweist.

**Revendications**

1. Appareil pour estimer une condition d'un pneumatique reçu dans un véhicule muni d'une roue à bandage, dans lequel un espace intérieur d'un pneumatique fixé à une roue est rempli d'air sous pression, comprenant :

   un capteur de vitesse de roue (10) pour détecter une vitesse de roue du véhicule représentant une vitesse angulaire de la roue à bandage et pour sortir un signal de vitesse de roue de véhicule correspondant à la vitesse de la roue du véhicule ; et

   un dispositif de détection de quantité de condition de véhicule (40) pour détecter une quantité de condition de véhicule et pour sortir un signal de quantité de condition de véhicule correspondant à la quantité de condition de véhicule ; et

   une unité d'estimation (20) pour estimer la condition de pneumatique sur la base du signal de vitesse de roue de véhicule sorti du capteur de vitesse de roue (10),

   dans lequel l'unité d'estimation (20) implémente un procédé de normalisation pour normaliser une estimation de la condition de pneumatique en utilisant le signal de vitesse de roue de véhicule sur la base du signal de quantité de condition de véhicule sorti du dispositif de détection de quantité de condition de véhicule (40), et dans lequel l'unité d'estimation (20) estime une quantité de condition de pression de pneumatique représentant une pression d'air du pneumatique comme condition de pneumatique, **caractérisée en ce que** l'unité d'estimation (20) implémente le procédé de normalisation sous une condition de diminution de précision de réflexion dans lequel la pression du pneumatique de la roue à bandage ne peut pas être reflétée précisément sur la vitesse de roue de véhicule.

2. Appareil selon la revendication 1, dans lequel l'unité d'estimation (20) estime la quantité de condition de pression de pneumatique sur la base du signal de vitesse de roue du véhicule suivant au moins une relation entre la pression du pneumatique et la vitesse de roue du véhicule concernant la même roue à bandage.

3. Appareil selon la revendication 1 ou 2, dans lequel plusieurs roues à bandage sont prévues pour le véhicule, plusieurs capteurs de vitesse de roue (10) sont prévus pour les roues à bandage respectives, et l'unité d'estimation (20) inclut un moyen d'estimation de quantité de condition de pression de pneumatique pour estimer la quantité de condition de pression de pneumatique de chaque roue à bandage sur la base des relations mutuelles entre plusieurs signaux de vitesse de roue du véhicule sortis respectivement des capteurs de vitesse de roue (10) sensiblement au même instant.

4. Appareil selon la revendication 1 ou 2, dans lequel l'unité d'estimation (20) inclut un moyen d'estimation de quantité de condition de pression de pneumatique pour estimer la quantité de condition de pression de pneumatique d'une roue à bandage sur la base de la relation entre la valeur détectée par le dispositif de détection de quantité de condition de véhicule (40) et une valeur estimée sur la base du vitesse de roue de véhicule sorti du capteur de vitesse de roue (10) sensiblement au même instant concernant la quantité de condition de véhicule du même type.

5. Appareil selon la revendication 4, dans lequel le moyen d'estimation de quantité de condition de pression de pneumatique inclut un moyen de détermination d'anomalie de pression pneumatique pour déterminer que la pression de pneumatique de la roue à bandage est anormale lorsque la valeur détectée et la valeur estimée concernant la quantité de condition de véhicule du même type ne correspondent pas l'une à l'autre.

6. Appareil selon la revendication 1, dans lequel l'unité d'estimation (20) inclut un moyen d'estimation de quantité de condition de pression de pneumatique pour estimer la quantité de condition de pression de pneumatique pour la roue à bandage sur la base d'une charge de la roue du véhicule et du signal de vitesse de roue de véhicule suivant au moins une relation entre la pression du pneumatique, une charge de roue de véhicule agissant sur la roue à bandage comme charge verticale, et la vitesse de roue du véhicule concernant la roue à bandage.

7. Appareil selon la revendication 1 ou 6, dans lequel le dispositif de détection de quantité de condition de véhicule (40) inclut un capteur de relation de charge de roue de véhicule pour détecter la charge de roue de véhicule agissant sur la roue à bandage comme charge verticale ou une quantité physique est liée à la charge de la roue du véhicule comme quantité de condition du véhicule, et l'unité d'estimation (20) inclut un moyen d'estimation de quantité de condition de pression de pneumatique pour estimer la quantité de condition de pression de pneumatique de la roue à bandage sur la base de la relation entre le signal reliant la charge de la roue du véhicule sortie du capteur de relation de charge de roue de véhicule et du signal de vitesse de roue de véhicule sorti du capteur de vitesse de roue du véhicule (10) sensiblement au même instant concernant la même roue à bandage.

8. Appareil selon la revendication 7, dans lequel le moyen d'estimation de quantité de condition de pression de pneumatique inclut un moyen de détermination d'anomalie de pression de pneumatique pour déterminer que la pression de pneumatique de la roue à bandage est anormale lorsque la relation entre le signal de relation de charge de roue de véhicule et le signal de vitesse de roue de véhicule pour la même roue à bandage ne correspond pas à la relation dans un état où la pression de pneumatique de la roue à bandage est supposée être normale.

9. Appareil selon la revendication 1, dans lequel la condition de diminution de pression de réflexion inclut une condition dans laquelle un rayon de pneumatique à charge dynamique réelle ne peut pas être reflété précisément sur le signal de vitesse de roue de véhicule.

10. Appareil selon la revendication 1 ou 9, dans lequel la condition de diminution de pression de réflexion inclut une condition de déviation de charge de roue de véhicule réelle dans laquelle une valeur réelle de la charge de roue de véhicule agissant sur la roue à bandage comme charge verticale dévie d'une valeur normale de la valeur réelle par une quantité établie ou supérieure à la quantité établie, et l'unité d'estimation (20) inclut un moyen de traitement de normalisation pour implémenter le procédé de normalisation sous la condition de déviation de charge de roue de véhicule réelle.

11. Appareil selon la revendication 10, dans lequel le dispositif de détection de quantité de condition de véhicule (40) inclut un capteur de relation d'accélération latérale pour détecter une accélération latérale du véhicule ou une quantité physique liée à l'accélération latérale comme quantité de condition de véhicule, et le moyen de traitement de normalisation inclut un moyen de détermination de condition de déviation de charge de roue de véhicule réelle pour déterminer la condition de déviation de charge de roue de véhicule réelle sur la base d'un signal de quantité de condition de véhicule sorti du capteur de relation d'accélération latérale.

12. Appareil selon la revendication 10 ou 11, dans lequel le dispositif de détection de quantité de condition de véhicule (40) inclut un capteur de relation d'accélération longitudinale pour détecter une accélération longitudinale du véhicule ou une quantité physique liée à celle-ci comme quantité de condition de véhicule, et le moyen de traitement de normalisation inclut un moyen de détermination de condition de déviation de charge de roue de véhicule réelle pour déterminer la condition de déviation de charge de roue de véhicule réelle sur la base d'un signal de quantité de condition de véhicule sorti du capteur de relation d'accélération longitudinale.

13. Appareil pour estimer une condition d'un pneumatique reçu dans un véhicule muni d'une roue à bandage, dans lequel un espace interne d'un pneumatique fixé à une roue est rempli d'air sous pression selon l'une quelconque des revendications 1, 10, 11 ou 12, dans lequel la condition de diminution de pression de réflexion inclut une condition de valeur de glissement importante dans laquelle une valeur de glissement de la roue à bandage par rapport à une surface routière est égale à ou au-dessus d'une valeur établie, et l'unité d'estimation (20) inclut un moyen de traitement de normalisation pour implémenter le procédé de normalisation sous la condition de valeur de glissement importante.

14. Appareil selon la revendication 13, dans lequel le dispositif de détection de condition du véhicule inclut un capteur de relation d'accélération longitudinale pour détecter une accélération longitudinale du véhicule ou une quantité physique liée à l'accélération longitudinale du véhicule comme quantité de condition de véhicule, et le moyen de traitement de normalisation inclut un moyen de détermination de condition de valeur de glissement importante pour déterminer la condition de valeur de glissement importante sur la base d'un signal de quantité de condition de véhicule sorti du capteur de relation d'accélération longitudinale.

15. Appareil selon la revendication 12 ou 13, dans lequel le dispositif de détection de condition du véhicule inclut un capteur de relation de force propulsion pour détecter une force de propulsion de la roue à bandage ou une quantité physique se rapportant à celle-ci comme quantité de condition de véhicule, et le moyen de traitement de normalisation inclut un moyen de détermination de condition de valeur de glissement importante pour déterminer la condition de valeur de glissement importante sur la base d'un signal de quantité de condition de véhicule sorti du capteur de relation de force de propulsion.

16. Appareil selon l'une quelconque des revendications 13 à 15, dans lequel le dispositif de détection de condition de véhicule inclut un capteur de relation de vitesse de véhicule pour détecter une vitesse de véhicule représentant une vitesse de déplacement de véhicule ou une quantité physique se rapportant à la vitesse de déplacement de véhicule, et le moyen de traitement de normalisation inclut un moyen de détermination de condition de valeur de glissement importante pour déterminer la condition de valeur de glissement importante sur la base d'un signal de quantité de condition de véhicule sorti du capteur de relation de véhicule et le signal de vitesse de roue de véhicule sorti du capteur de vitesse de roue (10).

17. Appareil selon l'une quelconque des revendications 9 à 16, dans lequel l'unité d'estimation (20) inclut un moyen d'invalidation pour implémenter le procédé de normalisation en invalidant sensiblement le signal de vitesse de roue de véhicule sorti du capteur de vitesse de roue (10) pour estimer la quantité de condition de pression de pneumatique sous la condition de diminution de pression de réflexion.

18. Appareil selon l'une quelconque des revendications 1 à 17, dans lequel l'unité d'estimation (20) inclut un moyen de correction pour implémenter le procédé de normalisation en corrigeant au moins l'un quelconque du signal de vitesse de roue de véhicule sorti du capteur de vitesse de roue (10) et une valeur calculée sur la base du vitesse de roue de véhicule sur la base du signal de quantité de condition de véhicule sorti du dispositif de détection de quantité de condition de véhicule (40) pour normaliser une estimation de la quantité de condition de pression de pneumatique sous la condition de diminution de pression de réflexion.

19. Appareil selon la revendication 18, dans lequel le moyen de correction inclut un moyen pour corriger au moins l'un quelconque du signal de vitesse de roue de véhicule sorti du capteur de vitesse de roue (10) et de la valeur calculée basée sur le signal de vitesse de roue de véhicule basé sur au moins l'un quelconque de la vitesse de véhicule représentant une vitesse de déplacement de véhicule ou une quantité physique liée à la vitesse de déplacement de véhicule, une charge de roue de véhicule agissant sur la roue à bandage comme charge verticale ou une quantité physique liée à la charge de roue de véhicule, et une valeur de glissement de la roue à bandage par rapport à une surface routière et une quantité physique liée à la valeur de glissement.

20. Appareil selon la revendication 18, dans lequel le dispositif de détection de quantité de condition de véhicule (40) détecte au moins l'un quelconque de la vitesse du véhicule ou d'une quantité physique liée à la vitesse du véhicule, d'une charge de roue de véhicule agissant sur la roue à bandage comme charge verticale ou une quantité physique liée à la charge de la roue du véhicule, et d'une valeur de glissement de la roue à bandage par rapport à une surface routière ou une quantité physique liée à la valeur de glissement comme quantité de condition de véhicule, et le moyen de correction inclut un moyen pour corrigera au moins l'un quelconque du signal de vitesse de roue de véhicule sorti du capteur de vitesse de roue (10) et de la valeur calculée basée sur le signal de vitesse de roue de véhicule basé sur au moins l'un quelconque des quantités de condition de véhicule détectées par le dispositif de détection de quantité de condition de véhicule (40).

21. Appareil pour estimer une condition d'un pneumatique reçu dans un véhicule muni d'une roue à bandage, dans lequel un espace interne d'un pneumatique fixé à une roue est rempli d'air sous pression, comprenant :

un capteur de vitesse de roue (10) pour détecter une vitesse de roue du véhicule représentant une vitesse angulaire de la roue à bandage et pour sortir un signal de vitesse de roue de véhicule correspondant à la vitesse de roue du véhicule ;

un dispositif de détection de quantité de condition de véhicule (40) pour détecter une quantité de condition de véhicule et pour sortir un signal de quantité de condition de véhicule correspondant à la quantité de condition de véhicule ; et

une unité d'estimation (20) pour estimer la condition de pneumatique sur la base du vitesse de roue de véhicule sorti du capteur de vitesse de roue (10),

dans lequel l'unité d'estimation (20) implémente un procédé de normalisation pour normaliser une estimation de la condition de pneumatique en utilisant le signal de vitesse de roue de véhicule basé sur le signal de quantité de condition de véhicule sorti du dispositif de détection de quantité de condition de véhicule (40), et dans lequel l'unité d'estimation (20) estime une quantité de condition de pression d'un pneumatique représentant une pression de l'air du pneumatique comme la condition de pneumatique, **caractérisé en ce que** l'unité d'estimation (20) inclut un moyen d'estimation de quantité de condition de pression de pneumatique pour estimer la quantité de condition de pression de pneumatique de la roue à bandage sur la base de la relation entre la valeur détectée par le dispositif de détection de quantité de condition de véhicule (40) et une valeur estimée sur la base du vitesse de roue de véhicule sorti du capteur de vitesse de roue (10) sensiblement au même instant concernant la quantité de condition de véhicule du même type.

22. Appareil selon la revendication 21, dans lequel l'unité d'estimation (20) estime la quantité de condition de pression de pneumatique sur la base du vitesse de roue de véhicule suivant au moins une relation entre la pression de pneumatique et la vitesse de roue du véhicule concernant la même roue à bandage.

23. Appareil selon la revendication 21 ou 22, dans lequel plusieurs roues à bandage sont prévues pour le véhicule, plusieurs capteurs de vitesse de roue (10) sont prévus pour les roues à bandage respectives et l'unité d'estimation (20) inclut un moyen d'estimation de quantité de condition de pression de pneumatique pour estimer la quantité de condition de pression de pneumatique de chaque roue à bandage sur la base des relations mutuelles entre les plusieurs signaux de vitesse de roue de véhicule sortis respectivement des capteurs de vitesse de roue (10) sensiblement au même instant.

24. Appareil selon l'une quelconque des revendications 21 à 23, dans lequel le moyen d'estimation de quantité de condition de pression de pneumatique inclut un moyen de détermination d'anomalie de pression de pneumatique pour déterminer que la pression de pneumatique de la roue à bandage est anormale lorsque la valeur détectée et la valeur estimée concernant la quantité de condition de véhicule du même type ne correspondent pas l'un à l'autre.

25. Appareil selon la revendication 24, dans lequel les plusieurs roues à bandage incluent des roues à bandage gauche et droite respectivement reçues au niveau des côtés droit et gauche du véhicule, les plusieurs capteurs de vitesse de roue (10) incluent un capteur de vitesse de roue droite (10) muni d'une roue à bandage droite et un capteur de vitesse de roue gauche (10) muni d'une roue à bandage gauche, le dispositif de détecte de déplacement de charge latérale pour détecter une quantité de déplacement latéral d'une charge de véhicule, et le moyen d'estimation de quantité de condition de pression de pneumatique inclut un moyen de détermination d'anomalie de pression de pneumatique pour estimer la quantité de déplacement latéral de la charge du véhicule basée sur les signaux de vitesse de roue de véhicule gauche sortis à un premier cadencement à partir du capteur de vitesse de roue gauche et les signaux de vitesse de roue de véhicule droite sortis sensiblement au même cadencement que le premier cadencement du capteur de vitesse de roue droite et pour déterminer que la pression de pneumatique de l'une quelconque des roues à bandage droite et gauche est anormale lorsque la valeur estimée est différente d'une valeur détectée par le capteur de quantité de déplacement de charge latérale d'une valeur établie ou plus qu'une valeur établie.

26. Appareil selon la revendication 24, dans lequel les plusieurs roues à bandage incluent des roues à bandage avant et arrière reçues respectivement au niveau des côtés avant et arrière du véhicule, les plusieurs capteurs de vitesse de roue (10) incluent un capteur de vitesse de roue avant muni de la roue à bandage avant et un capteur de vitesse de roue arrière muni de la roue à bandage arrière, le dispositif de détection de quantité de condition de véhicule (40) inclut un capteur de quantité de déplacement de charge longitudinale pour détecter une quantité de déplacement longitudinal d'une charge de véhicule, et le moyen d'estimation de quantité de condition de pression de pneumatique inclut un moyen de détermination d'anomalie de pression de pneumatique pour estimer la quantité de déplacement longitudinal de la charge du véhicule sur la base des signaux de vitesse de roue de véhicule avant sortis à un premier cadencement depuis le capteur de vitesse de roue avant, et des signaux de vitesse de roue de véhicule arrière sortis sensiblement au même cadencement que le premier cadencement depuis le capteur de vitesse de roue arrière et pour déterminer que la pression de pneumatique de l'une quelconque des roues à bandage avant et arrière est anormale lorsque la valeur estimée est différente d'une valeur détectée par le capteur de quantité de déplacement de charge longitudinale d'une valeur établie ou plus qu'une valeur établie.

27. Appareil selon l'une quelconque des revendications 24 à 26, dans lequel le dispositif de détection de quantité de condition de véhicule (40) inclut un capteur de relation de force de propulsion de véhicule pour détecter une force de propulsion de véhicule ou une quantité physique liée à la force de propulsion de véhicule, et le moyen d'estimation de quantité de condition de pression de pneumatique inclut un moyen de détermination d'anomalie de pression de pneumatique pour estimer la force de propulsion de véhicule basée sur le signal de vitesse de roue de véhicule sorti du capteur de vitesse de roue (10) et une vitesse de véhicule représentant une vitesse de déplacement de véhicule et pour déterminer que la pression de pneumatique de la roue à bandage est anormale lorsque la valeur estimée est différente d'une valeur détectée par le capteur de relation de force de propulsion de véhicule d'une valeur établie ou plus qu'une valeur établie.

28. Appareil selon l'une quelconque des revendications 21 à 27, dans lequel l'unité d'estimation (20) inclut un moyen d'estimation de quantité de condition de pression de pneumatique pour estimer la quantité de condition de pression de pneumatique pour la roue à bandage sur la base d'une charge de roue de véhicule et du signal de vitesse de roue de véhicule suivant au moins une relation entre la pression de pneumatique, une charge de roue de véhicule agissant sur la roue à bandage comme charge verticale, et la vitesse de roue du véhicule concernant la roue à bandage.

29. Appareil selon la revendication 21 ou 28, dans lequel le dispositif de détection de quantité de condition de véhicule (40) inclut un capteur de relation de charge de roue de véhicule pour détecter la charge de roue de véhicule agissant sur la roue à bandage comme charge verticale ou une quantité physique liée à la charge de roue de véhicule comme quantité de condition de véhicule, et l'unité d'estimation (20) inclut un moyen d'estimation de quantité de condition de pression de pneumatique pour estimer la quantité de condition de pression de pneumatique de la roue à bandage sur la base de la relation entre un signal de relation de charge de roue de véhicule sorti du capteur de relation de charge de roue de véhicule et le signal de vitesse de roue de véhicule sorti du capteur de vitesse de roue de véhicule (10) sensiblement au même instant concernant la même roue à bandage.

30. Appareil selon la revendication 29, dans lequel le moyen d'estimation de quantité de condition de pression de pneumatique inclut un moyen de détermination d'anomalie de pression de pneumatique pour déterminer que la pression de pneumatique de la roue à bandage est anormale lorsque la relation entre le signal de relation de charge de roue de véhicule et le signal de vitesse de roue de véhicule pour la même roue à bandage ne correspond pas à une relation dans un état où la pression de pneumatique de la roue à bandage est supposée être normale.

31. Appareil selon l'une quelconque des revendications 21 à 30, dans lequel le véhicule est propulsé en transmettant une force de rotation d'une source de transmission de propulsion comme force de propulsion à la roue à bandage via un dispositif de transmission de force de propulsion avec une vitesse variable, le dispositif de détection de quantité de condition de véhicule (40) inclut, en outre, un capteur de vitesse de véhicule pour détecter une vitesse de véhicule représentant une vitesse de déplacement de véhicule, le capteur de relation de force de propulsion de véhicule inclut un capteur de vitesse de rotation pour détecter un nombre de rotations de la source de puissance de propulsion, et un capteur de rapport de vitesse pour détecter un rapport de vitesse du dispositif de transmission de force de propulsion, le moyen d'estimation de quantité de condition de pression de pneumatique inclut un moyen de détermination d'anomalie de pression de pneumatique pour calculer la vitesse de roue du véhicule qui doit être détectée par le capteur de vitesse de roue de véhicule (10) comme vitesse de roue du véhicule de revendication dans un état où la pression de pneumatique est normale sur la base de la vitesse de véhicule détectée par le capteur de vitesse de véhicule, le nombre de rotations de la source de puissance de propulsion détectée par le capteur de vitesse de rotation, le rapport de vitesse détecté par le capteur de rapport de vitesse, et une valeur de glissement établie prédéterminée comme valeur de glissement de la roue à bandage par rapport à une surface routière et pour déterminer que la pression de pneumatique est anormale dans un état où la vitesse de roue du véhicule réelle détectée par le capteur de vitesse de roue (10) est différente de la vitesse de roue de véhicule de référence calculée d'une valeur établie ou plus qu'une valeur établie.

32. Appareil selon l'une quelconque des revendications 21 à 31, dans lequel l'unité d'estimation (20) inclut

    (a) un moyen de correction pour implémenter le procédé de normalisation en corrigeant au moins l'un quelconque du signal de vitesse de roue de véhicule sorti du capteur de vitesse de roue (10) et d'une valeur calculée basée sur le signal de vitesse de roue de véhicule basé sur une charge de roue de véhicule agissant sur la roue à bandage comme charge verticale pendant chaque temps de déplacement de véhicule ; et

    (b) un moyen d'initialisation pour implémenter le procédé de normalisation en initialisant une condition de la correction qui doit être effectuée pendant le même temps de déplacement de véhicule basé sur la charge de roue de véhicule à un temps de référence pendant chaque temps de déplacement de véhicule.

33. Appareil selon la revendication 32, dans lequel le dispositif de détection de quantité de condition de véhicule (40) inclut un capteur de relation de charge de roue de véhicule pour détecter la charge de roue de véhicule ou une quantité physique liée à la charge de roue de véhicule, le moyen d'initialisation inclut un moyen d'établissement pour établir une charge de roue de véhicule réelle au début de chaque temps de déplacement de véhicule comme charge de roue de véhicule de référence basée sur un signal de quantité de condition de véhicule sorti du capteur de relation de charge de roue de véhicule, et le moyen de correction inclut un moyen pour corriger au moins l'un quelconque du signal de vitesse de roue de véhicule sorti du capteur de vitesse de roue (10) et la valeur calculée basée sur le signal de vitesse de roue de véhicule basé sur le signal de quantité de condition de véhicule sorti du capteur de relation de charge de roue de véhicule et basé sur une déviation d'une charge de roue de véhicule réelle obtenue séquentiellement pendant le même temps de déplacement de véhicule à partir de la charge de roue de véhicule de référence établie.

34. Appareil pour estimer une condition d'un pneumatique reçu dans un véhicule muni d'une roue à bandage, dans lequel un espace interne d'un pneumatique fixé à une roue est rempli d'air sous pression, comprenant :

un capteur de vitesse de roue (10) pour détecter une vitesse de roue du véhicule représentant une vitesse angulaire de la roue à bandage et pour sortir un signal de vitesse de roue de véhicule correspondant à la vitesse de roue du véhicule ;

un dispositif de détection de quantité de condition de véhicule (40) pour détecter une quantité de condition de véhicule et pour sortir un signal de quantité de condition de véhicule correspondant à la quantité de condition de véhicule ; et

une unité d'estimation (20) pour estimer la condition de pneumatique sur la base du signal de vitesse de roue de véhicule sorti du capteur de vitesse de roue (10),

dans lequel l'unité d'estimation (20) implémente un procédé de normalisation pour normaliser une estimation de la condition de pneumatique en utilisant le signal de vitesse de roue de véhicule basé sur le signal de quantité de condition de véhicule sorti du dispositif de détection de quantité de condition de véhicule (40), et dans lequel l'unité d'estimation (20) estime une quantité de condition de la pression de pneumatique représentant une pression de l'air du pneumatique comme condition de pneumatique, **caractérisé en ce que** l'unité d'estimation (20) inclut

(a) un moyen de correction pour implémenter le procédé de normalisation en corrigeant au moins l'un quelconque des signaux de vitesse de roue de véhicule sortis du capteur de vitesse de roue (10) et d'une valeur calculée basée sur le signal de vitesse de roue de véhicule basé sur une charge de roue de véhicule agissant sur la roue à bandage comme charge verticale pendant chaque temps de déplacement de véhicule ; et

(b) un moyen d'initialisation pour implémenter le procédé de normalisation en initialisant une condition de la correction qui doit être effectuée pendant le même temps de déplacement de véhicule basé sur la charge de roue de véhicule à un temps de référence pendant chaque temps de déplacement de véhicule.

35. Appareil selon la revendication 34, dans lequel l'unité d'estimation (20) estime la quantité de condition de pression de pneumatique sur la base du signal de vitesse de roue de véhicule suivant au moins une relation entre la pression de pneumatique et la vitesse de roue du véhicule concernant la même roue à bandage.

36. Appareil selon la revendication 34 ou 35, dans lequel plusieurs roues à bandage sont prévues pour le véhicule, plusieurs capteurs de vitesse de roue (10) sont prévus pour les roues à bandage respectives, et l'unité d'estimation (20) inclut un moyen d'estimation de quantité de condition de pression de pneumatique pour estimer la quantité de condition de pression de pneumatique de chaque roue à bandage sur la base des relations mutuelles entre les plusieurs signaux de vitesse de roue de véhicule sortis respectivement des capteurs de vitesse de roue (10) sensiblement au même instant.

37. Appareil selon la revendication 34 ou 35, dans lequel l'unité d'estimation (20) inclut un moyen d'estimation de quantité de condition de pression de pneumatique pour estimer la quantité de condition de pression de pneumatique de la roue à bandage sur la base de la relation entre une valeur détectée par le dispositif de détection de quantité de condition de véhicule (40) et une valeur estimée basée sur le signal de vitesse de roue de véhicule sortie du capteur de vitesse de roue (10) sensiblement au même instant concernant la quantité de condition de véhicule du même type, dans lequel le moyen d'estimation de quantité de condition de pression de pneumatique inclut un moyen de détermination d'anomalie de pression de pneumatique pour déterminer que la pression de pneumatique de la roue à bandage est anormale lorsque la valeur détectée et la valeur estimée concernant la quantité de condition de véhicule du même ne correspondent pas l'une à l'autre.

38. Appareil selon l'une quelconque des revendications 34 à 37, dans lequel l'unité d'estimation (20) inclut un moyen d'estimation de quantité de condition de pression de pneumatique pour estimer la quantité de condition de pression de pneumatique première opération de reconstitution d'unité de données (50) la roue à bandage basée sur une charge de roue de véhicule et le signal de vitesse de roue suivant au moins une relation entre la pression de pneumatique, une charge de roue de véhicule agissant sur la roue à bandage comme charge verticale, et la vitesse de roue du véhicule concernant la roue à bandage.

**39.** Appareil selon la revendication 34 ou 38, dans lequel le dispositif de détection de quantité de condition de véhicule (40) inclut un capteur de relation de charge de roue de véhicule pour détecter la charge de roue de véhicule agissant sur la roue à bandage comme charge verticale ou une quantité physique liée à la charge de roue de véhicule comme quantité de condition de véhicule, et l'unité d'estimation (20) inclut un moyen d'estimation de quantité de condition de pression de pneumatique pour estimer la quantité de condition de pression de pneumatique de la roue à bandage basée sur une relation entre le signal de relation de charge de roue de véhicule sorti du capteur de relation de charge de roue de véhicule et le signal de vitesse de roue sorti du capteur de vitesse de roue (10) sensiblement au même instant concernant la même roue à bandage.

**40.** Appareil selon la revendication 39, dans lequel le moyen d'estimation de quantité de condition de pression de pneumatique inclut un moyen de détermination d'anomalie de pression de pneumatique pour déterminer que la pression de pneumatique de la roue à bandage est anormale lorsque la relation entre le signal de relation de charge de roue de véhicule et le signal de vitesse de roue de véhicule pour la même roue à bandage ne correspondent pas à la relation dans un état où la pression de pneumatique de la roue à bandage est supposée être normale.

**41.** Appareil selon la revendication 34, dans lequel le dispositif de détection de quantité de condition de véhicule (40) inclut un capteur de relation de charge de roue de véhicule pour détecter la charge de roue de véhicule ou une quantité physique liée à la charge de roue de véhicule, le moyen d'initialisation inclut un moyen d'établissement pour établir une charge de roue de véhicule réelle au début de chaque temps de déplacement de véhicule comme charge de roue de véhicule de référence basée sur un signal de quantité de condition de véhicule sorti du capteur de relation de charge de roue de véhicule, et le moyen de correction inclut un moyen pour corriger au moins l'un quelconque du signal de vitesse de roue sorti du capteur de vitesse de roue (10) et la valeur calculée basée sur le signal de vitesse de roue de véhicule basé sur le signal de quantité de condition de véhicule sorti du capteur de relation de charge de roue de véhicule et basé sur une déviation d'une charge de roue de véhicule réelle obtenue séquentiellement pendant le même temps de déplacement de véhicule à partir de la charge de roue de véhicule de référence établie.

**42.** Appareil pour déterminer si oui ou non un pneumatique est anormal reçu dans un véhicule muni d'une roue à bandage, dans lequel un espace interne d'un pneumatique fixé à une roue est rempli d'air sous pression, comprenant :

un capteur de quantité de relations d'anomalies de pneumatique pour détecter une quantité de relations d'anomalies de pneumatique étant disponible pour déterminer si oui ou non un pneumatique est anormal ; et

une unité de détérioration d'anomalie de pneumatique pour déterminer si oui ou non le pneumatique est anormal en comparant une valeur de référence à une valeur détectée de la quantité de relations d'anomalies de pneumatique ou une valeur de comparaison représentant une valeur calculée basée sur la valeur détectée de la quantité de relations d'anomalies de pneumatique, **caractérisé en ce que**

l'unité de détermination d'anomalie de pneumatique implémente la comparaison basée sur une charge de pneumatique, et

la valeur de référence est définie comme une combinaison d'une valeur de référence sensible à la charge de pneumatique prédéterminée pour augmenter en réponse à une augmentation de la charge de pneumatique et une valeur de référence non sensible à la charge de pneumatique prédéterminée ne pas varier en réponse à un changement de charge de pneumatique, et la valeur de référence est définie pour sélectionner la valeur de référence sensible à la charge de pneumatique sous une première zone partielle et est définie sélectionner la valeur de référence non sensible à la charge de pneumatique sous la seconde zone partielle en dehors d'une zone entière dans laquelle la charge de pneumatique peut être variée.

**43.** Appareil selon la revendication 42, dans lequel la valeur de référence est prédéterminée augmenter séquentiellement ou pas-à-pas en réponse à une augmentation de la charge de pneumatique.

**44.** Appareil selon la revendication 42, dans lequel une relation entre la valeur de référence sensible à la charge de pneumatique et la valeur de référence non sensible à la charge de pneumatique est définie établir la valeur de référence sensible à la charge de pneumatique sélectionnée comme valeur de référence plus grande que la valeur de référence non sensible à la charge de pneumatique non sélectionnée comme valeur de référence sous la première zone partielle et pour établir la valeur de référence non sensible à la charge de pneumatique sélectionnée comme valeur de référence plus grande que la valeur de référence sensible à la charge de pneumatique non sélectionnée comme valeur de référence sous la seconde zone partielle.

45. Appareil selon l'une quelconque des revendications 42 à 44, dans lequel la première zone partielle est prédéterminée au niveau d'un côté dans lequel la charge de pneumatique est accrue par rapport à la seconde zone partielle.

46. Appareil pour déterminer si oui ou non un pneumatique est anormal reçu dans un véhicule muni d'une roue à bandage, dans lequel un espace interne de pneumatique fixé à une roue est rempli d'air sous pression comprenant :

   un capteur de quantité de relations d'anomalies de pneumatique pour détecter une quantité de relations d'anomalies de pneumatique représentant une quantité physique étant disponible pour déterminer si oui ou non le pneumatique est anormal ; et

   un moyen de détermination d'anomalie de pneumatique

   pour calculer une valeur de comparaison qui doit être comparée à une valeur de référence pour déterminer si oui ou non le pneumatique est anormal et

   pour déterminer si oui ou non le pneumatique est anormal en comparant la valeur de comparaison calculée à la valeur de référence basée sur une valeur détectée de la quantité de relations d'anomalies de pneumatique par le capteur de quantité de relations d'anomalies de pneumatique **caractérisé en ce que**

   l'unité de détermination d'anomalie de pneumatique détermine sous un premier environnement de véhicule avec une précision élevée et sous un second environnement de véhicule avec une faible précision si le pneumatique est anormal et

   l'unité de détermination d'anomalie pneumatique calcule la valeur de comparaison sous le second environnement de véhicule basé sur au moins une valeur de comparaison calculée sous le premier environnement de véhicule précédent.

47. Appareil selon la revendication 46, dans lequel le second environnement du véhicule est prédéterminé être au niveau d'un côté dans lequel une charge de pneumatique est accrue par rapport au premier environnement de véhicule, et l'unité de détermination d'anomalie de véhicule inclut un moyen de détermination pour déterminer que la charge de pneumatique est plus grande que normale sous le second environnement de véhicule lorsque la charge de pneumatique surpasse la valeur de référence.

48. Appareil selon la revendication 46 ou 47, dans lequel l'unité de détermination d'anomalie de pneumatique inclut un moyen de comparaison pour comparer la valeur de référence à la valeur détectée de la quantité de relations d'anomalies de pneumatique par le capteur de quantité de relations d'anomalies de pneumatique ou la valeur de comparaison d'une valeur calculée basée sur la valeur détectée de la quantité de relations d'anomalies de pneumatique par le capteur de quantité de relations d'anomalies de pneumatique basé sur la charge du pneumatique.

# F I G. 1

# F I G. 2

COMPUTER — 22

CPU — 31 — 36

ROM — 32

TIRE PRESSURE ESTIMATING PROGRAM

TIRE ABNORMALITY DETERMINING PROGRAM

VEHICLE SPEED ESTIMATING PROGRAM

⋮

ROM — 34

TIRE PRESSURE P

TOTAL VALUE Σ

VEHICLE SPEED V

⋮

# F I G. 3

VEHICLE CONDITION AMOUNT DETECTING DEVICE

| PHYSICAL AMOUNT TO BE DETECTED | LATERAL LOAD MOVEMENT AMOUNT | LONGITUDINAL LOAD MOVEMENT AMOUNT | VEHICLE WHEEL DRIVING FORCE | VEHICLE WHEEL LOAD |
|---|---|---|---|---|
| EXAMPLES OF SPECIFIC SENSORS | LATERAL ACCELERATION SENSOR | LONGITUDINAL ACCELERATION SENSOR | ENGINE ROTATIONAL SPEED SENSOR+SHIFT POSITION SENSOR | LOAD SENSOR |
| | STEERING ANGLE SENSOR | FRONT AND REAR LOAD SENSORS | ACCELERATION OPENING DEGREE SENSOR+SHIFT POSITION SENSOR | VEHICLE HEIGHT SENSOR |
| | YAW RATE SENSOR | FRONT AND REAR VHICLE HEIGHT SENSORS | THROTTEL OPENING DEGREE SENSOR + SHIFT POSITION SENSOR | VERTICAL ACCELERATION SENSOR |
| | LEFT AND RIGHT LOAD SENSORS | | ENGINE LOAD SENSOR + SHIFT POSITION SENSOR | |
| | LEFT AND RIGHT HEIGHT SENSORS | | INTAKE MANIFOLD LOAD SENSOR + SHIFT POSITION SENSOR | |
| | | | DRIVING TORQUE SENSOR | |

EP 1 363 793 B1

# FIG. 4

START

S11 — FAILURE DETERMINATION

S12 — IN A FAILURE MODE? — YES

NO

S13 — DATA SELECTION

S14 — DATA INVALIDATION? — YES

NO

S15 — DATA CORRECTION

S16 — TIRE PRESSURE ABNORMALITY DETERMINATION

S17 — TIRE PRESSURE ABNORMALLY LOW? — NO

YES

S18 — WARNING DEVICE ON

END

# F I G. 5

TIRE PRESSURE P

P0

LARGE VEHICLE
WHEEL LOAD

SMALL VEHICLE
WHEEL LOAD

VEHICLE WHEEL
LOAD O

APPARENT DYNAMIC LOAD
TIRE RADIUS R

WHEEL RADIUS +
TIRE RUBBER THICKNESS

R OF TIRE SHAPE UNDER
RIGID CONDITION

# FIG. 6

TIRE PRESSURE ABNORMALITY
DETERMINATION

S31 — DETECT VEHICLE WHEEL LOAD

S32 — SELECT RELATIONSHIP

S33 — READ OUT VEHICLE WHEEL SPEED V**

S34 — DETECT VEHICLE SPEED V

S35 — CALCULATE APPARENT
DYNAMIC LOAD TIRE RADIUS R

S36 — CONVERT TO TIRE PRESSURE P

S37 — $P \leqq P_0$?  NO

S39

YES

S38 — ABNORMAL          NORMAL

RETURN

# F I G. 7

TIRE PRESSURE ESTIMATING PROGRAM

S41 — READ OUT VEHICLE SPEED V

S42 — $V \leqq V_0$? — NO

YES

S43 — READ OUT VEHICLE WHEEL SPEED SIGNAL

S44 — CALCULATE VEHICLE WHEEL SPEED

S45 — ESTIMATE TIRE PRESSURE P BY DISTURBANCE OBSERVER

S46 — STORE

RETURN

# F I G. 8

TIRE ABNORMALITY
DETERMINING PROGRAM

READ OUT VEHICLE SPEED V —— S51

S52 — $V \leqq V_o$? —— NO

S55 —— READ OUT PAST ESTIMATED VALUE

YES

S53 — READ OUT ACTUAL
ESTIMATED VALUE

OBTAIN PRESUMED VALUE —— S56

S54 — TIRE PRESSURE P←
ESTIMATED VALUE

TIRE PRESSURE P←
PRESUMED VALUE —— S57

S58 — $P \leqq P_{Lo}$? —— NO

S59 — $P \leqq P_{HI}$? —— NO

YES

YES

S64 — DETERMINE VARIABLE
THRESHOLD VALUE Vth

S65 — $V \leqq V_{th}$? —— YES

NO

S66 — $\Sigma = \Sigma + (V - V_{th})$

$\Sigma = 0$

YES — $\Sigma \geqq \Sigma_o$? —— $S60$

S67 —— NO

S61 — $V \geqq V_I$? —— NO·· — S62

S63 — WARNING

YES

S68 — ALERTING

RELEASE WARNING
AND ALERTING

RETURN

# F I G. 9

# FIG. 10

TIRE PRESSURE P

STANDARD TIRE PRESSURE $P_{STD}$

VARIABLE REFERENCE TIRE PRESSURE $P_{VAL}$

HIGHER THRESHOLD VALUE $P_{HI}$

FIXED REFERENCE TIRE PRESSURE $P_{FIX}$

LOWER THRESHOLD VALUE $P_{LO}$

VEHICLE SPEED V

$V_{LO}$ $V_{HI}$

$V_0$

$V_I$

HIGH ACCURACY ESTIMATING ZONE

LOW ACCURACY ESTIMATING ZONE

EP 1 363 793 B1

# FIG. 11

TIRE PRESSURE P

STANDARD TIRE PRESSURE $P_{STD}$

HIGHER THRESHOLD VALUE $P_{HI}$

LOWER THRESHOLD VALUE $P_{LO}$

VARIABLE REFERENCE TIRE PRESSURE $P_{VAL}$

FIXED REFERENCE TIRE PRESSURE $P_{FIX}$

VEHICLE SPEED V

$V_{LO}$

$V_O = V_{HI}$    $V_I$

HIGH ACCURACY ESTIMATING ZONE

LOW ACCURACY ESTIMATING ZONE

EP 1 363 793 B1

# FIG. 12

TIRE PRESSURE P

STANDARD TIRE
PRESSURE $P_{STD}$

HIGHER THRESHOLD
VALUE $P_{HI}$

LOWER THRESHOLD
VALUE $P_{LO}$

VARIABLE REFERENCE
TIRE PRESSURE $P_{VAL}$

FIXED REFERENCE
TIRE PRESSURE $P_{FIX}$

VEHICLE SPEED V

$V_{HI}$
$V_O = V_{LO}$   $V_I$

HIGH ACCURACY
ESTIMATING ZONE

LOW ACCURACY
ESTIMATING ZONE

EP 1 363 793 B1

# F I G. 13

TIRE PRESSURE P

STANDARD TIRE
PRESSURE $P_{STD}$

HIGHER THRESHOLD
VALUE $P_{HI}$

LOWER THRESHOLD
VALUE $P_{LO}$

VARIABLE REFERENCE
TIRE PRESSURE $P_{VAL}$

FIXED REFERENCE
TIRE PRESSURE $P_{FIX}$

VEHICLE SPEED V

$V_0$

$V_1$

HIGH ACCURACY
ESTIMATING ZONE

LOW ACCURACY
ESTIMATING ZONE

EP 1 363 793 B1